# EUROPEAN PATENT APPLICATION

(11) **EP 2 178 045 A1**
(43) Date of publication of application: **21.04.2010**
(21) Application number: 08827250.5
(22) Date of filing: 07.08.2008
(51) Int. Cl.: G06T 1/00, A45D 44/00

(54) **MAKEUP SIMULATION SYSTEM, MAKEUP SIMULATION APPARATUS, MAKEUP SIMULATION METHOD, AND MAKEUP SIMULATION PROGRAM**

(30) Priority: 10.08.2007 JP 2007208809; 05.08.2008 JP 2008202449
(71) Applicant: Shiseido Company, Ltd., Chuo-ku Tokyo 104-8010 (JP)
(72) Inventor: GOTO, Yasuo, Tokyo 104-8010 (JP)
(74) Representative: Higgs, Jonathan
(86) International application number: PCT/JP2008/064242
(87) International publication number: WO 2009/022631

(57) **Abstract**

The present invention relates to a makeup simulation system, a makeup simulation apparatus, a makeup simulation method and a makeup simulation program and, more particularly, to a makeup simulation apparatus, a makeup simulation method and a makeup simulation program for applying a make up to a face of a user contained in a dynamic picture image, and includes picture-taking means for outputting the dynamic image; control means for image-processing and outputting the output dynamic image; and display means for displaying the dynamic image output from the control means, and the control means includes: face recognition processing means for recognizing the face of the user from the dynamic image in accordance with predetermined tracking points; and makeup processing means for applying a predetermined makeup to the face of the user contained in the dynamic image in accordance with the tracking points, and outputting to the display means.

## Description

### TECHNICAL FIELD

The present invention relates to a makeup simulation system, a makeup simulation apparatus, a makeup simulation method and a makeup simulation program and, more particularly, to a makeup simulation apparatus, a makeup simulation method and a makeup simulation program for applying a make up to a face of a user contained in a dynamic picture image.

### BACKGROUND ART

Conventionally, there is known a technique to simulate a face after makeup on a computer without actually applying a makeup for the purpose of sales of a commercial product for makeup (for example, refer to Patent Document 1). However, because a simulation result is displayed as a static image in the Patent Document 1, it is unable to easily check a face after makeup when facial expression of a user is changed. Thus, a technique of simulating makeup in a dynamic image, which acquires a change in facial expression of a user has being developed (for example, refer to Patent Document 2).

However, the makeup simulation apparatus disclosed in Patent Document 2 computes a makeup area for applying a face makeup by specifying a change in facial expression of a user in pixel areas corresponding to a mouth and both eyes and tracing the pixel areas according to template matching (for example, refer to paragraph [0028]). Such tracing of a change in facial expression of a user by pixel areas corresponding to a mouth and both eyes gives a large load to a computer, and there is a problem in that it is difficult to make an exact response to a case such as a case of closing eyes.
Patent Document 1: Japanese Laid-Open Patent Application No. 2001- 346627
Patent Document 2: Japanese Laid-Open Patent Application No. 2003-44837

### DISCLOSURE OF THE INVENTION

### PROBLEMS TO BE SOLVED BY THE INVENTION

The present invention was made in view of the above-mentioned point, and it is an issue of the present invention to provide a makeup simulation system, a makeup simulation apparatus, a makeup simulation method and a makeup simulation program, which can correctly apply a makeup to a face of a user contained in a dynamic image at a small processing load.

### MEANS TO SOLVE PROBLEMS

In order to solve the above-mentioned problems, the present invention is a makeup simulation system for applying a makeup to a dynamic image of a face of a user, comprising: picture-taking means for taking a picture of the face of the user and outputting the dynamic image; control means for receiving the dynamic image output from said picture-taking means, and image-processing and outputting said dynamic image; and display means for displaying the dynamic image output from said control means, wherein said control means includes: face recognition processing means for recognizing the face of the user from said dynamic image in accordance with predetermined tracking points; and makeup processing means for applying a predetermined makeup to the face of the user contained in said dynamic image in accordance with said tracking points, and outputting to said display means, wherein lipstick processing means included in said makeup processing means applies a lipstick process to the face of the user contained in said dynamic image in accordance with positions of a peak and a trough of an upper lip, left and light ends of a mouth, a lower end of a lower lip, and a position at 1/3 of a width of the mouth from the left end in the lower lip and a position at 1/3 of the width of the mouth from the right end in the lower lip.

According to the present invention, the face of the user can be recognized from the dynamic image based on the tracking points at a small processing load, and a correct makeup can be applied to the face of the user contained in the dynamic image based on the tracking points by being provided with the face recognition processing means for recognizing the face of the user from the dynamic image based on a predetermined tracking points and the makeup processing means for applying a predetermined makeup to the face of the user contained in the dynamic image based on the tracking points and outputting it to the display means.

It should be noted that a method, an apparatus, a system, a computer program, a recording medium, a data structure, etc., to which the structural elements and expressions of the present invention or an arbitrary combination of the structural elements are applied, may be effective as an illustrative embodiment of the present invention.

### EFFECT OF THE INVENTION

According to the present invention, a makeup simulation system, a makeup simulation apparatus, a makeup simulation method and a makeup simulation program, which can correctly make up a face of a user contained in a dynamic image at a small processing load, can be provided.

### BRIEF DESCRIPTION OF DRAWINGS

FIG. 1 is an external view of a first embodiment of a makeup simulation apparatus according to the present invention.
FIG. 2 is a cross-sectional view of the first embodiment of the makeup simulation apparatus.
FIG. 3 is an external view of a second embodiment of the makeup simulation apparatus according to the present invention.
FIG. 4 is a cross-sectional view of the second embodiment of the makeup simulation apparatus.
FIG. 5 is an external view of a third embodiment of a makeup simulation apparatus according to the present invention.
FIG. 6 is a cross-sectional view of the third embodiment of the makeup simulation apparatus.
FIG. 7 is an external view of a fourth embodiment of a makeup simulation apparatus according to the present invention.
FIG. 8 is a cross-sectional view of the fourth embodiment of the makeup simulation apparatus.
FIG. 9 is an external view of a fifth embodiment of a makeup simulation apparatus according to the present invention.
FIG. 10 is a cross-sectional view of the fifth embodiment of the makeup simulation apparatus.
FIG. 11 is a hardware structure diagram of the fifth embodiment of the makeup simulation apparatus.
FIG. 12 is a flowchart illustrating an outline of a process which the makeup simulation apparatus performs.
FIG. 13 is an image view of an example of an operation screen displayed on a main screen displayed on a monitor and a control panel.
FIG. 14 is an image view expressing a process other than a makeup simulation which the makeup simulation apparatus performs.
FIG. 15 is a system structure diagram of a makeup simulation system according to the present invention.
FIG. 16 is a screen image view expressing a process which a simulator main application performs.
FIG. 17 is an image picture of a face of a user contained in an image before makeup.
FIG. 18 is an image view of an example illustrating tracking points.
FIG. 19 is an illustration of a structure of an example of a makeup processing parameter file.
FIG. 20 is an image view indicating tracking points referred to by a lipstick process.
FIG. 21 is a flowchart of an example indicating the lipstick process.
FIG. 22 is an image view of an example illustrating a profile extraction process.
FIG. 23 is an illustration comparing tracking points of lip eight points of and nose three points of a contour extracting image 600 with points of a contour extracting image 601 extracted by re-searching based on the tracking points of lip eight points and nose three points.
FIG. 24 is an image view of an example illustrating a process of acquiring default points from the tracking points of lip eight points and nose three points.
FIG. 25 is an image view illustrating a process of completing a contour from the points or the default points.
FIG. 26 is an image view illustrating a color painting map creating process.
FIG. 27 is an image view of an example illustrating the color painting process based on a color painting map.
FIG. 28 is an image view illustrating the tracking points referred to by a shadow process.
FIG. 29 is a flowchart of an example illustrating the shadow process.
FIG. 30 is an image view of an example illustrating a creating process of a basic contour.
FIG. 31 is an image view of an example illustrating a creating process of a color painting contour.
FIG. 32 is an image view of an example illustrating a color painting map applied with no gradation process and a color painting map applied with a gradation process.
FIG. 33 is an image view illustrating tracking points referred to by a cheek process.
FIG. 34 is a flowchart of an example illustrating the cheek process.
FIG. 35 is an image view of an example illustrating a color painting contour.
FIG. 36 is an image view illustrating tracking points referred to by an eyebrow process.
FIG. 37 is a flowchart of an example illustrating the eyebrow process.
FIG. 38 is an image view of an example illustrating an eyebrow contour extracting process.
FIG. 39 is an image view of an example illustrating a creating process of a designation curve corresponding to a variation designation.
FIG. 40 is an image view illustrating tracking points referred to by a foundation process.
FIG. 41 is a flowchart of an example of the foundation process.
FIG. 42 is an image view of an example illustrating a contour.
FIG. 43 is an image view of an example illustrating an original image before a gradation process and an original image after a gradation process.
FIG. 44 is a flowchart of an embodiment of a lipstick process (lip pen drawing process).
FIG. 45 is a flowchart of an embodiment of a lipstick process (lip pen drawing process).
FIG. 46 is an image view of an example of a face image of a rectangular area surrounding a mouth.
FIG. 47 is an illustration illustrating drawing images.
FIG. 48 is an illustration illustrating an offset curve.
FIG. 49 is an image view of an example illustrating positions of a plurality of previously set points to grasp morphological features of lips.
FIG. 50 is a flowchart of an embodiment of an eyeline searching process.
FIG. 51 is a flowchart of an embodiment of an eyeline drawing process.
FIG. 52 is an illustration illustrating an eyeline drawing pattern.
FIG. 53 is an illustration illustrating an eyeline drawing pattern.
FIG. 54 is an illustration illustrating an eyeline drawing pattern.
FIG. 55 is an illustration illustrating an eyeline drawing pattern.
FIG. 56 is a flowchart of an embodiment of an eye shadow painting process.
FIG. 57 is an illustration for explaining setting of an eye shadow painting area.
FIG. 58 is an illustration illustrating an upper limit of the eye shadow painting area.
FIG. 59 is an illustration for explaining eye shadow painting.
FIG. 60 is an illustration illustrating a relationship between a distance from a center and a concentration in an air-brush process.
FIG. 61 is a front view illustrating a shape of an eye of a standard balance.
FIG. 62 is a flowchart of an embodiment of a rouge applying process (cheek process).
FIG. 63 is an illustration for explaining a rouge applying process in a case where a makeup pattern is sweet.
FIG. 64 is an illustration for explaining a rouge applying painting process in a case where a makeup pattern is cool.
FIG. 65 is an illustration for explaining a rouge applying process in a case where a makeup pattern is cute.
FIG. 66 is an illustration for explaining a rouge applying process in a case where a makeup pattern is fresh.
FIG. 67 is an illustration illustrating a relationship between a distance from a center and a concentration in an air-brush process.
FIG. 68 is an image view for explaining an example of a cheek makeup according to a morphological feature of a cheek of a person to be applied with makeup.
FIG. 69 is an explanatory illustration for explaining a form of an ideal eyebrow.
FIG. 70 is an explanatory illustration for explaining states of position of eyebrows.
FIG. 71 is a flowchart illustrating an example of a skin color evaluating process procedure as a pretreatment.
FIG. 72 is an illustration illustrating an example of feature points and divided areas.
FIG. 73 is an illustration illustrating an example of a positional relationship between the 109 feature points within a face corresponding to the above-mentioned FIG. 72.
FIG. 74 is an illustration illustrating an example of a combination of feature points constituting areas corresponding to the above-mentioned FIG. 72.
FIG. 75 is an illustration illustrating an example of features of color of each group and area numbers constituting each group.
FIG. 76 is an illustration illustrating an example of a result of analysis of an image (or stereoscopic effect) of an average face.

### EXPLANATION OF REFERENCE NUMBERS

- 1: makeup simulation apparatus
- 2: camera
- 3: half mirror
- 4: operation panel
- 5: printer
- 6: lighting
- 7: monitor
- 8: control part
- 9: transparent plate
- 10: operation processing unit
- 11: memory device
- 12: drive unit
- 13: auxiliary memory device
- 14: recording medium
- 15: touch-panel monitor
- 16: exhibition case
- 17: IC-tag reader writer
- 25: static image system
- 27: shared memory
- 28: simulator main application
- 29: interface application
- 33: face recognition processing part
- 34: tracking point
- 35: makeup processing part
- 36: foundation processing part
- 37: eyebrow processing part
- 38: shadow processing part
- 39: lipstick processing part
- 40: cheek processing part
- 41: product information

### BEST MODE FOR CARRYING OUT THE INVENTION

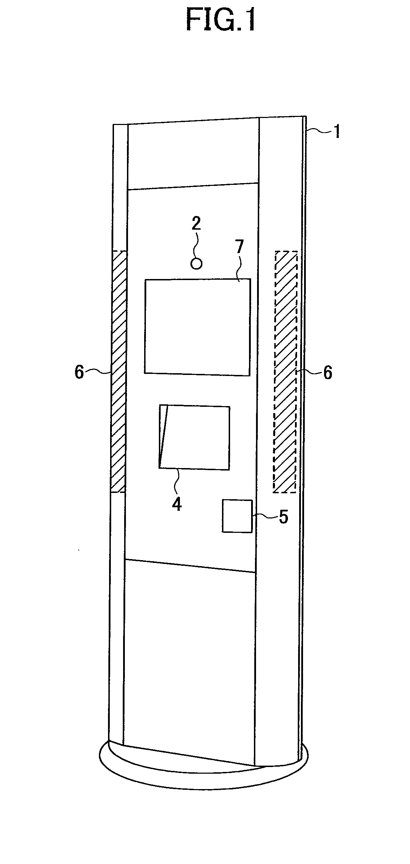

Next, a description will be give, with reference to the drawings, of a bet mode for carrying out the invention based on the embodiments mentioned below. FIG. 1 is an external view of a first embodiment of a makeup simulation apparatus according to the present invention. The makeup simulation apparatus 1 is configured to include a camera 2, an operation panel 4, a printer 5, a lighting 6, and a monitor 7.

The camera 2 take a picture of a user standing in front of the makeup simulation apparatus 1, and outputs a dynamic image. The operation panel 4 displays an operation image, and receives an operation from the user and outputs operation information. The printer 5 prints an image (for example, an image picture after makeup, etc.) and information (for example, product information for make up like an image picture, etc.) which are displayed on a monitor. The lighting 6 performs a lighting adjustment after, for example, a makeup simulation is started.

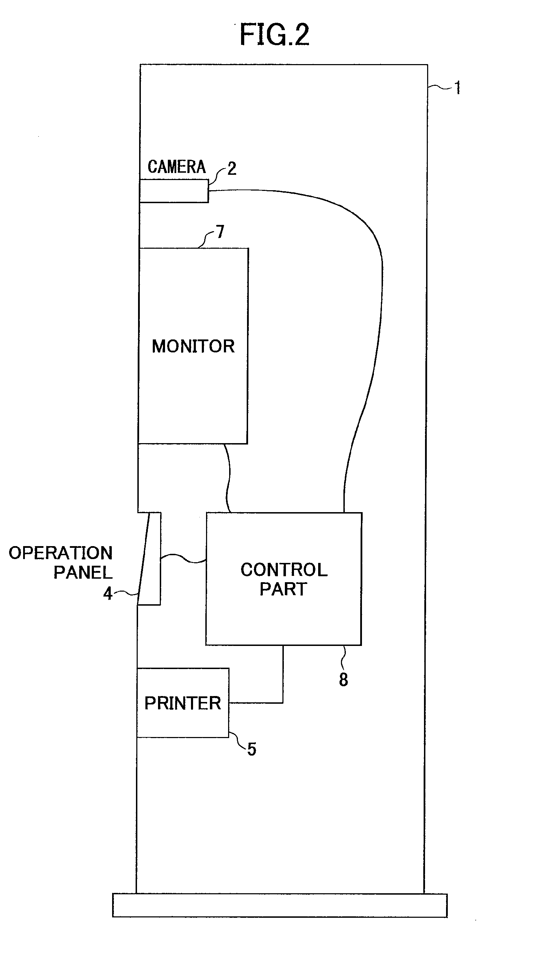

FIG. 2 is a cross-sectional view of the first embodiment of the makeup simulation apparatus. The makeup simulation apparatus 1 is configured to include the camera 2, the operation panel 4, the printer 5, the monitor 7, and a control part 8. The camera 2 outputs the picture-taken dynamic image to the control section 8. The operation panel 4 displays an operation image output from the control part 8, and receives an operation from a user and outputs operation information to the control part 8. The monitor 7 displays the dynamic image (main image) output from the control part 8. The control part 8 receives the dynamic image output from the camera 2, and applies a makeup to the face of the user contained in the dynamic image and output it to the monitor 7 by image-processing the dynamic image as mentioned later.

The makeup simulation apparatus of FIG. 1 and FIG. 2 includes a mirror, which is an indispensable item for a makeup, as a conceptual structure, and has a user interactive function. That is, the makeup simulation apparatus 1 has a feature to make a user to feel as if the user is doing a makeup naturally while viewing a mirror.

The makeup simulation apparatus 1 applies, by the control part 8, an image process to the dynamic image or the like output from the camera 2, and displays it on the monitor 7, which is a digital mirror, after applying a makeup to the face of the user contained in the dynamic image. The makeup simulation apparatus 1 is capable of displaying on the monitor 7 various sets of product information and cosmetic information and an image picture in which a make up has been applied to a face of a user.

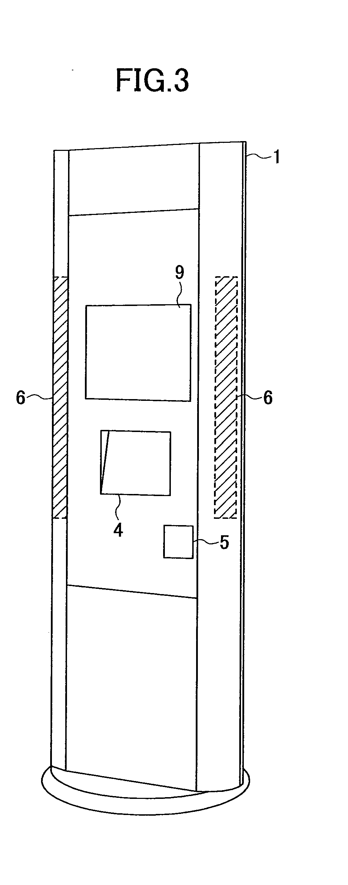

Moreover, FIG. 3 is an external view of a second embodiment of the makeup simulation apparatus according to the present invention. It is noted that parts the same as the parts of FIG. 1 are given the same reference numerals.

The makeup simulation apparatus 1 of FIG. 3 is configured to include the operation panel 4, the printer 5, the lighting 6 and a transparent plate 9. The transparent plate 9 transmits a light from outside the makeup simulation apparatus, and also transmits a light from inside the makeup simulation apparatus 1.

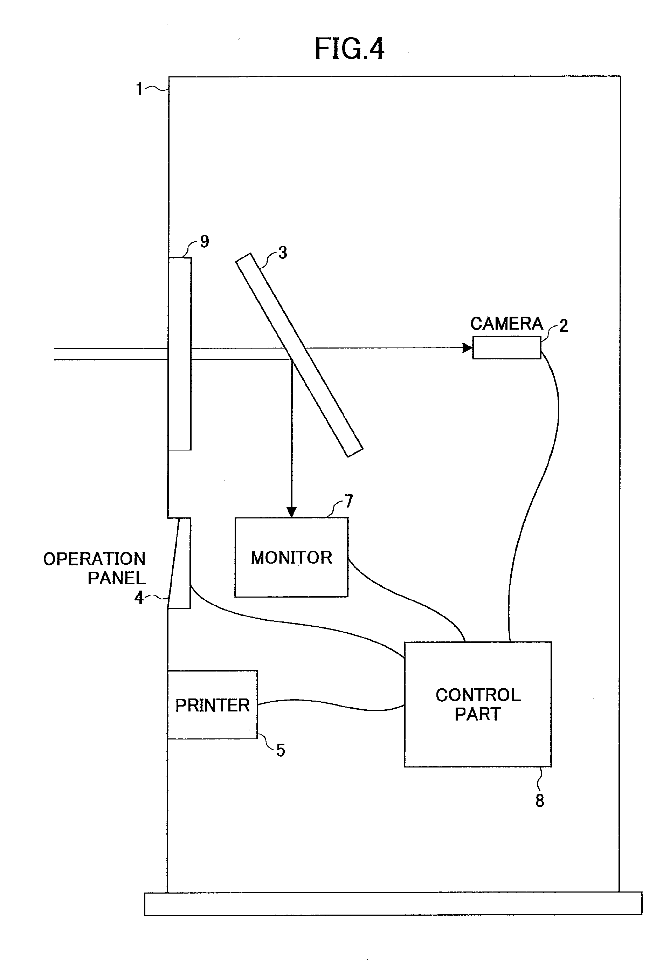

FIG. 4 is a cross-sectional view of the second embodiment of the makeup simulation apparatus. It is noted that parts that are the same as the parts in FIG. 2 are given the same reference numerals. The makeup simulation apparatus 1 of FIG. 4 is configured to include the camera 2, a half mirror 3, the operation panel 4, the printer 5, the monitor 7, the control part 8, and the transparent board 9.

The half mirror (translucence mirror) 3 reflects a light incident thereon and also transmits a part of the light therethrough. The camera 2 is arranged at a position where the camera 2 can take a picture of a user standing in front of the makeup simulation apparatus 1 through the half mirror 3 and the transparent plate 9. The camera 2 is arranged at a level of eyes of the user. The camera 2 takes a picture of the user standing in front of the makeup simulation apparatus 1 through the half mirror 3 and the transparent plate 9, and outputs a dynamic image.

The monitor 7 is arranged at a position where the user standing in front of the makeup simulation apparatus 1 can see through the half mirror and the transparent plate 9. The light output from the monitor 7 is reflected by the half mirror, and is output to outside the makeup simulation apparatus 1 through the transparent plate 9. Accordingly, the user can see a dynamic image displayed on the monitor 7 from outside the makeup simulation apparatus 1.

The makeup simulation apparatus 1 of FIG. 3 and FIG. 4 includes a mirror, which is indispensable for a makeup, as a conceptual structure, and has a user interactive function. That is, the makeup simulation apparatus 1 has a feature to make a user to feel as if the user is doing a makeup naturally while viewing a mirror.

Because the camera 2 is arranged at a level of eyes, the makeup simulation apparatus 1 is capable of taking a picture of the face of the user standing in front of the makeup simulation apparatus naturally rather than it is arranged at the position of the camera 2 as in the first embodiment.

The makeup simulation apparatus 1 applies, by the control part 8, an image process to a dynamic image or the like output from the camera 2 to apply a makeup to the face of the user contained in the dynamic image, and displays it on the monitor 7, which is a digital mirror. The makeup simulation apparatus 1 can display on the monitor 7 various sets of product information and cosmetic information and an image view of the face of the user to which a makeup has been applied.

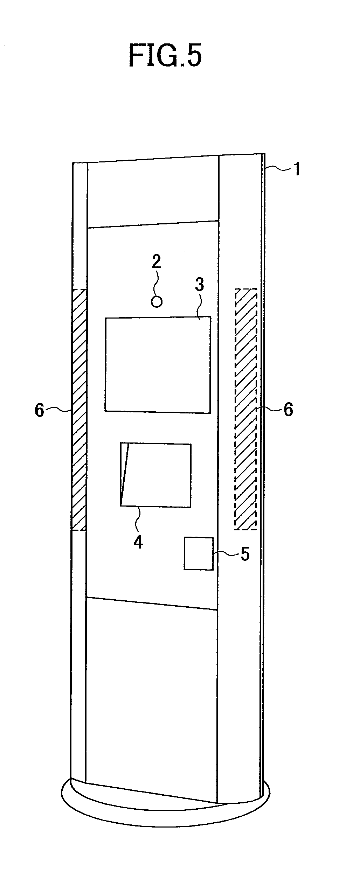

Moreover, FIG. 5 is an external view of a third embodiment of the makeup simulation apparatus according to the present invention. It is noted that parts that are the same as the parts in the previous figures are given the same reference numerals. The makeup simulation apparatus 1 of FIG. 5 is configured to include the camera 2, the one-way mirror 3, the operation panel 4, the printer 5, and the lighting 6.

The half mirror 3 transmits a part (for example, 50%) of a light from the brighter side, and reflects a reminder (for example, 50%) of the light from the brighter side to the front side. Because there is no light on the darker side, the half mirror does not transmit or reflect a light from the darker side.

After a makeup simulation is started, the lighting 6 adjusts a light so that a side of the monitor 7 of the half mirror 3 becomes bright. Therefore, before the makeup simulation is started, the half mirror 3 provided on the display side of the monitor 7 reflects a light from a user side (outside the makeup simulation apparatus 1) in order to function as a mirror.

After the makeup simulation is started, the half mirror 3 transmits a light from the monitor 7 side (inside the makeup simulation apparatus 1) in order to function as glass. Therefore, the user can see a dynamic image displayed on the monitor through the half mirror 3.

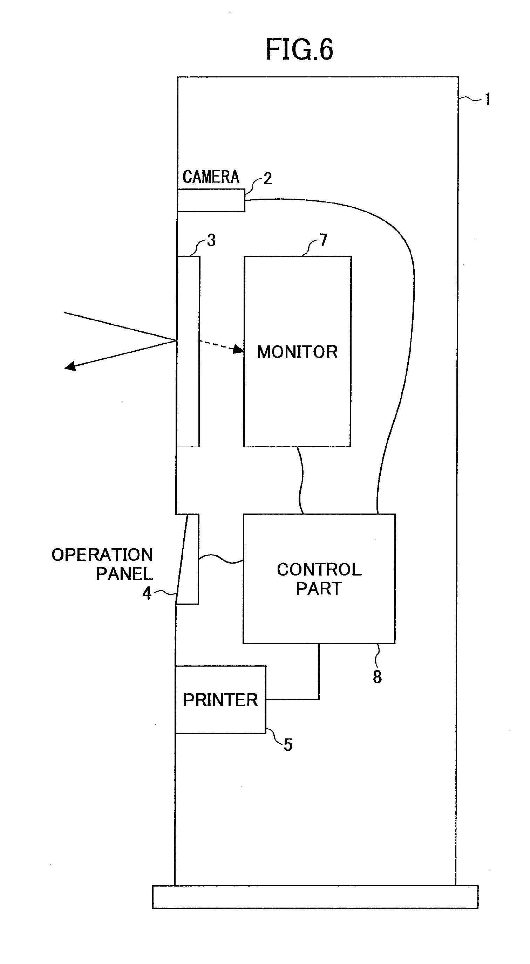

FIG. 6 is a cross-sectional view of a third embodiment of the makeup simulation apparatus. The makeup simulation apparatus 1 of FIG. 6 is configured to include the camera 2, the half mirror 3, the operation panel 4, the printer 5, the monitor 7, and the control part 8. It is noted that parts that are the same as the parts in the previous figures are given the same reference numerals. The dynamic image displayed on the monitor 7 transmits through the half mirror 3, which functions as glass. The user can see the dynamic image displayed on the monitor 7 from outside the makeup simulation apparatus 1.

The makeup simulation apparatus 1 of FIG. 5 and FIG. 6 includes a mirror, which is indispensable for a makeup, as a conceptual structure, and has a user interactive function. That is, the makeup simulation apparatus 1 has a feature to make a user to feel as if the user is applying a makeup naturally while viewing a mirror.

The makeup simulation apparatus 1 applies, by the control part 8, an image process to a dynamic image or the like output from the camera 2 to apply a makeup to the face of the user contained in the dynamic image, and displays it on the monitor 7, which is a digital mirror. The makeup simulation apparatus 1 can display on the monitor 7 various sets of product information and cosmetic information and an image view of the face of the user to which a makeup has been applied.

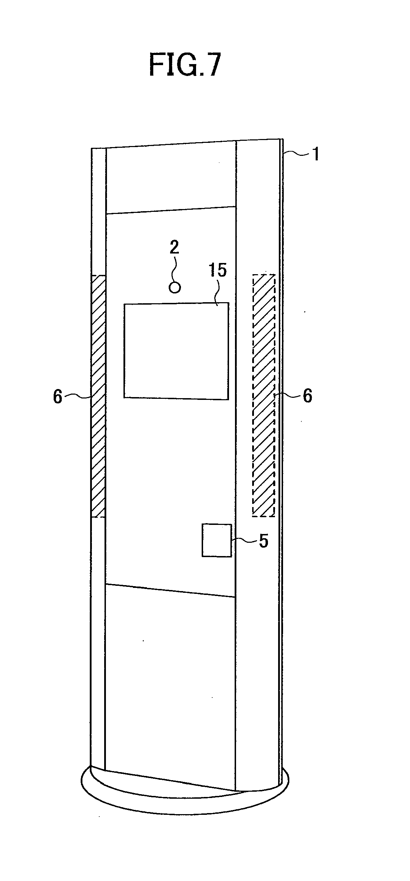

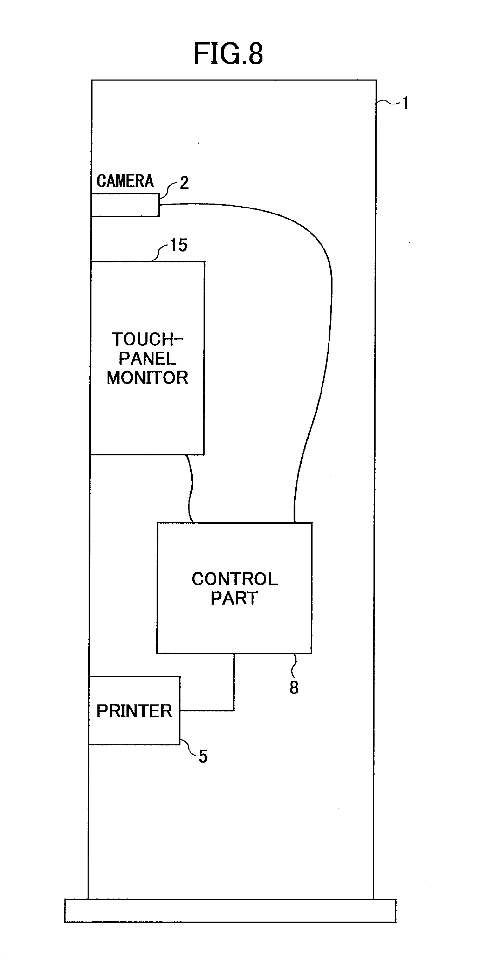

Moreover, FIG. 7 is an external view of a fourth embodiment of the makeup simulation apparatus according to the present invention. FIG. 8 is a cross-sectional view of the fourth embodiment of the makeup simulation apparatus. It is noted that parts that are the same as parts in the previous figures are given the same reference numerals. The makeup simulation apparatus 1 is configured to include the camera 2, the printer 5, the lighting 6, and a touch-panel monitor 15.

The makeup simulation apparatus 1 of FIG. 7 and FIG. 8 differs from the makeup simulation apparatus 1 of FIG. 1 and FIG. 2 in that it is configured to include the touch-panel monitor 15 instead of the operation panel 4 and the monitor 7. The touch-panel monitor 15 functions as the operation panel 4 and the monitor 7.

The touch-panel monitor 15 displays an operation image, and receives an operation from a user and outputs operation information. The touch-panel monitor 15 displays the operation image output from the control part 8, and receives an operation from a user and outputs the operation information to the control part 8. The touch-panel monitor 15 displays a dynamic image (main image) output from the control part 8. The control part receives the dynamic image output from the camera 2, and applied a makeup to the face of the user contained in the dynamic image by image-processing the dynamic image as mentioned later, and outputs it to the touch-panel monitor 15.

The makeup simulation apparatus 1 of FIG. 7 and FIG. 8 includes a mirror, which is indispensable for a makeup, as a conceptual structure, and has a user interactive function. That is, the makeup simulation apparatus 1 has a feature to make a user to feel as if the user is applying a makeup naturally while viewing a mirror.

The makeup simulation apparatus 1 applies, by the control part 8, an image process to a dynamic image or the like output from the camera 2 to apply a makeup to the face of the user contained in the dynamic image, and displays it on the touch-panel monitor 15, which is a digital mirror. The makeup simulation apparatus 1 can display on the touch-panel monitor 15 various sets of product information and cosmetic information and an image view of the face of the user to which a makeup has been applied.

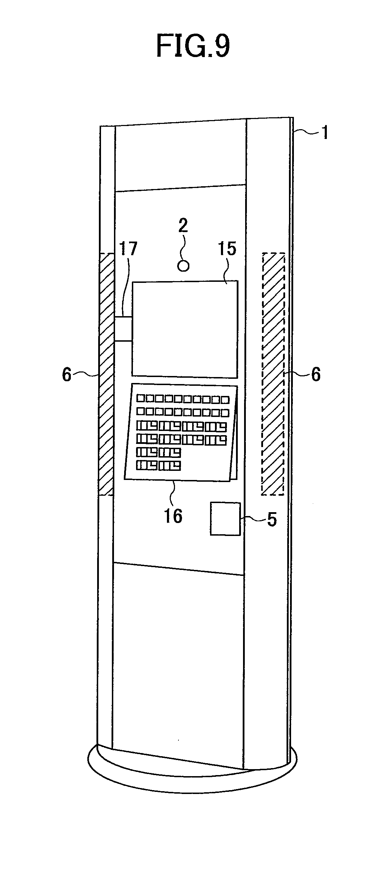

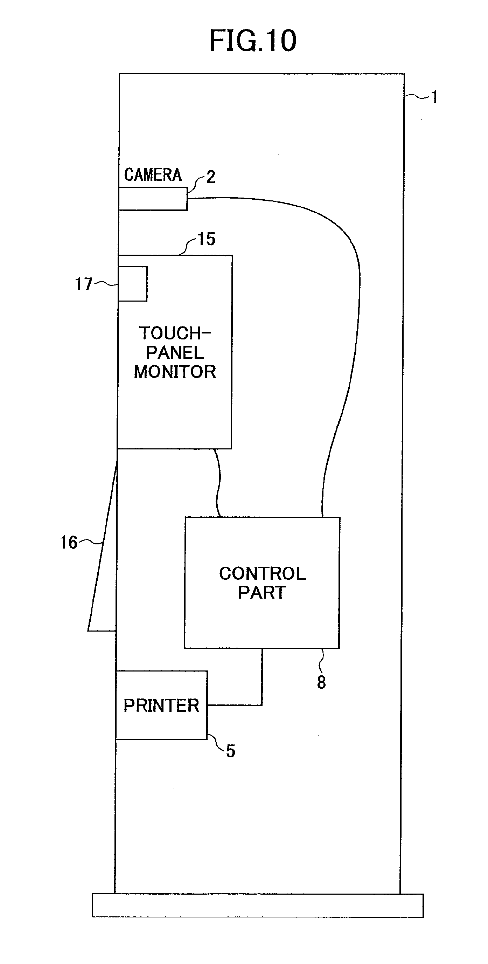

The makeup simulation apparatus 1 of the fourth embodiment may be provided with an exhibition case for exhibiting products for testing, which a user uses and tests, as illustrated in FIG. 9 and FIG. 10 in order to use it as a case for self-sales. FIG. 9 is an external view of a fifth embodiment of the makeup simulation apparatus according to the present invention. FIG. 10 is a cross-sectional view of the fifth embodiment of the makeup simulation apparatus. It is noted that parts that are the same as previous figures are given the same reference numeral.

The makeup simulation apparatus 1 is configured to include the camera 2, the printer 5, the lighting 6, the touch-panel monitor 15, an exhibition case 16, and an IC-tag leader writer 17. The makeup simulation apparatus 1 of FIG. 9 and FIG. 10 differs from the makeup simulation apparatus 1 of FIG. 7 and FIG. 8 in that it includes the exhibition case 16 and the IC-tag leader writer 17.

The exhibition case 16 is for exhibiting a plurality of products for testing. It should be noted that an IC tag (RFID) is attached to each product for testing. Identification information which can identify each product for testing is stored in the IC tag attached to the product for testing. When a user takes one of the products for testing out of the exhibition case 16 and move it to close to the IC-tag leader writer 17, the IC-tag leader writer 17 reads the identification information on the product for testing.

The IC tag leader writer 17 transmits the identification information of the product for testing read from the IC tag to the control part 8. The control part 8 receives a dynamic image output from the camera 2, and outputs to the touch-panel monitor 15 an image picture in which a makeup is applied to the face of the user contained in the dynamic image by using the product for testing corresponding to the identification information read from the IC tag.

It should be noted that a correspondence table for relating the products for testing and the identification information may be provided to the makeup simulation apparatus 1, or provided to other apparatuses which are capable of acquiring the correspondence table through a network.

Moreover, although an example of using the IC tag to identify each product for testing in the makeup simulation apparatus 1 of FIG. 9 and FIG. 10 was indicated, a bar code, a two-dimensional code, a label, etc., may be used. Further, the makeup simulation apparatus 1 of FIG. 9 and FIG. 10 may be provided with a device, which can identify each product for testing taken out, in the exhibition case 16 so that a notification is sent from the exhibition case 16 to the control part 8.

The makeup simulation apparatus 1 of FIG. 9 and FIG. 10 includes a mirror, which is indispensable for a makeup, as a conceptual structure, and has a user interactive function. That is, the makeup simulation apparatus 1 has a feature to make a user to feel as if the user is applying a makeup naturally while viewing a mirror.

The makeup simulation apparatus 1 applies, by the control part 8, an image process to a dynamic image or the like output from the camera 2 to display an image picture on the touch-panel 15, which is a digital mirror, in which image picture a make up is applied to the face of the user contained in the dynamic image by using the product for testing, which the user selects from the products in the exhibition case 16. The makeup simulation apparatus 1 can display on the touch-panel monitor 15 various sets of product information and cosmetic information and an image view of the face of the user to which a makeup has been applied. The makeup simulation apparatus 1 can acquire data of user preference or the ling by taking a log of the product for testing selected from the products in the exhibition case 16.

It should be noted that if the makeup simulation apparatus 1 is provided with a shelf for exhibiting not only the products for testing but also commercial products, it can be effectively used as a case for self-sales by exhibiting the commercial products displayed on the touch-panel monitor 15.

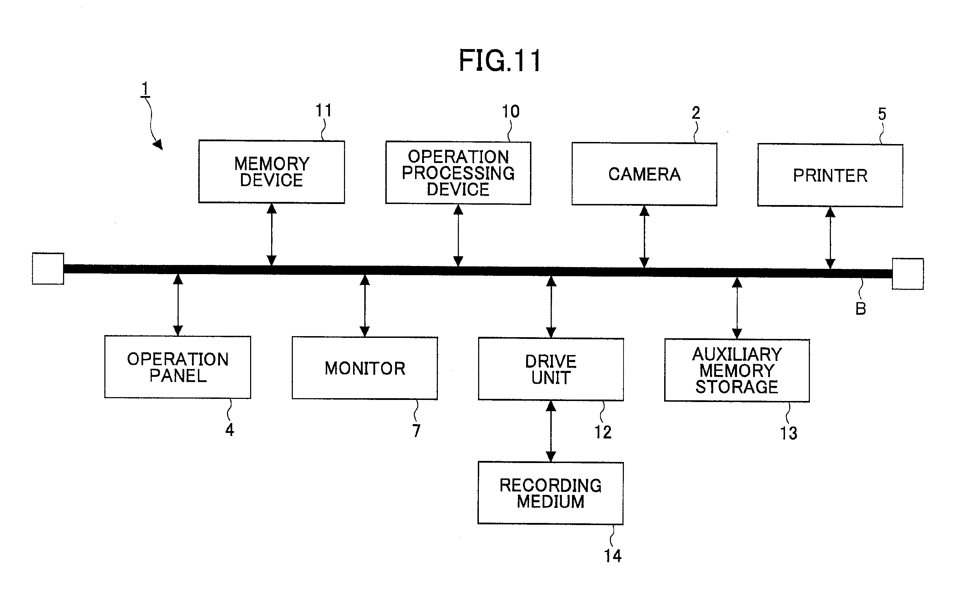

Hereafter, a description will be given below of the makeup simulation apparatus 1 of the first embodiment as an example. FIG. 11 is a hardware structure diagram of an embodiment of the makeup simulation apparatus. It is noted that parts the same as parts in FIG. 1 and FIG. 2 are given the same reference numerals.

The makeup simulation apparatus 1 of FIG. 11 is constituted by the camera 2, the operation panel 4, the printer 5, the monitor 7, an operation processing device 10, a memory device 11, a drive unit 12, and an auxiliary memory storage 13, which are mutually connected by a bus B. The operation processing device 10, the memory device 11, the drive unit 12, and the auxiliary memory storage 13 of FIG. 11 constitute the control part 8 of FIG. 2.

A makeup simulation program of the present invention is at least a part of various programs for controlling the makeup simulation apparatus 1. The makeup simulation program is provided by distribution of, for example, a recording medium 14.

It should be noted that various types of recording media can be used as the recording medium 14 on which the makeup simulation program is recorded, such as a recording medium for recording information optically, electrically or magnetically such as a CD-ROM, a flexible disk, a magneto-optical disc, etc., and a semiconductor memory for recording information electrically such as a ROM, flash memory, etc.

Moreover, when the recording medium 14 on which the makeup simulation program is recorded is set to the drive unit 12, the makeup simulation program is installed into the auxiliary memory storage 13 through the drive unit 12 from the recording medium 14. The auxiliary memory storage 13 stores a required file, data, etc., while storing the installed makeup simulation program. The memory device 11 reads the makeup simulation program from the auxiliary memory storage 13 and stores it therein at the time of start up. Then, the operation processing device 10 realizes various processes mentioned later according to the makeup simulation program stored in the memory device 11.

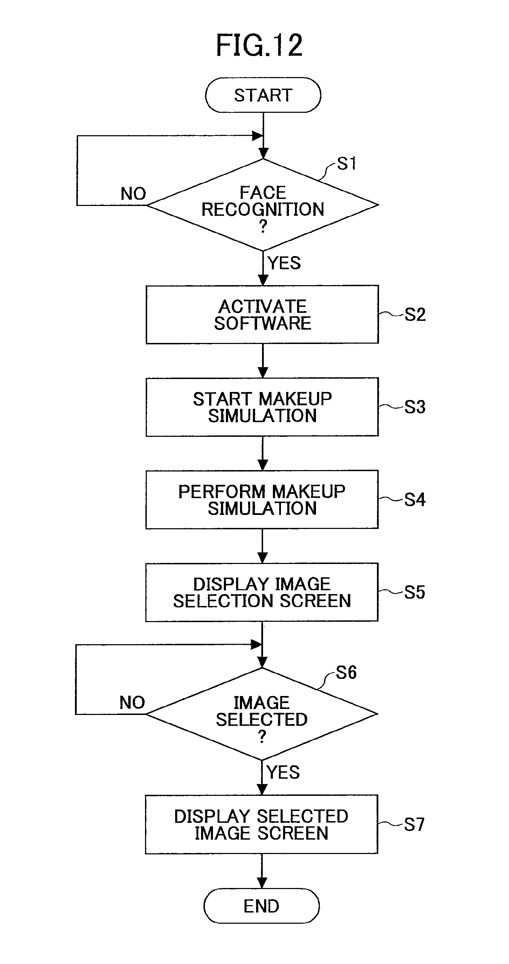

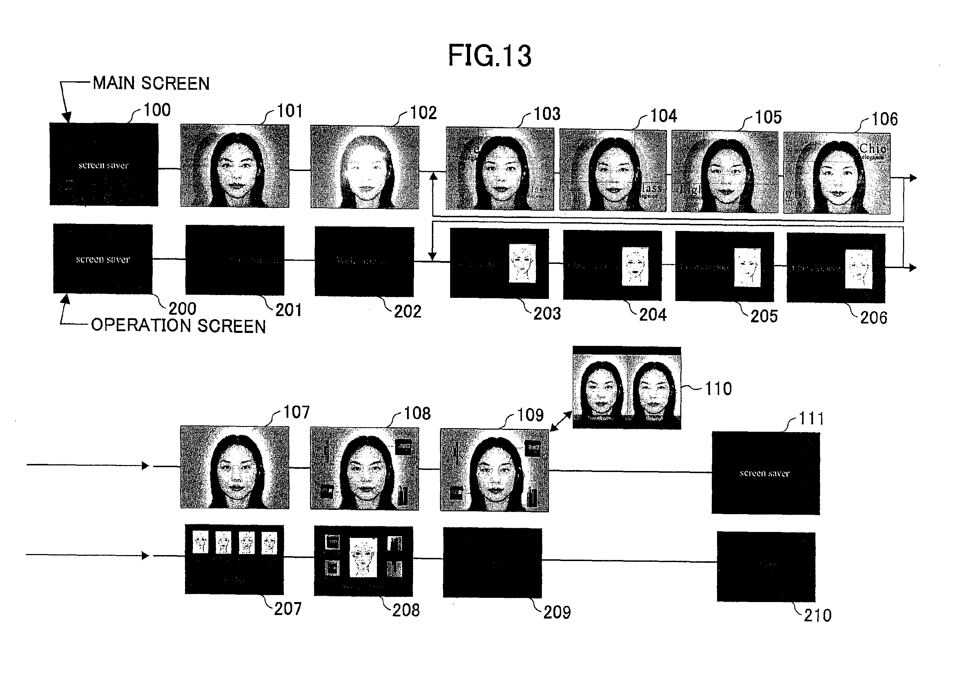

FIG. 12 is a flowchart of an embodiment illustrating an outline of a process, which the makeup simulation apparatus performs. FIG. 13 is an image view of a main screen displayed on a monitor and an operation screen displayed on the operation panel. The screen images 100-111 of FIG. 13 are for a main screen displayed on the monitor 7. The screen images 200-210 are for an operation screen displayed on the operation panel 4.

The control part 8 continuously receives the dynamic image taken by the camera 2. At this time, the control part 8 displays the screen image 100 on the monitor 7, and displays the screen image 200 on the operation panel 4. The screen images 100 and 200 represent an example of displaying a screen saver.

Proceeding to step S1, the control part 8 continuously determines whether or not a face of a user is contained in the dynamic image which has received. The control part 8 repeats the process of step S1 until it is recognized that the face of the user is contained in the dynamic image (NO in step S1).

If it is recognized that the face of the user is contained in the dynamic image (YES in S1), the control part 8 proceeds to step S2 to activate software including the makeup simulation program for performing a makeup simulation. At this time, the control part 8 displays the screen image 101 on the monitor 7, and displays the screen image 201 on the operation panel 4.

The screen image 101 represents an example of displaying the dynamic image in which the face of the user is taken by the camera 2. The screen image 201 represents an example of displaying a welcome comment moving horizontally.

Proceeding to step S3, the control part 8 starts a makeup simulation according to the software activated in step S2. At this time, the control part 8 displays the screen image 102 on the monitor 7, and displays the screen image 202 on the operation panel 4. The screen image 102 represents an example of displaying the dynamic image in which the face of the user is taken by the camera 2 with staging like a magic mirror. The screen image 202 represents an example of displaying a welcome comment moving horizontally, similar to the screen image 201.

Proceeding to step S4, the control part 8 performs a makeup simulation as mentioned later. At this time, the control part 8 sequentially displays the screen images 103-106 on the monitor 7, and displays the screen images 203-206 on the operation panel 4.

The screen images 103-106 represent an example of displaying the face of the user to which four makeup patterns (images) are applied according to the makeup simulation. The screen images 203-206 represent an example of displaying contents (for example, designation or the like) of the makeup patterns of the image screens 103-106 displayed on the monitor 7 at that time. The control part 8 sequentially displays the screen images 103-106 on the monitor 7 and displays the screen images 203-206 on the operation panel until a predetermined time has passed or the user touches the operation panel 4.

If a predetermined time has passed or the user touches the operation panel 4, the control part 8 proceeds to step S5 to display the screen image 107 on the monitor 7 and displays the screen image 207 on the operation panel 4. The screen image 107 represents an example of displaying the dynamic image in which the face of the user is taken by the camera 2. The screen image 207 represents an example of displaying an image selection screen through which one image is selectable from four makeup patterns (images). The user can select one image through the image selection screen by operating the operation panel 4.

Proceeding to step S6, the control part 8 repeats the process of step S6 until one image is selected through the image selection screen (NO in S6). If the user selects one image through the image selection screen, the operation panel 4 receives an operation of the user and outputs operation information to the control part 8.

If it is determined that the user selects one image through the image selection screen (YES in S6), the control part 8 proceeds to step S7 to display the image screen of the selected image on the monitor 7 and the operation panel 4. At this time, the control part 8 displays the screen image 108 on the monitor 7 and displays the screen image 208 on the operation panel 4.

The screen image 108 represents an example of sequentially displaying an image picture of the face of the user after a different color pattern is applied and product information for making up like the image pictures. The screen image 208 represents an example of displaying contents of the elected one of images selected through the image selection screen and product information for making up like the image picture of the screen image 108 displayed on the monitor at that time.

It should be noted that the user can also instruct a print-out by operating the operation panel 4. Upon receipt of the print-out instruction from the user, the control part 8 displays the screen image 109 on the monitor 7 and displays the screen image 209 on the operation panel 4. The screen image 109 represents an example of displaying an image picture of printing out. The screen image 209 represents an example of displaying a comment being printed out. The control part 8 prints out the image picture displayed on the monitor by controlling the printer 5.

Moreover, the user can also instruct a display and print-out of a comparison screen, which includes image pictures before and after the makeup by operating the operation panel 4. Upon receipt of the instruction of displaying the comparison screen, the control part displays the screen image 110 on the monitor 7. The screen image 110 represents an example of displaying the comparison image including the image pictures before and after the makeup. Upon receipt of the instruction of printing out from the user in the state where the comparison screen is displayed, the control part 8 prints out the comparison screen displayed on the monitor 7 by controlling the printer 5.

After the makeup simulation by the user is completed, the control part 8 displays the screen images 111 and 210, which are screen savers, on the monitor 7 and the operation panel 4, and the process is ended.

It should be noted that although the four images are displayed according to the makeup simulation in the example of FIG. 12 and FIG. 13, images other than the four images may be displayed. Additionally, although the makeup simulation apparatus 1 illustrates the example in which a makeup is applied to the face of the user contained in the dynamic image output from the camera 2, a previously taken dynamic image may be stored as a dynamic image file in the auxiliary memory storage 13 or the like and a makeup may be applied to a face of a user contained in the dynamic image file.

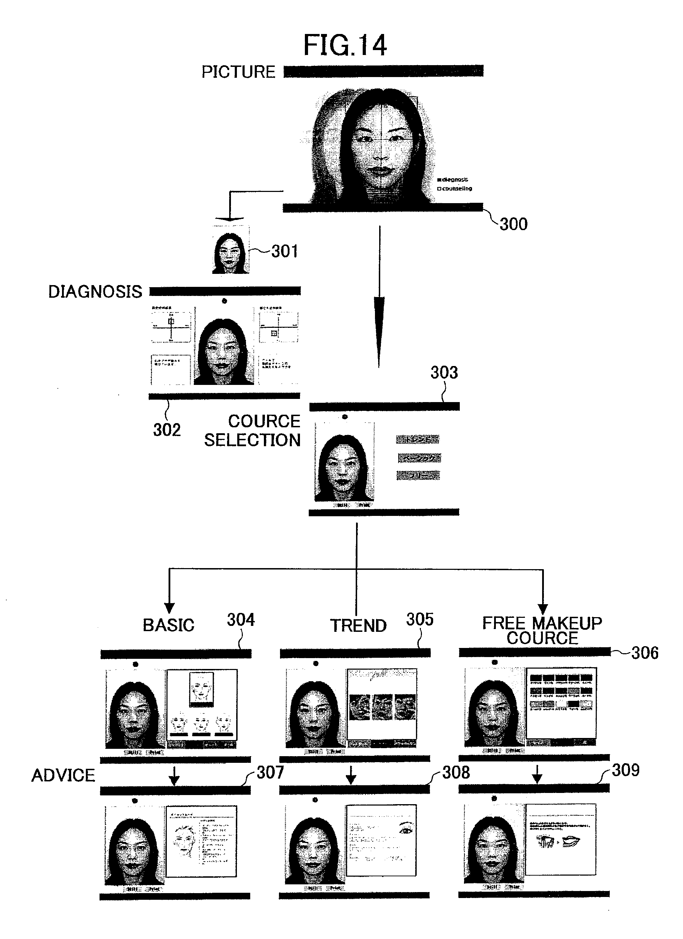

The makeup simulation apparatus 1 can also use the dynamic image output from the camera 2 to a process other than the makeup simulation. FIG. 14 is an image view illustrating a process other than the makeup simulation which the makeup simulation apparatus performs.

A screen image 300 represents an example of displaying a dynamic image of a face of a user taken by the camera 2. The makeup simulation apparatus 1 recognizes the face of the user contained in the dynamic image, and extracts a static picture 301 of the face of the user.

The makeup simulation apparatus 1 performs a face diagnosis and a skin color diagnosis of the static picture 301 according to a feature analysis logic and a skin color analysis logic, and displays a screen image 302 representing a result thereof on the monitor 302. It should be noted that the process of performing a face diagnosis and a skin color diagnosis of the static picture 301 according to the feature analysis logic and the skin color analysis logic is a known technique disclosed in, for example, Japanese Laid-Open Patent Application No. 2001-346627.

Moreover, the makeup simulation apparatus 1 can display a course selection screen 303 like the screen image 303 on the monitor 7 to let the user to make a selection of each course (for example, trend, basic, free). The makeup simulation apparatus 1 displays screen images 304-309 based on the course selected by the user on the monitor 7, and performs a simulation and advice.

The screen images 304-306 represent and example of displaying a simulation screen of each course. The screen images 307-309 represent an example of displaying an advice screen of each course.

For example, the basic course is a course for simulating and advising an appropriate technique in accordance with results of the feature diagnosis and the skin color diagnosis. Additionally, the trend course is a course for simulating and advising a latest trend makeup. Additionally, the free makeup course is a course for simulating and advising about an item corresponding to an eye, a mouth, a cheek, an eyebrow, and an individual part.

Upon receipt of the print-out instruction from the user in a state where the simulation screen or the advice screen is displayed, the control part 8 can also print out the simulation screen or the advice screen, which is displayed on the monitor 7, by controlling the printer 5.

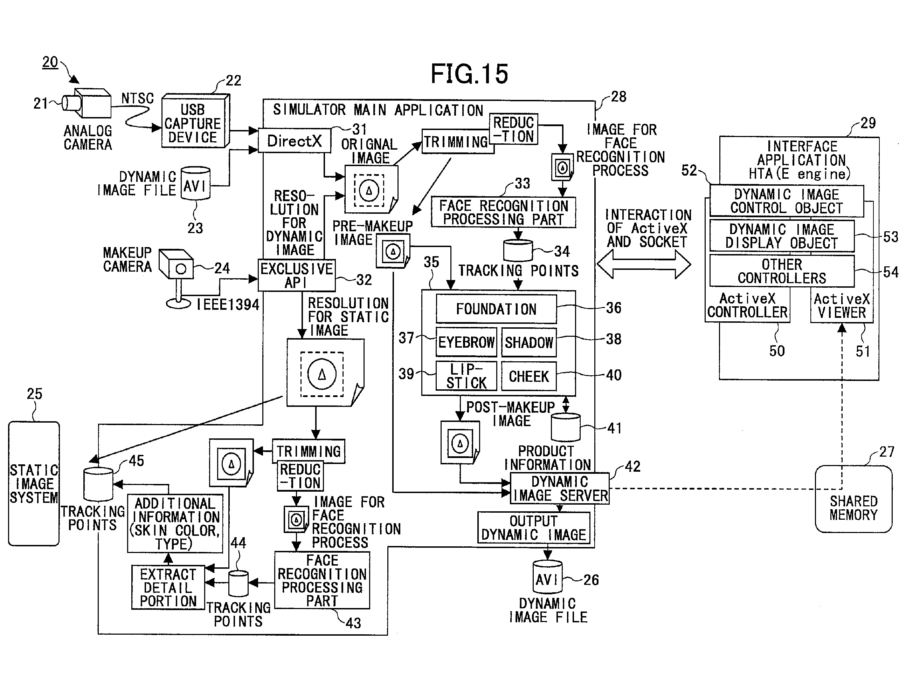

Next, a description will be give of details of the makeup simulation system for realizing the above-mentioned makeup simulation apparatuses 1. FIG. 15 is a system structure diagram of an embodiment of the makeup simulation system according to the present invention.

The makeup simulation system 20 of FIG. 15 is configured to include an analog camera 21, a USB capture device 22, a dynamic image file 23, a makeup camera 24, a static image system 25, a dynamic image file 26, a shared memory 27, and a simulator main application 28 and an interface application 29. The analog camera 21 outputs a dynamic image of, for example, an NTSC system via the USB capture device 22. The dynamic image output from the USB capture device 22 is input to the simulator main application 28 by using a DirectX 31 as an example of API (application programming interface). Additionally, the dynamic image file 23 is also input to the simulation main application by using the DirectX 31.

The makeup camera 24 outputs the taken dynamic image via an IEEE1394 as an example of a serial interface. The dynamic image output from the makeup camera 24 is input to the simulator main application 28 by using an exclusive API 32. The simulator main application 28 acquires an original image of a resolution for dynamic image and a static image of a resolution for static picture by using the exclusive API 132.

The simulator main application 28 sets the dynamic image and the dynamic image file 23 input by using the DirectX 31 and the dynamic image of a resolution for dynamic image acquired from the dynamic image input by using the exclusive API 32 as original images, and applies a trimming and a reduction process to the original images.

The simulator main application 28 applies the trimming to the original images to obtain a pre-makeup image. Additionally, the simulator main application 28 applies the reduction process to the original images to obtain a face recognition processing image. A face recognition processing part 33 acquires tracking points 34 mentioned later for recognizing a face of a user from the face recognition processing image according to an FFT (Fast Fourier Transform).

The makeup processing part 35 applies a makeup, which includes a foundation, an eyebrow, a shadow, a lipstick, and a cheek, to the face of the user contained in the pre-makeup image in accordance with the tracking points to obtain a post-makeup image. The makeup processing part 35 is configured to include a foundation processing part 36, an eyebrow processing part 37, a shadow processing part 38, a lipstick processing part 39 and a cheek processing part 40.

It should be noted that the makeup processing part 35 can include product information 41 for making up like the post-makeup image in the post-makeup image. A dynamic image server 42 writes the pre-makeup image and the post-makeup image in the shared memory 27, and can output the pre-makeup image and the post-makeup image as the dynamic image file 26.

The interface application 29 is configured to include a dynamic image control object 52, a dynamic image display object 53 and controller 54, which use an ActiveX controller 50 and an ActiveX viewer 51. It should be noted that the interface application 29 and the simulator main application 28 attempt to interact with each other.

The interface application 29 can display the pre-makeup image and the post-makeup image written in the shared memory 27 on the previously mentioned monitor 7 by using the ActiveX viewer 51.

The simulator main application 28 applies a trimming and a reduction process to the static image of a resolution for static image acquired from the dynamic image input using the exclusive API 32. The simulator main application 28 applies a trimming to the static image of a resolution for static image. Further, the simulator main application 28 obtains a face recognition processing image by applying a reduction process to the static image of a resolution for static image. A face recognition processing part 43 acquires tracking points as mentioned later for recognizing a face of a user from the face recognition processing image.

The simulator main application 28 extracts a detail portion from the face of the user contained in the trimmed dynamic image in accordance with the tracking points 44, and outputs to the static image system 25 tracking points 45, which is the tracking points 44 added with additional information, and the static image of a resolution for static image acquired from the dynamic image input by using the exclusive API 32.

The static image system 25 performs the feature diagnosis and the skin color diagnosis of the static image 301 by using the tracking points 45 and in accordance with the above-mentioned feature analysis logic and the skin color analysis logic, and can display a screen image 302 representing the result thereof on the monitor 7. Besides, the static image system 25 can display screen images 303-309 on the monitor 7.

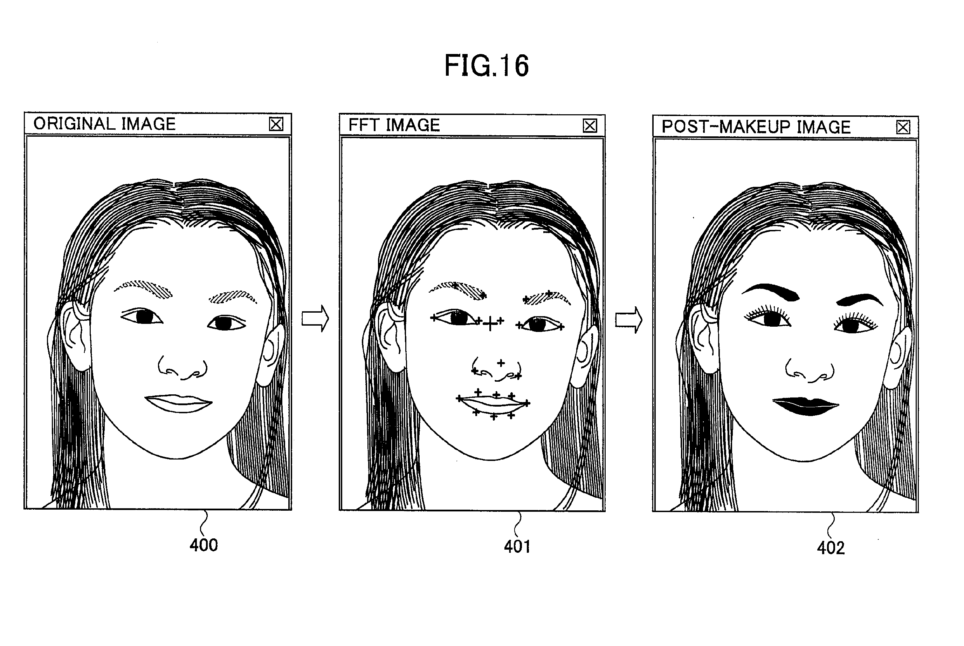

FIG. 16 is a screen image view illustrating a process which the simulator main application performs. A screen image 400 represents an example of displaying a pre-makeup image. A screen image 401 represents an example of a display in which tracking points 34 obtained from the face recognition processing image are superimposed on the pre-makeup image. Moreover, a screen image 402 represents an example of displaying a post-makeup image which is the face of the user contained in the pre-makeup image to which a makeup has been applied according to the tracking points 34.

A description will be sequentially given below, with reference to the drawings, of details of a face recognition process and a makeup process from among processes performed by the simulator main application 28. It should be noted that although a foundation process, an eyebrow process, a lipstick process and a cheek process are explained as an example of the makeup process in the present embodiment, other combinations may be used.

### (Face recognition process)

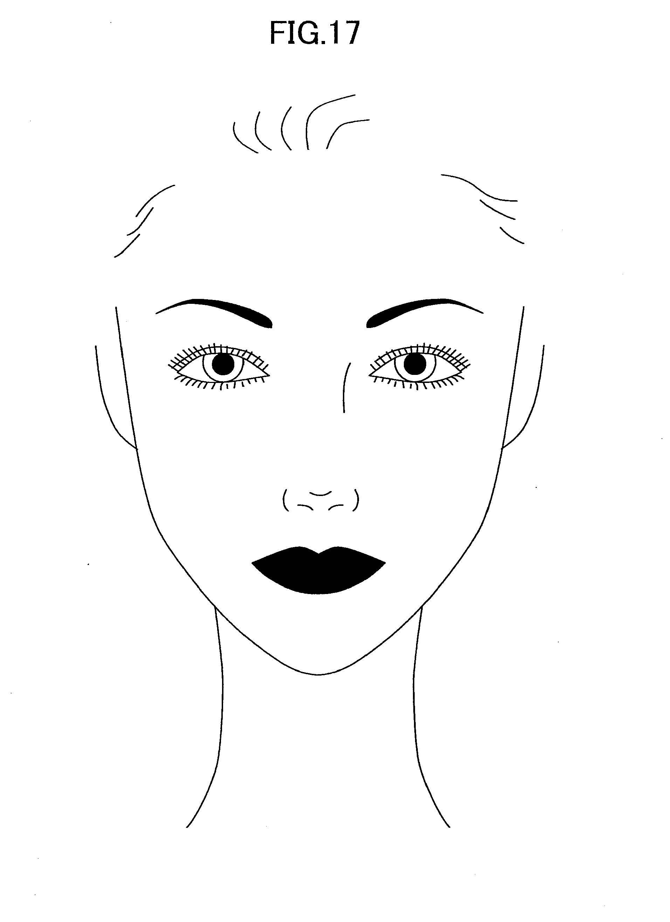

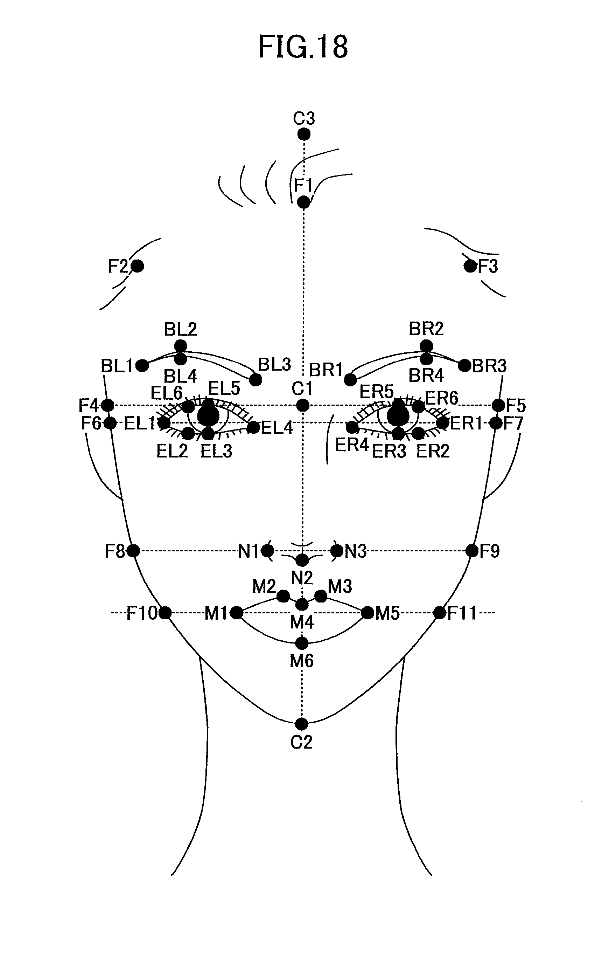

FIG. 17 is an image view of a face of a user contained in the pre-makeup image. FIG. 18 is an image view of an example of displaying tracking points. A face recognition processing part 33 of the simulator main application 33 acquires 45 tracking points 34 such as illustrated in FIG. 18 for recognizing the face of the user from the image view illustrated in FIG. 17. The tracking points 34 of FIG. 18 are an example, and may be adjusted in accordance with a processing capability of the control part and a resolution of the monitor 7.

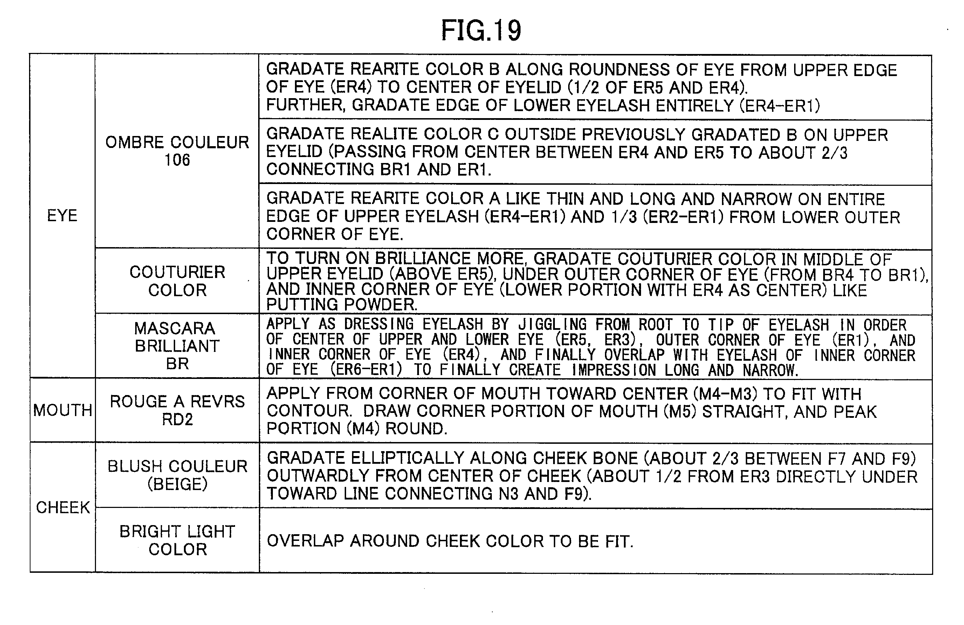

As mentioned above, by acquiring the tracking points 34 from the face of the user contained in the pre-makeup image, the makeup processing part 35 can set in a makeup parameter file such as illustrated in FIG. 19 an application method of a makeup and colors by relating with the tracking points 34.

FIG. 19 is a structure diagram of an example of a makeup process parameter file. In the makeup process parameter file of FIG. 19, an application method of a makeup and colors is set by being related with the tracking points 34 for each of an eye portion, a mouth portion, a cheek, etc.

The makeup process parameter file is set for each makeup pattern (image). The makeup process parameter file of FIG. 19 represents an example of a class elegance. It should be noted that the above-mentioned four makeup patterns (images) are an example, and other makeup patterns (images) may be used.

### [Embodiment 1]

### (Lipstick Process)

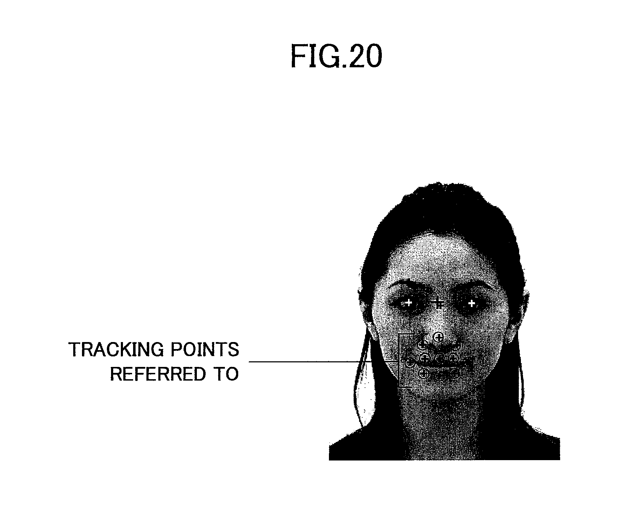

The lipstick processing part 39 included in the simulation main application 28 performs a lipstick process by referring to the tracking points 34 of eight points in the lips and three points in the nose illustrated in FIG. 20. FIG. 20 is an image view illustrating the tracking points referred to by the lipstick process.

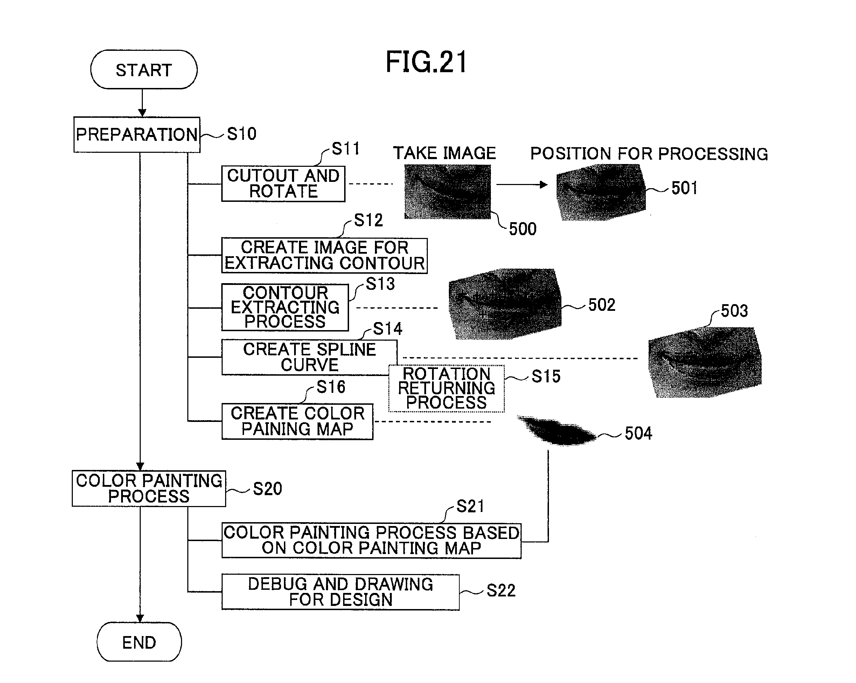

FIG. 21 is a flowchart of an example illustrating the lipstick process. The lipstick process generally includes a preparation process of step S10 and a color painting process of step S20. The preparation process includes a cutout and rotating process of step S11, a creating process of an image for extracting a contour of step S12, a contour extracting process of step S13, a spline curve creating process of step S14, a rotation returning process of step S15 and a color painting map creating process of step S16. The color painting process includes a color painting process of step S21 based on a color painting map and a debug and design drawing process of step S22.

Proceeding to the cutout and rotating process of step S11, the lipstick processing part 39 cutouts a part image 500 containing lips of the face of the user from the face recognition processing image, and rotates the part image 500 to a position for processing to obtain a part image 501.

Proceeding to the creating process of image for extracting a contour of step S12, the lipstick processing part 39 creates the image for extracting a contour from the part image 501. Proceeding to the contour extracting process of step S13, the lipstick processing part 39 extracts a contour of the lips from the contour extracting image by points as illustrated in a part image 502.

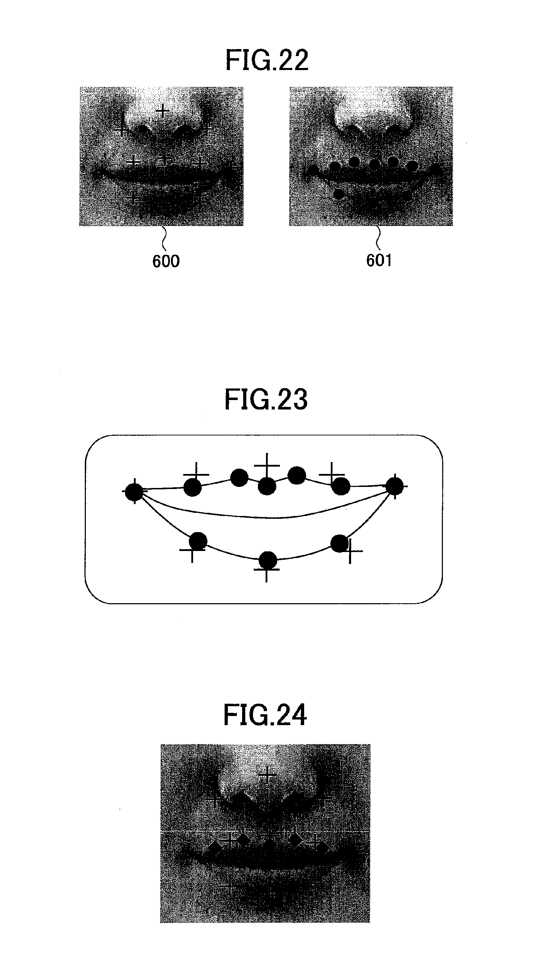

FIG. 22 is an image view of an example representing the contour extracting process. In a contour extracting image 600, the tracking points of eight points in the lips and three points in the nose are superimposed. The lipstick processing part 39 extracts points of a contour extracting image 601 by re-searching based on the eight points in the lips and three points in the nose.

FIG. 23 is a screen comparing the tracking points of the eight points in the lips and the three points in the nose in the contour extracting image 600 with the points of contour extracting image 601 extracted by re-searching according to the eight points in the lips and the three points in the nose. It should be noted that if the above-mentioned re-searching is not performed well, default points such as illustrated in FIG. 24, which are calculated from the eight points in the lips and the three points in the nose in the contour extracting image 600, may be used.

FIG. 24 is an image view of an example representing a process of acquiring the default points from the eight points in the lips and the three points in the nose. The lipstick processing part 39 acquires default points corresponding to five points in the upper lip by referring to the tracking points of the three points in the nose.

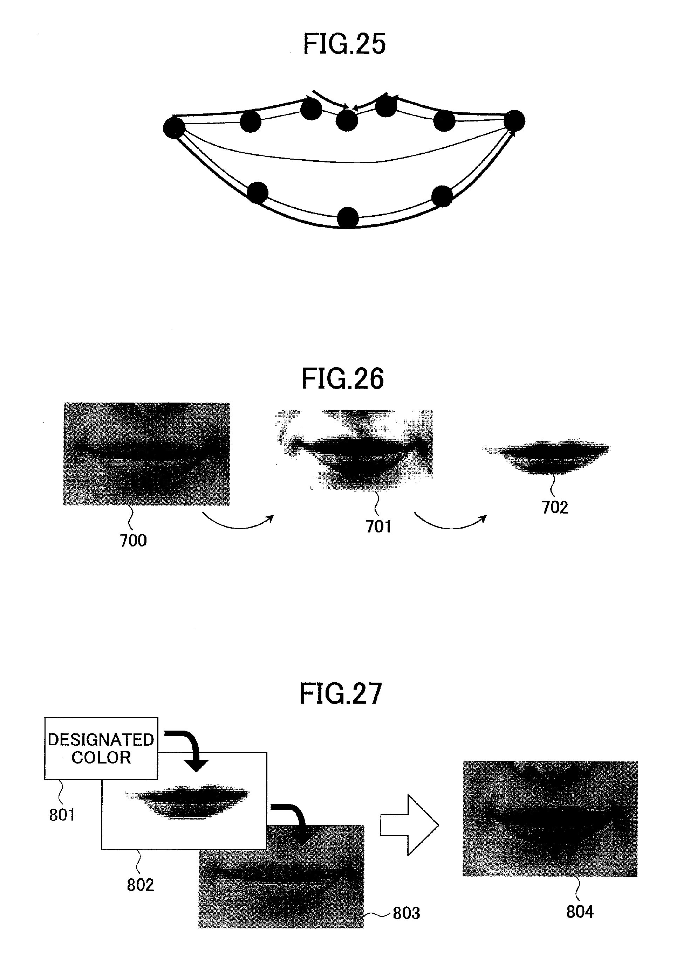

Proceeding to the spline curve creating process of step S14, the lipstick process part 39 completes a contour such as illustrated in FIG. 25 by interpolating the points of the contour extracting image 601 or the default points such as illustrated in FIG. 24 by a secondary spline. FIG. 25 is an image view representing a process of completing a contour from the pints or the default points. After completion of the contour of the lips such as in an image picture 503, the lipstick processing part 39 proceeds to step S15, and performs the rotation returning process to return the rotation performed by the cutout and rotating process of step S11.

Proceeding to the color painting map creating process of step S16, the lipstick processing part 39 creates a color painting map, which determines an intensity of color painting from brightness and color saturation of a part image 700. FIG. 26 is an image view of an example representing the color painting map creating process. Specifically, the lipstick processing part 39 crates a gray scale image 701 representing an intensity of color painting from the brightness and color saturation. The lipstick processing part 39 cutouts only a part image 702, which is surrounded by the contour of the lips completed by the spline curve creating process, as a color painting map 504 from the gray scale image 701.

Proceeding to the color paining process of step S21 based on the color painting map, the lipstick processing part 39 performs coloring to the pre-makeup image according to the color painting map 504 created by the color painting map creating process of step S16 and a makeup method and designated colors set in the makeup process parameter file such as illustrated in FIG. 19.

FIG. 27 is an image view of an example representing the color painting process based on the color painting map. The lipstick processing part 39 performs coloring to a pre-makeup image 803 to acquire a post-makeup image 804 in accordance with the method of applying a makeup and the designated colors set in the makeup process parameter file as illustrated in FIG. 19 and the color painting map 802 created by the color painting map creating process of step S16.

Then, proceeding to the debug and design drawing process of step S22, the lipstick processing part 39 performs a process of design drawing, and, thereafter, the lipstick process is ended.

### (Shadow Process)

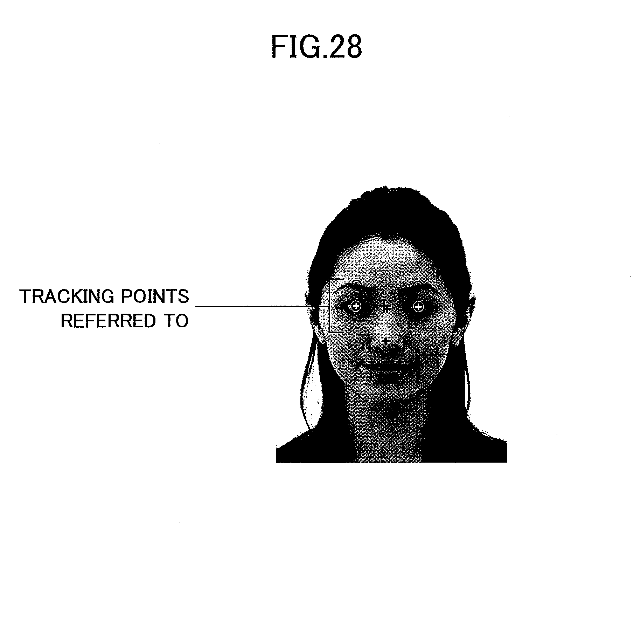

The shadow processing part 38 included in the simulator main application 28 performs a shadow process by referring to the tracking points 34 of three points in the eye and one point in the eyebrow for each of left and right as illustrated in FIG. 28. FIG. 28 is an image view illustrating the tracking points referred to by the shadow process.

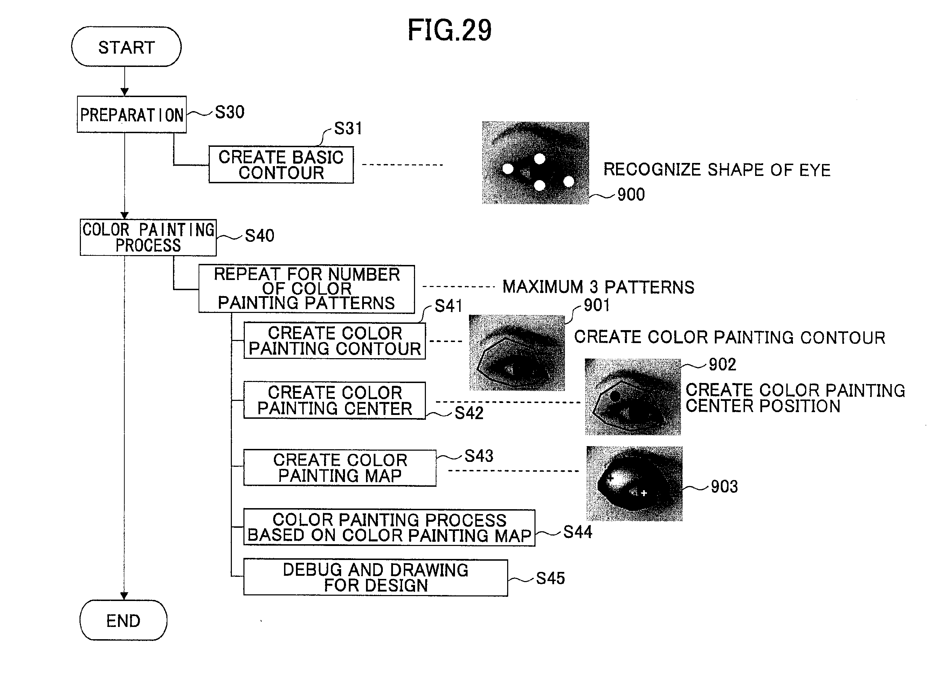

FIG. 29 a flowchart of an example illustrating the shadow process. The shadow process generally includes a preparation process of step S30 and a color painting process of step S40. The preparation process includes a creating process of a basic contour.

The color painting process includes a creating process of a color painting contour of step S41, which is repeated for the number of color painting patterns, a creating process of a color painting center of step S42, a creating process of a color painting map of step S43, a color painting process of step S44 based on the color painting process, and a debug and design drawing process of step S45.

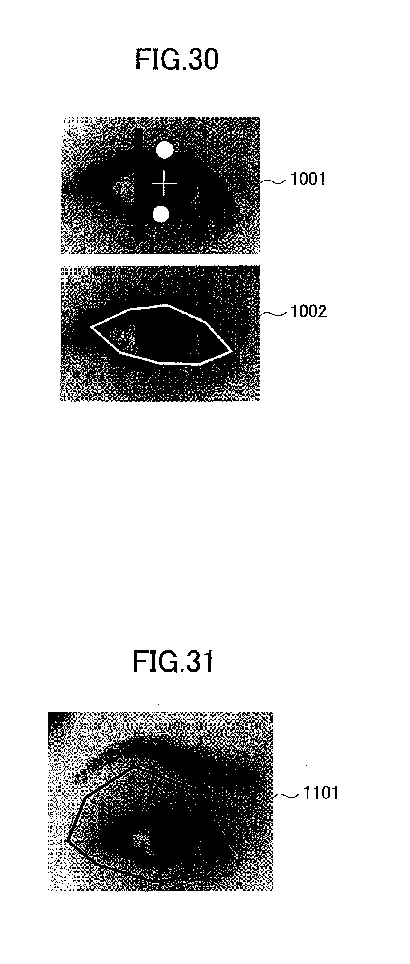

Proceeding to the creating process of a basic contour of step S31, the shadow processing part 38 obtains the form of the eye of the user such as illustrated in a part image 900 from the face recognition processing image. FIG. 30 is an image view of an example representing the creating process of a basic contour.

The shadow processing part 38 performs two-point recognition of the contour of the eye (upper side border and lower side border), such as illustrated in a part image 1001, by searching in upward and downward directions from the center the eye in order to create a contour used as a base of the color painting contour. The shadow processing part 38 adds the four points created by the interpolation to the four points including the two points of the recognized contour of the eye and the outer corner and inner corner of the eye, and creates a polygon by a total of eight points as illustrated in a part image 1002.

Proceeding to the creating process of a color painting contour of step S41, the shadow processing part 38 creates a color painting contour like a partial picture 901. FIG. 31 is an image view of an example illustrating the creating process of a color painting contour. In order to create a color painting contour, as illustrated in a partial image 1101, the shadow processing part 38 creates a color painting contour on the basis of outer corner and inner corner of eye. It should be noted that an expansion of a contour, a shift of a top point, and the like may be done by a parameter designation by GUI.

Proceeding to the creating process of a color painting center of step S42, the shadow processing part 38 creates a position of a color painting center like (●) illustrated in a partial image 902. Proceeding to the color painting map creating process of step S43, the shadow processing part 38 creates a color painting map, which determines an intensity of color painting like a partial image 903.

Specifically, the color painting map creating process determines an intensity of painting corresponding to a distance from the color painting center to a side of the polygon. For example, the shadow processing part 38 determines the color painting map so that an intensity of color painting is decreased as it is closer to a side. It should be noted that the color painting map creating process is aimed at a portion excluding the basic contour from the color painting contour.

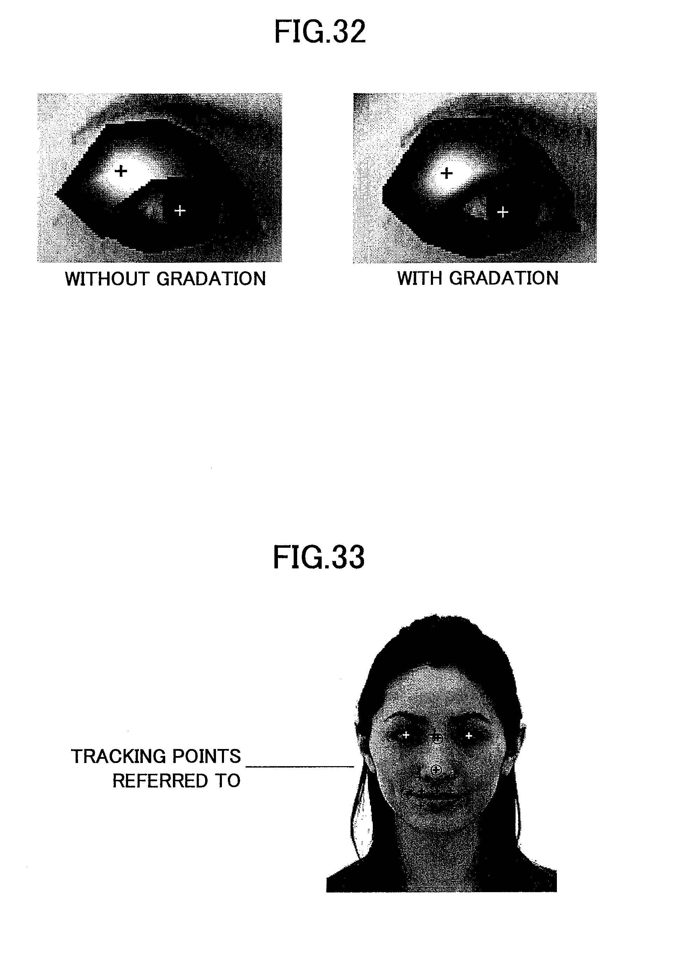

The shadow processing part 38 creates a further smoother gradation by applying a gradation process to the created color painting map as illustrated in FIG. 32. FIG. 32 is an image view of an example illustrating a color painting map which has not been subjected to the gradation process and a color painting map which has been subjected to the gradation process.

Proceeding to the color painting process of step S44 based on the color painting map, the shadow processing part 38 performs coloring on the pre-makeup image to obtain the post-makeup image in accordance with the color painting map 903 created by the color painting map creating process of step S43 and a makeup applying method and designated colors set in the makeup process parameter file such as illustrated in FIG. 19.

Then, proceeding to the debug and design drawing process of step S45, the shadow processing part 38 performs a debug and design drawing process, and, thereafter, ends the shadow process. It should be noted that the shadow processing part 38 may realize a multicolor painting by repeating the process of steps S41-S45 for the number of color painting patterns.

### (Cheek Process)

The cheek processing part 40 included in the simulator main application 28 performs a cheek process by referring to the tracking points 34 of an outer corner of eye and a corner of mouth (separately on left and right) and a middle of eyes and a nose center (for stabilizing) such as illustrated in FIG. 33. FIG. 33 is an image view illustrating tracking points referred to be the cheek process.

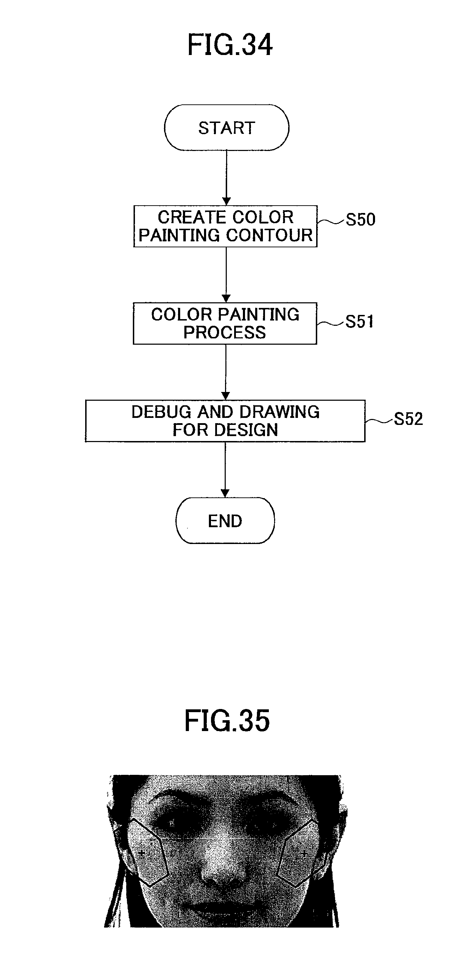

FIG. 34 is a flowchart of an example illustrating the cheek process. The cheek process includes a creating process of a color painting contour of step S50, a color painting process of step S51, and a debug and design drawing process of step S52.

Proceeding to the color painting contour creating process of step S50, the cheek processing part 40 creates a contour polygon as a color painting contour on the basis of an outer corner of eye and a corner of mouth in order to create a color painting contour. FIG. 35 is an image view of an example illustrating the color painting contour. It should be noted that a number of points, a size, a shape or a position of the contour polygon may be parameter-designated by GUI.

Proceeding to the color painting process of step S51, the cheek processing part 40 determines an intensity of painting corresponding to a distance from a color painting center to a side of the contour polygon. It should be noted that if it requires an excessive cost in determining an intensity of painting, the intensity of painting may be determined by decreasing (thinning like a mosaic pattern) the resolution (parameter-designated by GUI). The cheek processing part 40 performs coloring on the pre-makeup image to obtain the post-makeup image in accordance with the determined intensity of painting and the makeup applying method and designated colors set in the makeup process parameter file such as illustrated in FIG. 19.

Then, proceeding to the debug and design drawing process of step S52, the cheek processing part 40 performs the debug and design drawing process, and, thereafter, ends the cheek process.

### (Eyebrow Process)

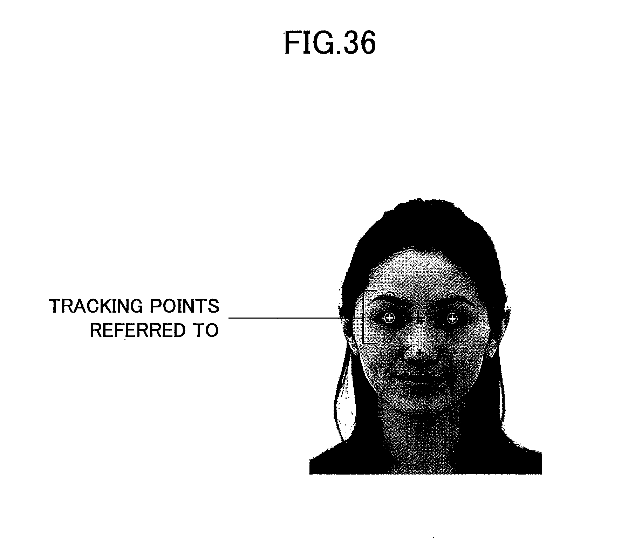

The eyebrow processing part 37 included in the simulator main application 28 performs the eyebrow process, separately on left and right, by referring to the tracking points 34 of an outer corner of eye, an eye center and tow points in an eyebrow as illustrated in FIG. 36. FIG. 36 is an image view illustrating the tracking points referred by the eyebrow process.

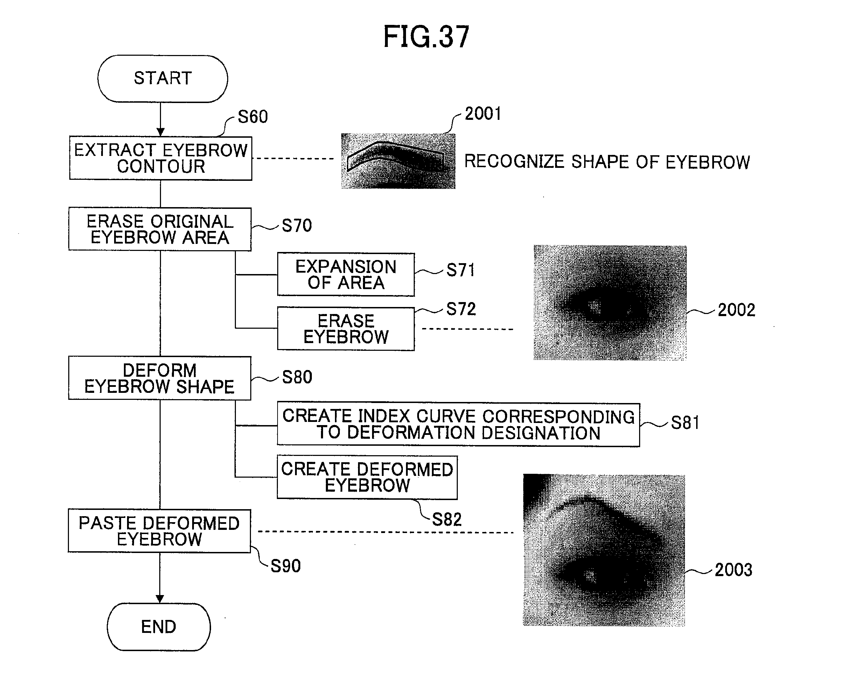

FIG. 37 is a flowchart of an example illustrating the eyebrow process. Generally, the eyebrow process includes an eyebrow contour extracting process of step S60, an erasing process of an original eyebrow area of step S70, a deforming process of an eyebrow form of step S80, and a pasting process of a deformed eyebrow of step S90.

The erasing process of an original eyebrow area includes an area expanding process of step S71 and an eyebrow erasing process of step S72. The deforming process of an eyebrow form includes a creating process of step S81 of a designation curve corresponding to a deformation designation and a deformed eyebrow creating process of step S82.

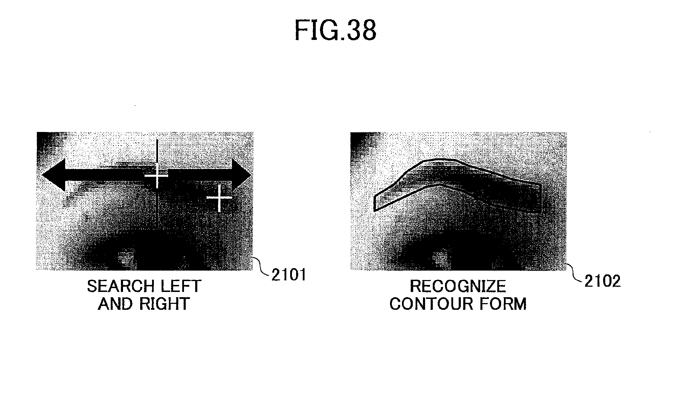

Proceeding to the eyebrow contour extracting process of step S69, the eyebrow processing part 37 acquires a form of an eyebrow of the face of the user such as in a partial image 2001 from the face recognition processing image. FIG. 38 is an image view of an example illustrating the eyebrow contour extracting process. As illustrated in a partial image 2101, the eyebrow processing part 37 searches the eyebrow rightward and leftward with the outer side of the eye brow (actually, heat the center of eyebrow) as a center in order to extract the contour of the eyebrow. The eyebrow processing part 37 recognizes a contour form of the eyebrow from a search result, as illustrated in a partial image 2102.

Proceeding to the area expanding process of step S71, the eyebrow processing part 37 expands the area representing the contour form of the recognized eyebrow. Proceeding to the eyebrow erasing process of step S72, the eyebrow processing part 37 erases the eyebrow by over-painting the expanded area with a skin color of the vicinity. Additionally, the eyebrow processing part 37 apply a fitting process to a border part of the expanded area.

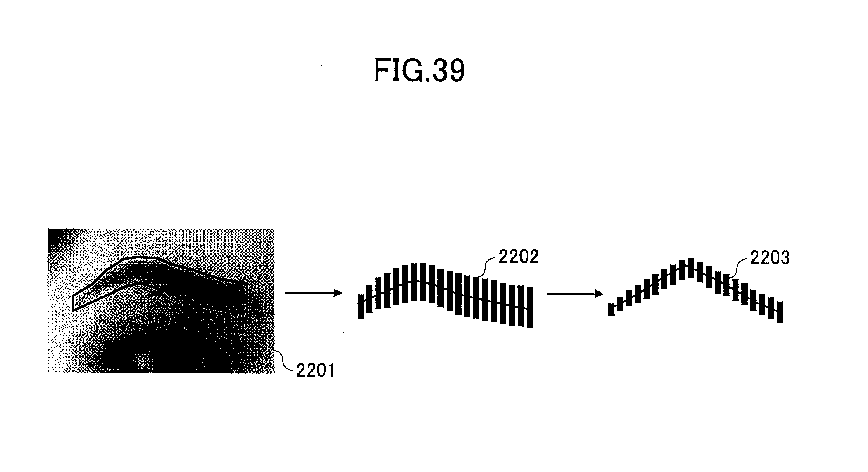

Proceeding to the creating process of step S81 of a designation curve corresponding to a deformation designation, the eyebrow processing part 37 deforms the area (skeleton) representing the contour form of the eyebrow. FIG. 39 is an image view of an example illustrating the creating process of a designation curve corresponding to a deformation designation.

As illustrated in a partial image 2201, the eyebrow processing part 37 can apply a deforming process like, for example, a skeleton 2203, by replacing an area representing the contour form of the recognized eyebrow by a skeleton 2002 formed by a plurality of strips extending in vertical direction to the axis line in a horizontal direction and changing the form of the axis line and heights of the strips.

Proceeding to the deformed eyebrow creating process of step S82, the eyebrow processing part 37 creates a deformed eyebrow from the skeleton 2203. Proceeding to the deformed eyebrow pasting process of step S90, the eyebrow processing part 37 pastes the deformed eyebrow to the pre-makeup image to obtain the post-makeup image.

### (Foundation Process)

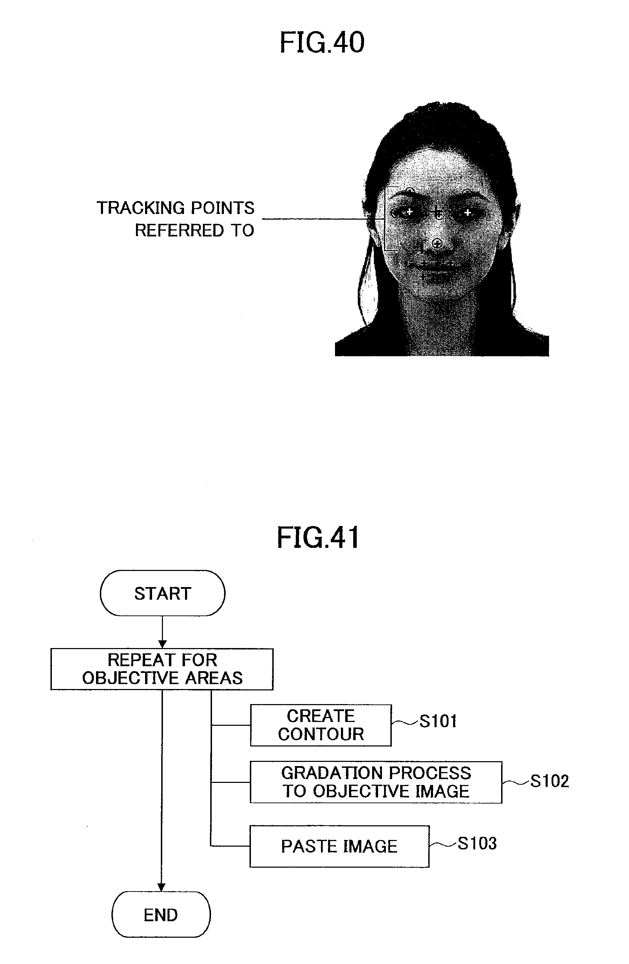

The foundation processing part 36 included in the simulator main application 28 performs the foundation process, separately on left and right, by referring to the tracking points 34 of an outer corner and an inner corner of the eye, one point in the eyebrow, a middle of the eyes, and a nose center as illustrated in FIG. 40. FIG. 40 is an image view illustrating the tracking points referred to by the foundation process.

FIG. 41 is a flowchart of an example illustrating the foundation process. The foundation process includes a creating process of a contour of step S101, a gradation process of step S102 to an objective image, and an image pasting process of step S103. It should be noted that the process of steps S101-S103 is repeated for a number of objective areas.

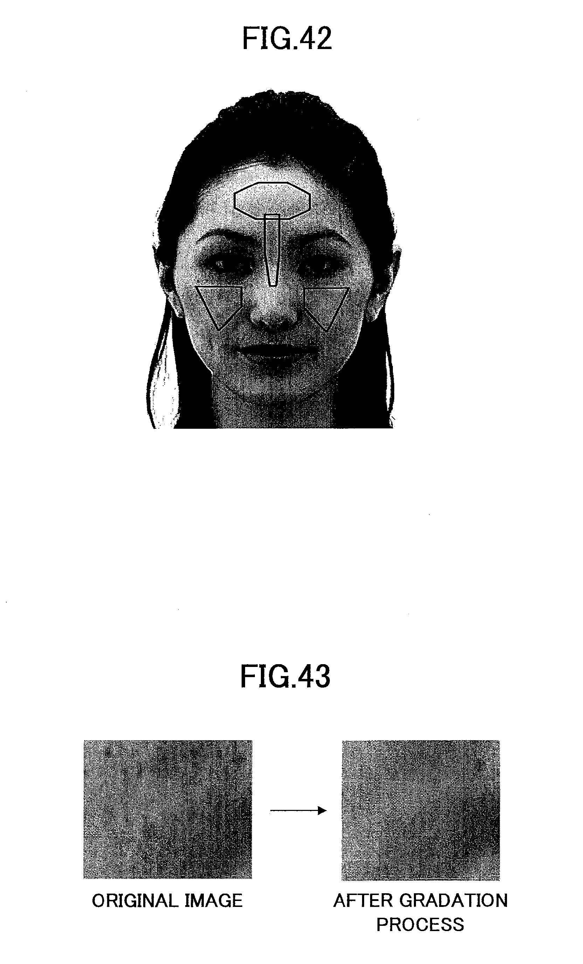

Proceeding to the contour creating process of step S101, the foundation processing part 36 creates three kinds of contours (four locations) of a forehead, a nose and cheeks (left and right) as illustrated in FIG. 42. FIG. 42 is an image view of an example illustrating the contours. It should be noted that a size, a position, etc., of each contour may be parameter-designated by GUI.

Proceeding to the gradation process of step S102 to the objective image, the foundation process part 36 performs a gradation process on the objective images corresponding to the created contours as illustrated in FIG. 43. FIG. 43 is an image view of an example illustrating an original image before the gradation process and an original image after the gradation process. According to the gradation process on the objective image, the foundation processing part 36 can perform smoothing small roughness of skin.

Proceeding to the image pasting process of step S103, the foundation processing part 36 pastes the objective images after the gradation process to the three-kinds of contours (four locations) including the forehead, the nose and cheeks (left and right) in the pre-makeup image to obtain the post-makeup image.

### [Embodiment 2]

In the embodiment 2, descriptions will be given of the lipstick process, the shadow process, the cheek process, the eyebrow process and the foundation process and other examples.

### (Lipstick Process)

The lipstick processing part 39 included in the simulator main application 28 performs the lipstick process by referring to the tracking points 34 as mentioned below.

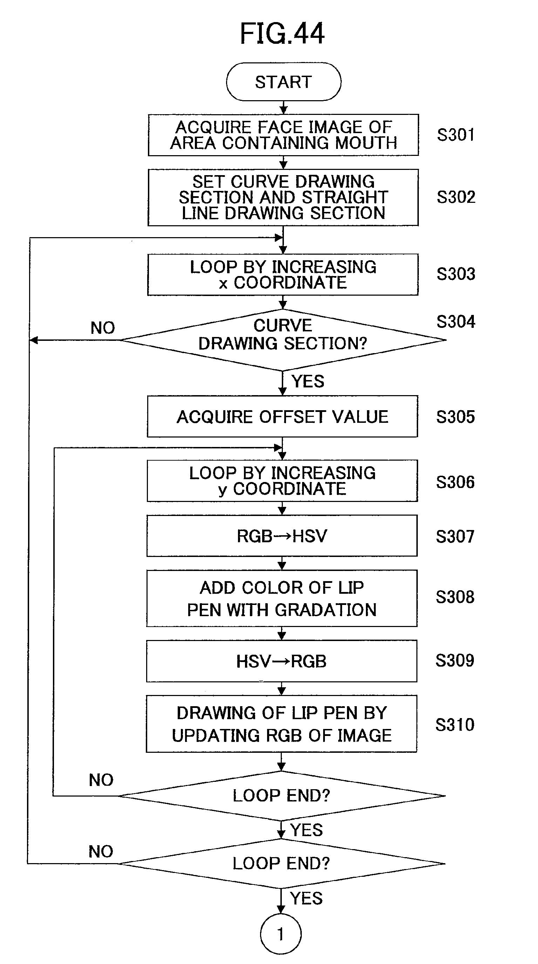

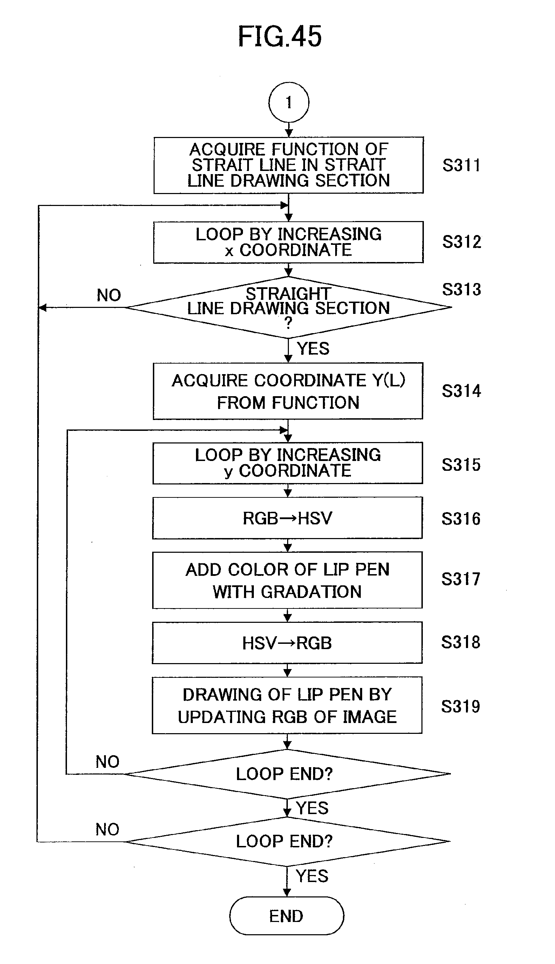

FIG. 44 and FIG. 45 are flowcharts of an embodiment of the lipstick process (lip pen drawing process). In FIG. 45, first in step S301, a face image of a rectangle area surrounding a mouth is acquired, and also contour data of the mouth is acquired. The contour data of the mouth is obtained according to the tracking points (feature points) 34

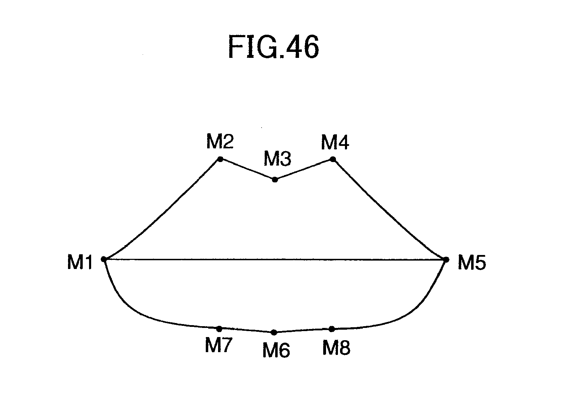

In next step S302, a curve drawing section and a straight line drawing section are set according to a makeup pattern selected by a user. FIG. 46 is an image view of an example of the face image of the rectangle area surrounding the mouth.

In this figure, besides each feature points of upper ends M2 and M4 of the mouth (upper lip), right and left ends M1 and M5 of the mouth, and a lower end M6 of the mouth (lower lip), there are indicated a point M7 at a distance of 1/3 of a mouth width (distance between M1 and M5) from the left end M1 at the lower edge of the mouth (lower lip) and a pint M8 at a distance of 1/3 of the mouth width (distance between M1 and M5) from the right end M5 at the lower edge of the mouth (lower lip).

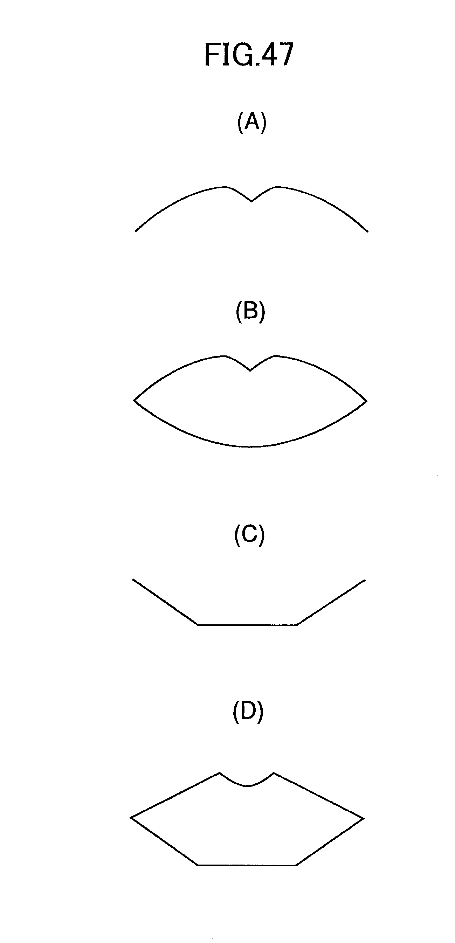

If the selected makeup pattern is fresh, the lipstick processing part 39 draws each of a section M1-M2 and a section M4-M5 by a curve, and draws each of a section M2-M3 and a section M3-M4 by a straight line. Thereby, as illustrated in a drawing image of FIG. 47(A), a lip pen drawing, which gives roundness to the upper lip, is performed, and no lip pen drawing is performed on the lower lip.

If the selected makeup pattern is sweet, the lipstick processing part 39 draws each of the section M1-M2, the section M4-M5 and a section M1-M6-M5 by a curve, and draws each of the section M2-M3 and the section M3-M4 by a straight line. Thereby, as illustrated in a drawing image of FIG. 47(B), a lip pen drawing, which gives roundness to the upper lip and the lower lip, is performed.

If the selected makeup pattern is cute, the lipstick processing part 39 draws each of a section M1-M7, a section M7-M8 and a section M8-M5 by a straight line. Thereby, as illustrated in a drawing image of FIG. 47(C), a lip pen drawing, which makes the lower lip linear, is performed and no lip pen drawing is performed on the upper lip.

If the selected makeup pattern is cool, the lipstick processing part 39 draws a section M2-M4 by a curve, and draws each of the section M1-M2, the section M4-M5, a section M1-M7, the section M7-M8 and the section M8-M5 by a straight line. Thereby, as illustrated in a drawing image of FIG. 47(D), a lip pen drawing, which makes the upper lip and the lower lip linear, is performed.

Subsequently, the lipstick processing part 39 performs a loop process of step S306. Here, the lipstick processing part 39 performs the following process by sequentially increasing by a pixel unit from a y-coordinate value of the contour data of the mouth + an offset value - β to the y-coordinate of the contour data of the mouth + the offset value + β. β is 1/2 of a pen width of the lip pen (for example, several millimeters).

In step S307 in the loop of step S306, the lipstick processing part 39 computes each of color saturation (S), hue (H) and brightness (V) from RGB values of a pixel corresponding to the xy-coordinates by using a predetermined formula.

Then, in step S308, the lipstick processing part 39 applies a gradation by correcting the HSV values of the color of the lip pen to be thinner than a difference (the offset value +β at maximum) between the y-coordinated of the contour data of the mouth and the y-coordinate, and, thereafter, adds it to the HSV values of the pixel corresponding to the xy-coordinates obtained in step S307.

Thereafter, the lipstick processing part 39 converts, in step S309, the HSV values of the pixel corresponding to the above-mentioned xy-coordinates concerned into RGB values, and performs, in step S310, a lip pen drawing by overwriting and updating the pixel corresponding to the xy-coordinates concerned by using the RGB values.

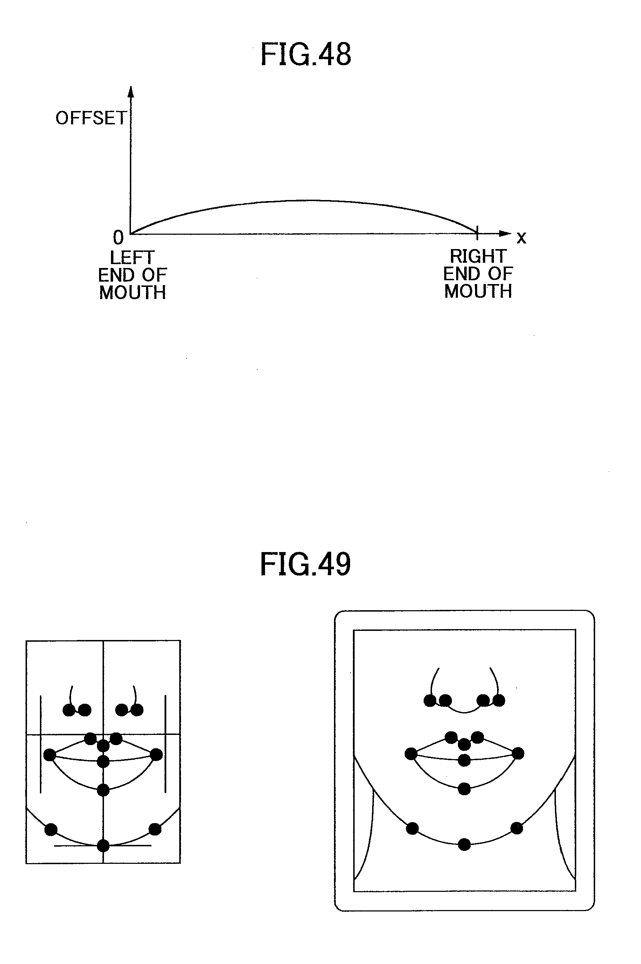

It should be noted that although step S306 is performed only once because the upper edge of the upper lip is the only curve drawing section in the drawing image of FIG. 47(A), it is performed twice in the drawing image of FIG. 47(B) because the upper edge and the lower edge of the upper lip are curve drawing sections in the drawing image of FIG. 47(B). When drawing the lower edge of the lower lip, the offset value of FIG. 48 is handled as a negative value. After completing the loop process of step S303, the lipstick processing part 39 proceeds to step S311 to acquire a function of the straight line of each straight line drawing section. In the loop process of the subsequent step S312, the lipstick processing part 39 sequentially increase the x-coordinate value from 0 (the position of the left end M1 of the mouth) to the maximum value (the position of the right end M5 of the mouth) by a pixel unit.

The lipstick processing part 39 determines, in step S313 in the loop, whether or not it is a straight line drawing section, and if it is not a straight line drawing section, returns to step S312 to increase the x-coordinate value. If it is a straight line drawing section, proceeding to step S314 where the lipstick processing part 39 acquires the y-coordinate Y(L) of the straight line corresponding to the x-coordinate concerned by using the function of the straight line.

Next, the lipstick processing part 39 performs a loop process of step S315. Here, the lipstick processing part 39 performs the following process by sequentially increasing the y-coordinate value from Y(L) - β to Y(L) + β by a pixel unit. β is 1/2 of a pen width of the lip pen (for example, several millimeters).

In step S316 in the loop of step S315, the lipstick processing part 39 computes each of color saturation (S), hue (H) and brightness (V) from RGB values of a pixel corresponding to the xy-coordinates by using a predetermined formula. Then, in step S317, the lipstick processing part 39 applies a gradation by correcting the HSV values of the color of the lip pen to be thinner than a difference (beta at maximum) between Y(L) and the y-coordinated, and, thereafter, adds it to the HSV values of the pixel corresponding to the xy-coordinates obtained in step S316.

Thereafter, the lipstick processing part 39 converts, in step S318, the HSV values of the pixel corresponding to the above-mentioned xy-coordinates concerned into RGB values, and performs, in step S319, a lip pen drawing by overwriting and updating the pixel corresponding to the xy-coordinates concerned by using the RGB values.

It should be noted that although step S315 is performed only once because the upper edge of the upper lip is the only curve drawing section in the drawing image of FIG. 47(C), it is performed twice in the drawing image of FIG. 47(D) because the upper edge and the lower edge of the upper lip are curve drawing sections in the drawing image of FIG. 47(D). After completing the loop process of step S312, the lipstick processing part 39 ends the lipstick process.

As mentioned above, a desired type is selected from a plurality of makeup patterns, the lipstick processing part 39 sets a form to draw (color painting process) by a lip pen in accordance with the selected makeup pattern, and performs the drawing by the lip pen with the set form, and, thereby, the vicinity of the contour of the mouth can be drawn and displayed in accordance with the selected makeup pattern by merely selecting a desired type.

Moreover, because the lipstick processing part 39 applies a gradation to dilute the color of the lip pen as a vertical direction distance from a contour of a mouth increases, the drawn color of the lip pen fits to the skin color, which permits displaying the color of the lip pen providing no uncomfortable feeling. The lipstick processing part 39 included in the simulator main application 28 may compute the following points from the tracking points 34 to perform the lipstick process of embodiment 1 or 2.

Positions of a plurality of points previously set up for grasping morphological features of a mouth can be computed from the tracking points 34. FIG. 49 is an image view of an example illustrating positions of a plurality of points previously set up for grasping morphological features of a mouth. FIG. 49 illustrates the following 14 points.

The 14 points illustrated in FIG. 49 are a total of 14 points including positions (two points) of both sides of a nose, center positions (two points) of nostrils, positions (two points) of a peak of an upper lip, a position of a trough of the upper lip, a center position of the lip, positions (two points) of corners of a mouth, a position of a center of a lower edge of the lower lip, a center portion of a jaw, and positions (two points) of both sides of the jaw. It should be noted that the number and the positions of those points are not limited, and the number and the positions can be changed if morphological features of a mouth can be grasped and if it is suitable for creating makeup information.

The lipstick processing part 39 determines a planer feature analyzed according to the positions of the 14 points with respect to the following five items, and grasps a balance of an entire mouth of an object person. The lipstick processing part 39 compares the grasped balance of the entire mouth of the object person with a most appropriate balance as a reference so as to measure a difference therebetween, and corrects portions different from the reference. It should be noted that the balance of lips set as a reference depends on a proportion of lips evaluated as beautiful.

The five items to determine a balance of a form of a mouth are positions of corners of the mouth, a position of an upper lip, a position of a lower lip, a position of a peak of the upper lip, and angles of the peak and trough of the upper lip. References for the five items in the most suitable balance are: for positions of a mouth, a position moving an inner side of a black eye; for a position of an upper lip, a position at 1/3 of a distance from under a nose to a center position of lips; for a position of a lower lip, a position at 1/3 of a distance from a center position of a jaw to a center position of the lips; for a position of a peak of the upper lip, a position moving the a middle of nasal apertures downward; and for angles of the peak and trough of the upper lip, an angle decreased by 10 degrees from the peak toward the trough.

According to the optimum reference balance of lips, the lipstick processing part 39 compares the balance of the person to be applied with a makeup to grasp a difference therbetween, and corrects the object lips to the reference balance. Here, a technique of the correction is explained. First, the lipstick processing part 39 draws a horizontal line from the center of the lips and measures whether the positions of the corners of the mouth are higher or lower than the horizontal line. If the positions of the corners of the mouth are higher than the horizontal line, the lipstick processing part 39 does not perform a correction. If the positions of the corners of the mouth are lower than the horizontal line, the lips are seen as slack and loose, and, thus, the lipstick processing part 39 applies a correction makeup to move the positions of the corners of the mouth upward to the extent of 2 mm.

It should be noted that the reason for setting the limit of adjustment to 2 mm is to avoid a result of the adjustment from being unnatural. For example, it is usual to change it within a range of about 2 mm in a case where a beauty consultant gives an advice for a makeup of lips to a client at a shop front and makes a suggestion of a makeup method to approach to standard lips. As mentioned above, if the correction range exceeds 2 mm, it is not preferable because the makeup may provide unnaturalness. It should be noted that in a case where the original points of the corners of the mouth are offset, the points of the corners of the mouth are adjusted manually because the points in the optimum balance are also offset. The range of the correction, that is 2 mm, is the same in other portions.

Next, the lipstick processing part 39 corrects the form of the peak and trough of the upper lip. The lipstick processing part 39 sets up a position of the peak of the upper lip by determining based on a reference of a position, which is at 1/3 of a distance from the bottom of the nose to the center position of the lips and a position moved downward from the middle of the nasal apertures, and sets up a makeup point on a screen so that the peak of the upper lip comes to the thus-determined point.

Next, the lipstick processing part 39 sets up a position of the lower lip to a position at 1/3 of a distance from a center line of the lips to the center position of the jaw, and, further, draws a line of the lower jaw by connecting the center position and three point positions on both sides thereof by a circular arc and draws a line of the lower lip in a similar form as the circular arc form of the lower jaw. The drawing of the lower jaw can be done automatically by deforming a basic form along the line of the lower jaw on a computer screen.

As mentioned above, the lipstick processing part 39 compares the balance of the entire lips of the object person with the optimum balance in accordance with the references of the five items to grasp differences thereof, and can acquire a line for correcting it to the optimum balance.

### (Shadow Process)

The shadow processing part 38 included in the simulator main application 28 performs the shadow process by referring to the tracking points 34 as follows. It should be noted that the shadow process is performed in an order of an eyeline searching process, an eyeline drawing process, and an eye shadow applying process.

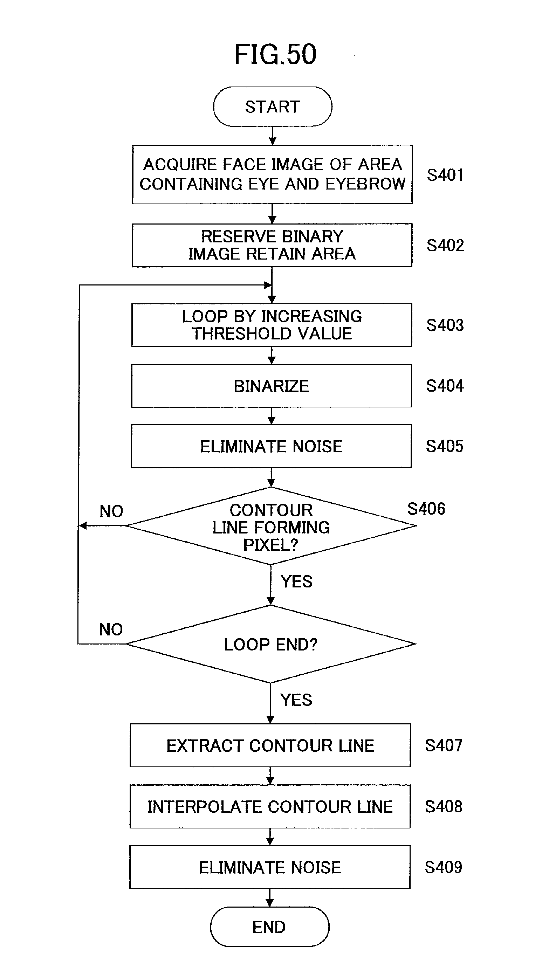

FIG. 50 is a flowchart of an embodiment of the eyeline searching process. In the figure, first, in step S401, a face image of a rectangle area surrounding an eye and an eyebrow is acquired, and, in step S402, an area for retaining a binary image is reserved in the memory device or the like. A threshold value TH is sequentially increased by a predetermined increment from a lowest value to a maximum value in a loop process of the subsequent step S401, and binarization of the face image of the rectangle area surrounding the eye and the eyebrow is performed using the threshold value TH in step S404 in the loop. Performing the binarization by varying the threshold value TH is to accurately detect an eyeline.

In the subsequent step S405, a median filter process is performed on an edge image obtained by the binarization to eliminate noise. This is performed to eliminate a noise generated due to an eyelash or the like. Then, it is determined, in step S406, whether or not there are a plurality of edge pixels continuously extending in a direction of a width of the eye, that is, whether there are contour line forming pixels. If the above-mentioned contour line forming pixels do not exist, the threshold value TH is increased by a predetermined increment, and it returns to step S404.

In step S407, a contour line is extracted from the above-mentioned binary image. Then, the shadow processing part 38 linear-interpolates (or curve-interpolates) a discontinuous portion in the contour line extracted from the above-mentioned binary image, and, further performs, in step S409, a median filter process on the interpolated contour line to eliminate a noise, and ends the process.

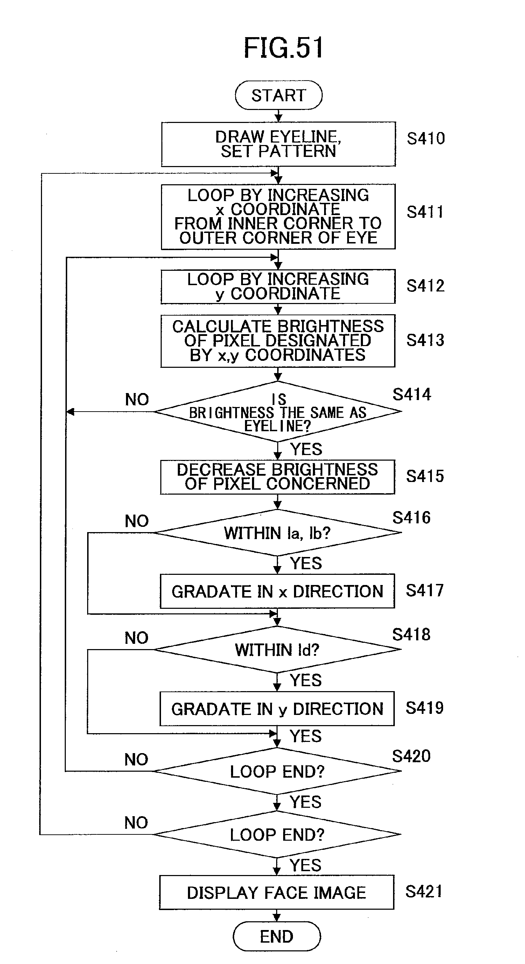

FIG. 51 is a flowchart of an embodiment of the eyeline drawing process. This process is performed on an area of an upper side (eyebrow side) of the contour line of the upper eyelid connecting inner corners of eye EL4, ER4 and outer corners of eye EL1 and ER 1.

In the figure, first, in step S410, an eyeline drawing pattern is set. In a case where cool is selected as a makeup pattern, the eyeline drawing pattern is an eyeline of a width from an inner corner of eye to an outer corner of eye of the upper eyelid, and an eyeline drawing pattern is set to perform a gradation of the eyeline on the outer corner side in the x-direction in a hutched area Ia.

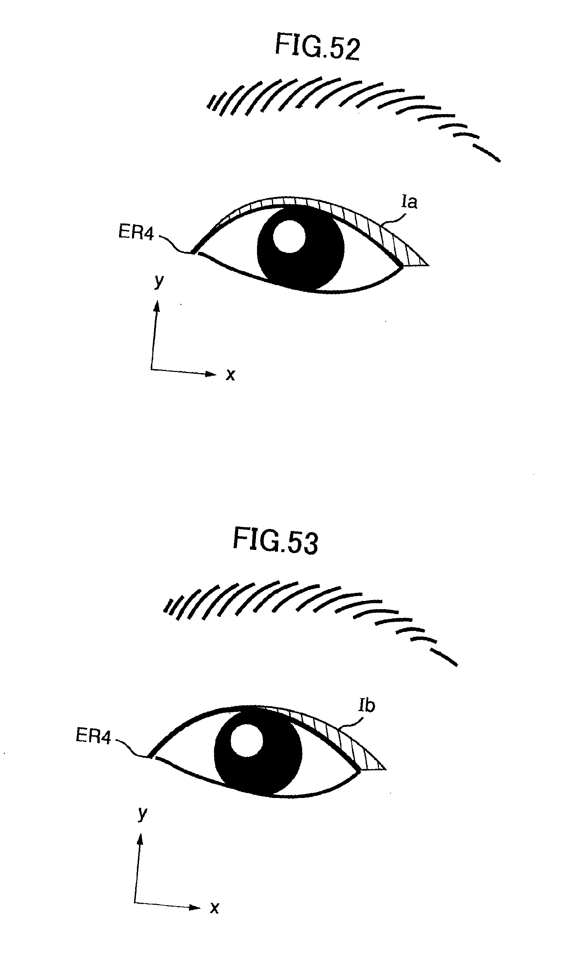

Moreover, in a case where fresh is selected as a makeup pattern, as illustrated in FIG. 53, the eyeline drawing pattern is an eyeline of a width from a middle of the upper eyelid (a middle point between the inner corner and the outer corner) to the inner corner of eye, and an eyeline drawing pattern is set to perform a gradation of the eyeline on the outer corner side in the x-direction in a hutched area Ib.

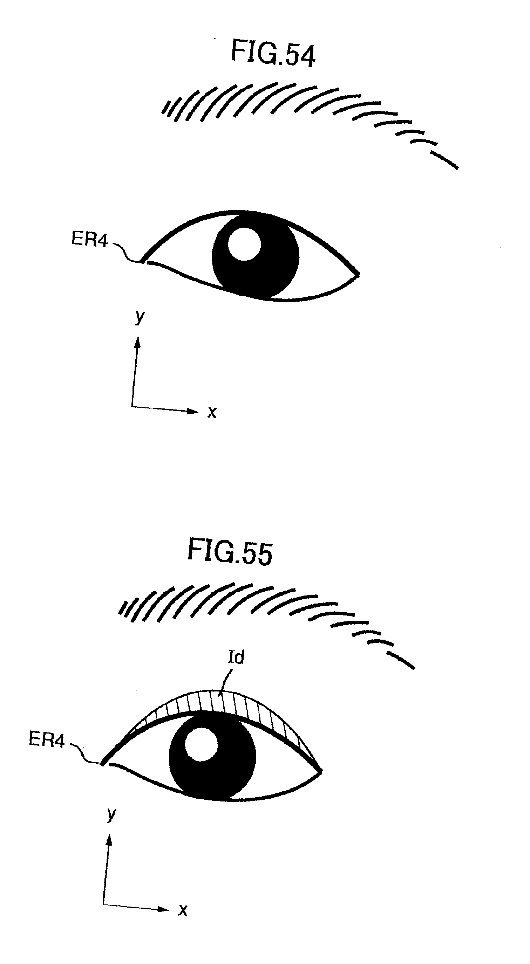

Moreover, in a case where sweet is selected as a makeup pattern, as illustrated in FIG. 54, the eyeline drawing pattern is an eyeline of a width from the inner corner of eye to the outer corner of eye of the upper eyelid, and an eyeline drawing pattern is set to not perform a gradation of the eyeline.

Further, in a case where cute is selected as a makeup pattern, as illustrated in FIG. 55, the eyeline drawing pattern is an eyeline of a width from the inner corner of eye to the outer corner of eye of the upper eyelid, and an eyeline drawing pattern is set to perform a gradation of the eyeline on the eyebrow side in the y-direction in a hutched area Id.

The eyeline drawing patterns corresponding to the above-mentioned makeup patterns are default values when an eyeline selection box is not touched, and it is possible to select a desired pattern from among 4 eyeline drawing patterns displayed when the eyeline selection box is touched.

Subsequently, an x-coordinate value is sequentially increased by a loop process from 0 (a position of the inner corner of eye) to a maximum value (a position of the outer corner of eye) by a pixel unit. The loop process of step S412 is performed for each x-coordinate value within this loop. Here, the y-coordinate value is increased from 0 (y-coordinate of the contour line) to a maximum value (eye level width: a maximum separation distance between the upper eyelid and the lower eyelid) to perform the following process.

Brightness of the pixel designated by the above-mentioned x-coordinate and y-coordinate is calculated in step S413, and it is determined, in step S411, whether or not the brightness of the pixel is equal to the brightness of the eyeline. Here, if they are not equal to each other, the y-coordinate value is increased, and it returns to step S413.

If the bright of the pixel is equal to the brightness of the eyeline, it proceeds to step S415 to decrease the brightness of the pixel from a current brightness by a predetermined value. Thereby, the brightness of the pixel on the contour line is decreased and it is deepened, which results in highlighting the eyeline. Thereafter, it is determined, in step S416, whether it is the area Ia of FIG. 52 (a case of sweet) or the area Ib of FIG. 53 (a case of cool) according to the x-coordinate and the y-coordinate, and if it is a case of the above-mentioned areas Ia or Ib, a gradation of the eyeline is performed, in step S417, on the side of the outer corner of eye in the x-direction.

Further, it is determined, in step S418, whether it is the area Id of FIG. 55 (a case of fresh) according to the x-coordinate and the y-coordinate, and if it is a case of the above-mentioned areas Ia and Ib, a gradation of the eyeline is performed, in step S419, on the side of the eyebrow in the y-direction. Thereafter, after the loop processes of the above-mentioned steps S411 and S412, the shadow processing part 38 ends the eyeline searching process.

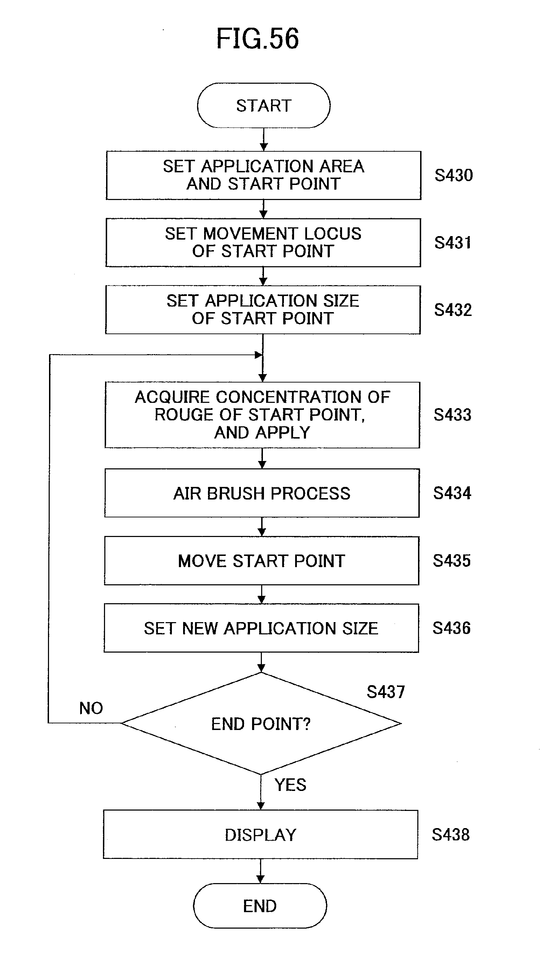

FIG. 56 is a flowchart of an embodiment of the eye shadow application process. In the figure, first, in step S430, an eye shadow application area is set. Here, a maximum distance Ymax in the y-direction from the contour line of the upper eyelid to the contour line of the eyebrow is acquired, and a maximum application size My=Ymax/ α is acquired. It should be noted that if the makeup patter is sweet or cute, α= 2, if cool, α= 3, and if fresh, α= 6.

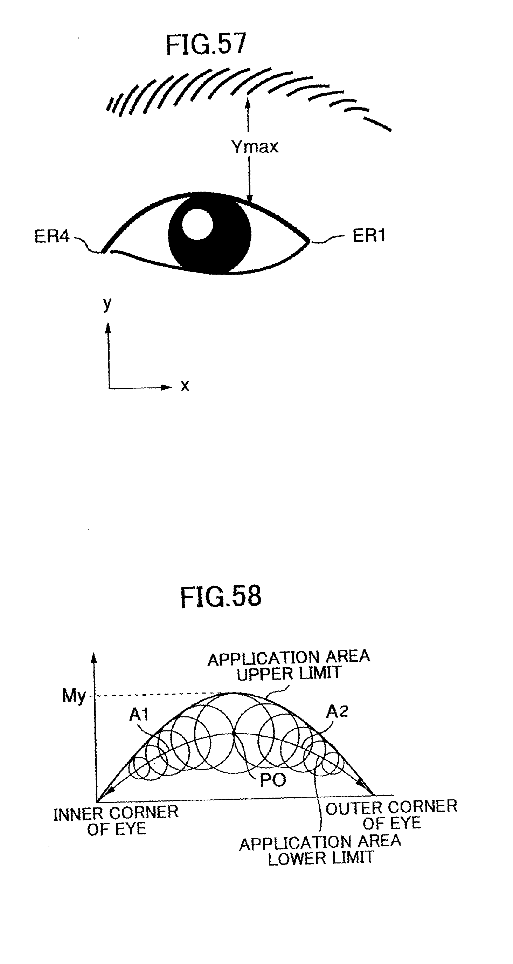

Further, an upper limit (eyebrow side) of the eye shadow application area is acquired for each makeup pattern using curves illustrated in FIG. 58(A),(B). At this time, the above-mentioned maximum application size My is used. Here, if it is a case of sweet, cool or cute, a curve from the inner corner of eye to the outer corner of eye illustrated in FIG. 58(A) is used, and if it is a case of fresh, a curve from a point on the contour line of the upper eyelid separate from the inner corner of eye by a predetermined length to the inner corner of eye as illustrated in FIG. 58(B) is used. Additionally, a lower limit of the eye shadow application area is set to the contour line of the upper eyelid.

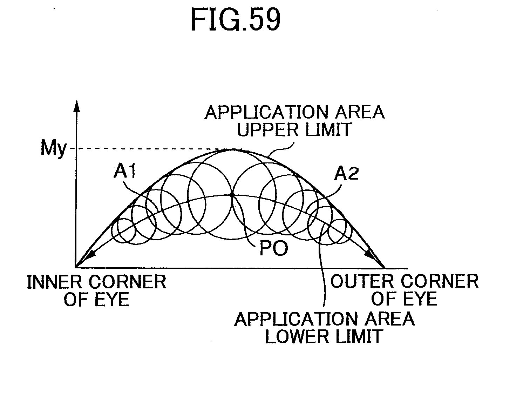

Moreover, the start point of the movement locus is set in step S431, and an application size at the start point of the eye shadow application is set in step S432. Although FIG. 59 illustrates an eye shadow application area corresponding to FIG. 58(A), a roughly center position P0 of the lower limit (the contour line of the upper eyelid) of the eye shadow application area is set to the start point of the eye shadow application. Additionally, a radius of a circle having a center as the start point and contacting the upper limit of the eye shadow application area is set to the application size, and, further, arrows A1 and A2 illustrated in overlapping with the lower limit of the eye shadow application area are set to the movement locus of the start point.

Next, in step S433, a density of eye shadow at the start point is computed by using a predetermined formula from the skin color of the user and the color of the selected eye shadow, and the eye shadow of the obtained color is applied to the start point. Then, an air brush process is performed, in step S434, to make the color density of the eye shadow applied to the start point thinner (gradate) in proportion to a distance from the start point in order to acquire a color of each pixel at which the eye shadow covers the skin by adding the thus-obtained density of color of the eye shadow of each pixel position to the skin color of the pixel at the same position, thereby updating the color of each pixel.

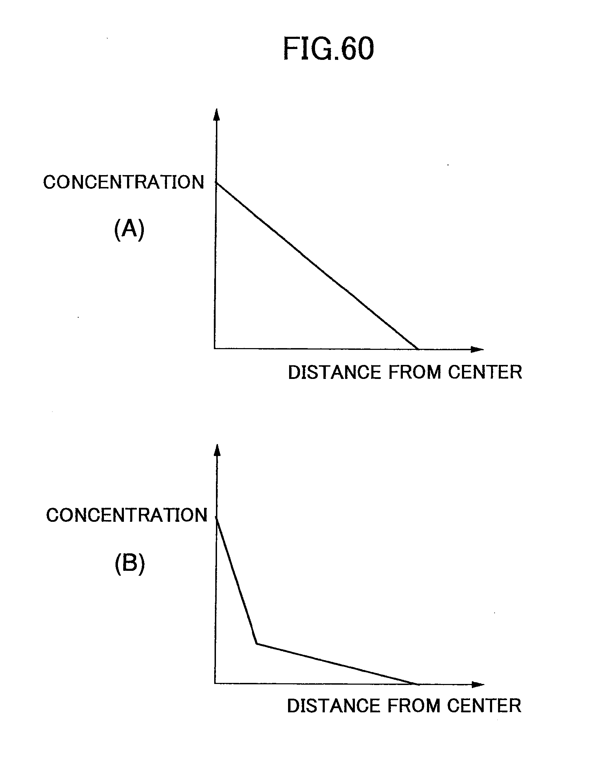

It should be noted that, in the above-mentioned air brush process, only inside the circle having a radius corresponding to the application size in the eye shadow application area is an object to be processed, and no process is applied to the lower half circle portion under the lower limit of the eye shadow application area. Additionally, as a relationship between a distance from the center in the air brush process and a density, a property that the density is decreased in proportion to a distance from the center such as illustrated in FIG. 60(A) is used in a case where the makeup pattern is cute or fresh, and a property that a degree of decrease in the density is larger when the distance from the center is small and a degree of decrease in the density is smaller when the distance from the center is large such as illustrated in FIG. 60(B) is used in a case of sweet or cool.

Thereafter, in step S435, the start point is moved by a predetermined distance in accordance with the movement locus of the start point indicated by the arrows A1 and A2. It should be noted that the movement of the start point from the position P0 in the direction of the arrow A1 by a predetermined distance is repeated, and if the moved start point is out of the eye shadow application area, it returns to the position P0 and the start point is moved in the direction of the arrow A2 by the predetermined distance.

Moreover, a new application size is calculated in step S436. The new application size decreases at a rate of several percent to several tens percent as the start point moves from the position P0 in the directions of the arrows A1 and A2.

Subsequently, it is determined, in step S437, whether or not it is an end point of the eye shadow application, and if it is not the end point, the above-mentioned steps S433 to S436 are repeated, and if it is an end point, the shadow processing part 38 ends the eye shadow applying process. The determination of the end point is such that the eye shadow application is ended when the start point moves in the direction of the arrow A2 and out of the eye shadow application area.

As mentioned above, a desired type is selected from a plurality of makeup patterns, an area for applying the eye shadow is set in an eye portion of the face image in accordance with the selected makeup pattern, and the eye shadow is applied by overlapping the color of the eye shadow over the color of the face image in the area where the eye shadow is applied, and, therefore, the eye shadow can be applied and displayed in the eye portion of the face image in accordance with the selected makeup pattern by merely selecting the desired type.

Moreover, because the contour of eye is detected and the detected contour of the eye and the vicinity thereof is drawn in accordance with the selected makeup pattern, the eyeline can be drawn and displayed in the eye portion of the face image in accordance with the selected makeup pattern by merely selecting a desired type.

Moreover because a gradation is applied by decreasing the density of the eye shadow as it apart from the start point of the application in the area where the eye shadow is applied, the applied eye shadow fits with the skin color of the face image and the eye shadow having no feeling of strangeness can be displayed, and because the start point is sequentially moved in the area where the eye shadow is applied, the applied eye shadow fits with the skin color of the face image and the eye shadow having no feeling of strangeness can be displayed irrespective of a form of the area where the eye shadow is applied in the face image.

The shadow processing part 38 included in the simulator main application 28 may be configured to perform an eye makeup to exhibit eyes larger and attractive by well-balanced eye by comparing a classified and grasped form of eye of the object person for makeup with a form of a standard-balanced eye to approximate the standard-balanced eye.

The morphological features of eye can be classified using four elements as indexes including a frame axis indicating a form of a lid fissure, a form axis indicating convexoconcave form of an eye, an angle axis indicating angle form of an eye, and a form of a standard-balanced eye. The frame form is a contour shape of a lid fissure formed by upper and lower eyelid using an eyelash line as a target. The frame axis is an arrangement on an axis according to a ratio of a top-to-bottom diameter and a left-to-right diameter. A frame axis is provided, for example, as a vertical axis. The form of the standard-balanced eye is arranged at a center of the frame axis. A form of an eye having a longer top-to-bottom diameter and a short left-to-right diameter with a ratio of the top and bottom diameter of the lid fissure and the left-to-right diameter of the lid fissure is 1:3 is arranged on one side, that is, upper side of the frame axis. A form of an eye having a short top-to-bottom diameter and a long left-to-right diameter is arranged on the other side, that is, the lower side of the axis.

Moreover, the form indicating a convexoconcave shape of an eye is grasped by, for example, a convexoconcave shape of a lid fissure and prominences of upper and lower eyelids. The form axis is configured as a horizontal direction axis perpendicular to the above-mentioned frame axis. The form of the standard-balanced eye is arranged at the center of the form axis. On one side, that is, the left side of the form axis, there is arranged a form of an eye in which prominences of an upper eyelid is more planar than the form of standard-balanced eye (a prominence form of a full-fleshed eyelid which is general in a single-edged eyelid or a concealed double-edged eyelid, a fresh of the lower eyelid is thin, and a curve of an eyeball is inconspicuous. On the other side, that is, the right side of the axis, there is arranged a form of an eye in which a prominence of the upper eyelid is stereoscopic (a sharply-chiseled state generally seen in double-edged eyelid and triple-edged eyelid, there is a depression on a border between an eyebrow arch bone and an orbit, and there is seen remarkable a prominence of an eyeball), and a noticeable curved surface of an eyeball appears in the lower eyelid, or the lower eyelid is stereoscopic due to tumor of orbital fat.

Moreover, the angle form of an eye is an angle formed by a horizontal line passing the inner corner of eye and a diagonal line connecting the inner corner and the outer corner of eye. The angle form of the standard-balanced eye is larger than 9 degrees and smaller than 11 degrees, most preferably 10 degrees. The shadow processing part 38 determines that if it is larger than 9 degrees and smaller than 11 degrees, it is standard, if equal to or smaller than 9 degrees, outer corner drop, and is equal to or larger than 11 degrees, outer eye raised. The angle axis indicating up and down of the angle form of eye is represented as it individually exists in four quadrants defined by two axes when projecting the above-mentioned frame axis and form axis onto a flat surface.

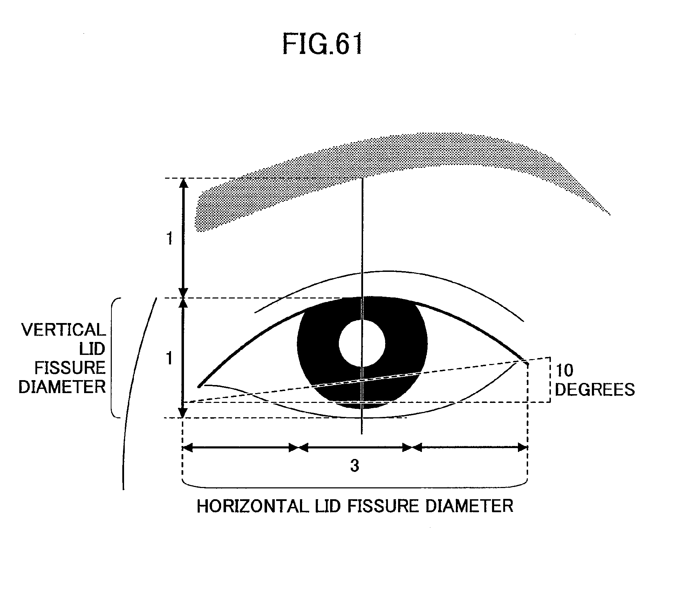

The feature of the standard-balanced eye is that, as illustrated in FIG 61, a) it has a frame form in which a ratio of the top-to-bottom diameter of eye to the left-to-right diameter of eye is a frame form of 1;3; b) there is no remarkable irregurality in the form of the upper and lower eyelids when viewing the face from a side surface and has a curve from an eyebrow arch bone (a slightly lifted bone under a portion where the eyebrow are grown) to a cheek bone is smooth; c) an angle formed by a horizontal line passing the inner corner of eye and a line connecting an inner corner; d) an outer corner of eye is 10 degrees, and d) a lid groove has an intermediate form between a double-edged eyelid and a concealed double edged eyelid, and the groove on the inner corner side is narrow and the groove on the outer corner side is wider than that of the side; and e) a width of the top-to-bottom diameter and a width from the upper edge of the lid fissure to the eyebrow has a form of balance of 1:1 FIG. 61 is a front view illustrating the form of the standard-balanced eye.

### (Cheek Process)

The cheek processing part 40 included in the simulator main application 28 performs a cheek process by referring to the tracking points 34 as mentioned below.

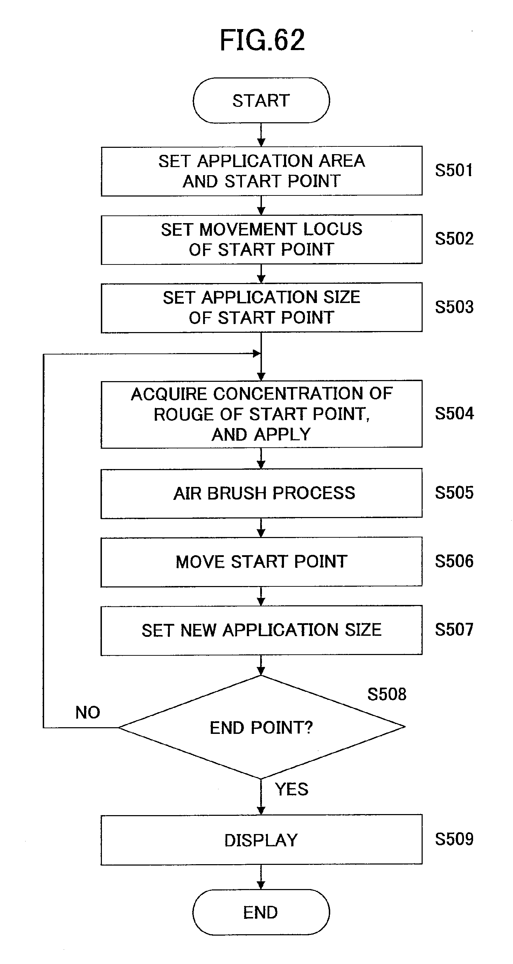

FIG. 62 is a flowchart of an embodiment of a rouge application process (cheek process). In the figure, first, an area of applying a rouge and a start point are set in step S501, a movement locus of the start point is set in step S402, and an application size at the start point of the rouge application is set in step S503. The processes of the above-mentioned steps S501-S503 differ depending on a makeup pattern selected by a user.

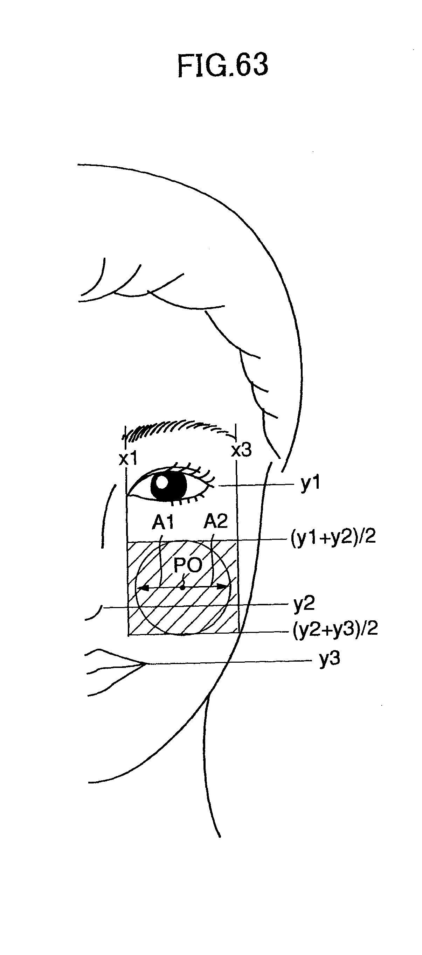

In a case where the makeup pattern is sweet, as illustrated in FIG. 63, if, within the face area, a y-coordinate of feature points of outer corners of eye EL1 and ER1 is set to y1; a y-coordinate of feature points of left and right ends of nose N1 and N3 is set to y2; a y-coordinate of feature points of left and right ends of mouth M1 and M5 is set to y3; an x-coordinate of feature points of inner corners of eye EL4 and ER4 is set to x1; and an x-coordinate of feature points of outer corners of eye EL1 and ER1 is set to x3, the rouge application area is set to a range of which y-coordinate is (y1+y2)/2 to (y2+y3)/2 and x-coordinate is between x1 and x3, and a roughly center position P0 within the area concerned is set to a start point of the rouge application. Additionally, 1/2 of a vertical width of the area is set to an application size, and, further, the arrows A1 and A2 are set as a movement locus of the start point.

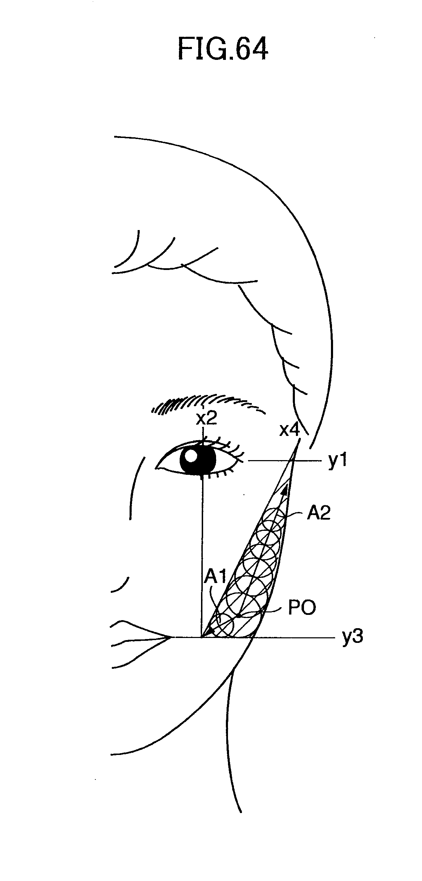

In a case where the makeup pattern is cool, as illustrated in FIG. 64, if, within the face area, a y-coordinate of feature points of outer corners of eye EL1 and ER1 is set to y1; a y-coordinate of feature points of left and right ends of mouth M1 and M5 is set to y3; an x-coordinate of feature points of pupils PL and PR is set to x2; an x-coordinate of feature points of outer corners of eye EL1 and ER1 is set to x2; and an x-coordinate of feature points F6 and F7 on the contour line of the face and having the same y-coordinate as the inner corners of eye EL1 and ER 1 is set to x4, the rouge application area is set to a range encircled by a line connecting a point (x2, y3) and a point (x4, y1), a line of y=y3, and the contour of the face, and a position P0 within the area concerned is set to a start point. Additionally, a radius of a circle having a center at the position P0 and contacting the rouge application area is set as an application size, and the arrows A1 and A2 are set as a movement locus of the start point.

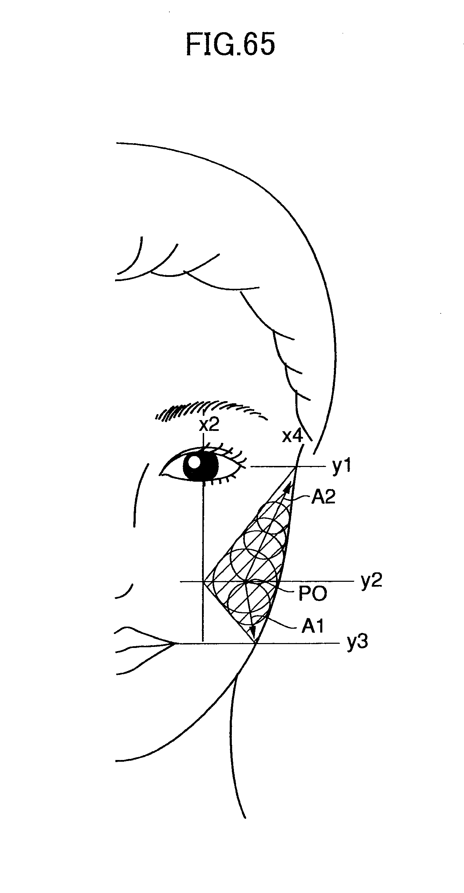

In a case where the makeup pattern is cute, as illustrated in FIG. 65, if, within the face area, a y-coordinate of feature points of outer corners of eye EL1 and ER1 is set to y1; a y-coordinate of feature points of left and right ends of nose N1 and N3 is set to y2; a y-coordinate of feature points of left and right ends of mouth M1 and M5 is set to y3; an x-coordinate of feature points of pupils PL and PR is set to x2; an x-coordinate of feature points F6 and F7 on the contour line of the face and having the same y-coordinate as the inner corners of eye EL1 and ER 1 is set to x4; and an x-coordinate of feature points F10 and F11 on the contour line of the face and having the same y-coordinate as the ends of mouth M1 and M5 is set to x5, the rouge application area is set to a range encircled by a line connecting a point (x4, y1) and a point (x2, y2), a line connecting a point (x2, y2) and a point (x5, y3) and the contour of the face, and a position P0 within the area concerned is set to a start point. Additionally, a radius of a circle having a center at the position P0 and contacting the rouge application are is set as an application size, and the arrows A1 and A2 are set as a movement locus of the start point.

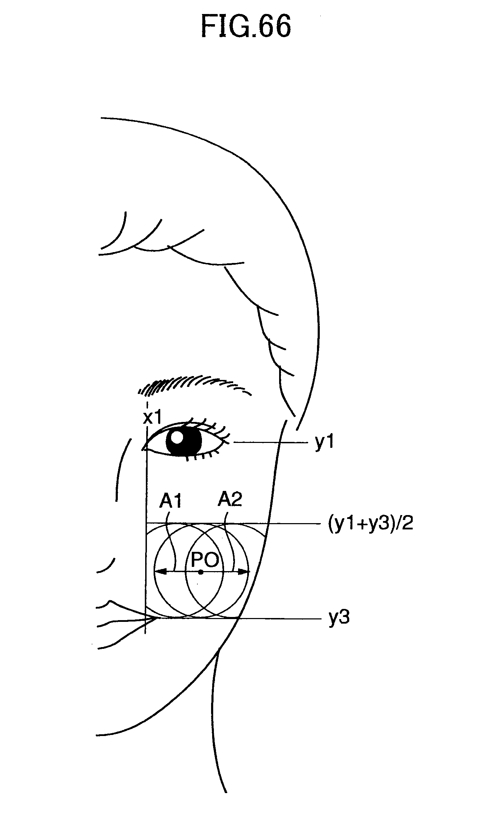

In a case where the makeup pattern is fresh, as illustrated in FIG. 66, if, within the face area, a y-coordinate of feature points of outer corners of eye EL1 and ER1 is set to y1; a y-coordinate of feature points of left and right ends of mouth M1 and M5 is set to y3; and an x-coordinate of feature points of inner corners of eye EL4 and ER4 is set to x1, the rouge application area is set to a range of which y-coordinate is from y3 to (y1+y3)/2 and x-coordinate is from x1 to the contour of the face, and the position P0 within the area concerned is set to a start point of the rouge application. Additionally, 1/2 of a vertical width of the area is set to an application size, and, further, the arrows A1 and A2 are set as a movement locus of the start point.

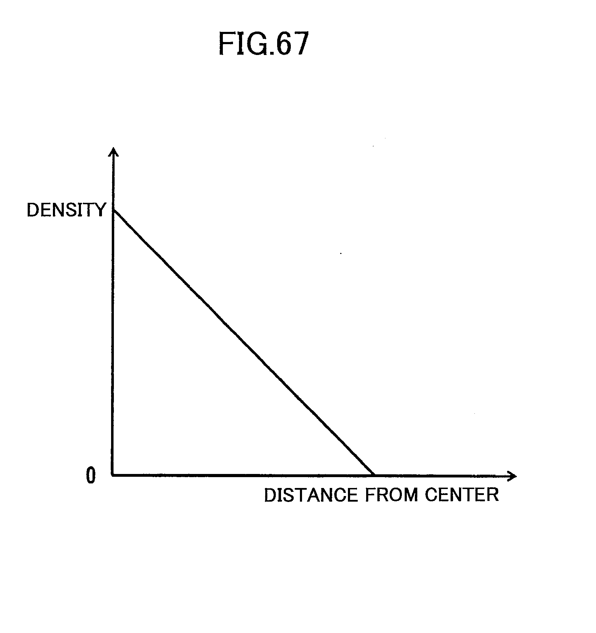

Next, an application of rouge is performed. Here, first in step S504, a concentration of rouge at the start point is computed by using a predetermined formula from the skin color of the user and the color of the selected rouge, and the obtained color of the rouge is applied to the start point. Then, an air brush process is performed, in step S505, to make the color density of the rouge applied to the start point thinner (gradate) in proportion to a distance from the start point in order to acquire a color of each pixel at which the rouge covers the skin by adding the thus-obtained density of color of the rouge at each pixel position to the skin color of the pixel at the same position, thereby updating the color of each pixel. FIG. 67 illustrates a relationship between a distance from the center and a density in the above-mentioned air brush process.

Thereafter, in step S506, the start point is moved by a predetermined distance in accordance with the movement locus of the start point indicated by the arrows A1 and A2. It should be noted that the movement of the start point from the position P0 in the direction of the arrow A1 by a predetermined distance is repeated, and if the moved start point is out of the rouge application area, it returns to the position P0 and the start point is moved in the direction of the arrow A2 by the predetermined distance. This distance of movement is, for example, several tens percent of the application size. Moreover, a new application size is calculated in step S507. If the makeup pattern is sweet or fresh, the new application size is the same as the previous time, but if the makeup pattern is cool or cute, the new application size decreases at a rate of several percent to several tens percent as the start point moves from the position P0 in the directions of the arrows A1 and A2.

Subsequently, it is determined, in step S508, whether or not it is an end point of the rouge application, and if it is not the end point, the above-mentioned steps S504 to S507 are repeated, and if it is an end point, the rouge application process is ended. The determination of the end point is such that the rouge application is ended when the start point moves in the direction of the arrow A2 and out of the rouge application area.

As mentioned above, a desired type is selected from a plurality of makeup patterns, an area for applying the rouge is set in the face image in accordance with the selected makeup pattern, and the rouge is applied by overlapping the color of the rouge over the color of the face image in the area where the rouge is applied, and, therefore, the rouge can be applied and displayed in the cheek portion of the face image in accordance with the selected makeup pattern by merely selecting the desired type.

Moreover because a gradation is applied by decreasing the density of the rouge as it apart from the start point of the application in the area where the rouge is applied, the applied rouge fits with the skin color of the face image and the eye shadow having no feeling of strangeness can be displayed, and because the start point is sequentially moved in the area where the rouge is applied, the applied rouge fits with the skin color of the face image and the rouge having no feeling of strangeness can be displayed irrespective of a form of the area where the rouge is applied in the face image.

The shadow processing part 38 included in the simulator main application 28 may perform a makeup in accordance with a classified and grasped morphological feature of a cheek of a person to be applied with a makeup. Generally, in a cheek makeup, a method of application differs depending on an image to represent. Thus, in the present invention, a consideration was given to only "representation of complexion".

It should be noted that the reason for focusing attention to floridness is based on the following three points. The first reason is that it was considered that an original healthful beauty of each person can be extracted naturally because complexion is an element which anyone possesses in a case of healthy state.

Moreover, although there is a clear example of an infant cheek as an example of ruddy cheek, in an example of providing a feeling of "good complexion and preferable", complexion appears in an area connecting an eye, a nose, a mouth and an ear. Thus, the second reason for focusing attention to complexion is that it was considered a position of applying a makeup can be extracted based on a law common to everyone using an eye, a nose, a mouth and an ear as a guideline. Further, the third reason for focusing attention to complexion is that the representation of complexion aims to have many people using a cheek and is an element of a cheek, which gives a feeling of beauty, and, thus, it meets demands of many people.

Moreover, a questionnaire survey was conducted about the purpose of using a cheek for 68 women of 20's and 30's who usually apply a makeup. As a result, "in order to show a good complexion" was most selected. Additionally, a result of a questionnaire survey conducted for 40 women of 20's and 30's who usually apply a makeup was "suppleness", "moderately plump" and "good complexion" in an order of descending number of answers.

Moreover, when applying a makeup, generally a makeup base, a foundation, etc., are used to repair irregular color in bare skin. In such a case, the complexion naturally present in the bare skin is almost deleted. Accordingly, it is said that adding complexion by a cheek makeup is a natural way of representation to restore the element of originally existing complexion.

A cheek makeup, which a cosmetics engineer applies, gives more beautiful finish than that self-applied by an ordinary person. It is considered that this is because a cosmetics engineer learns a method of catching a feature of each face and making a beautiful finish to fits to each person according to a law learned by experience and specialist knowledge. Thus, it was attempted to extract a law by analyzing an application method of a cheek makeup performed by cosmetics engineers.

First, a questionnaire survey of "in order to express natural complexion by a cheek makeup, which part is a center of gradation and to which part the gradation is applied?" was carried out for 27 cosmetics engineers by using pictures of faces of 10 models having different cheek features. Additionally, it was asked to indicate the center and range of the portion to which a cheek makeup is applied directly on papers on which the faces are printed.

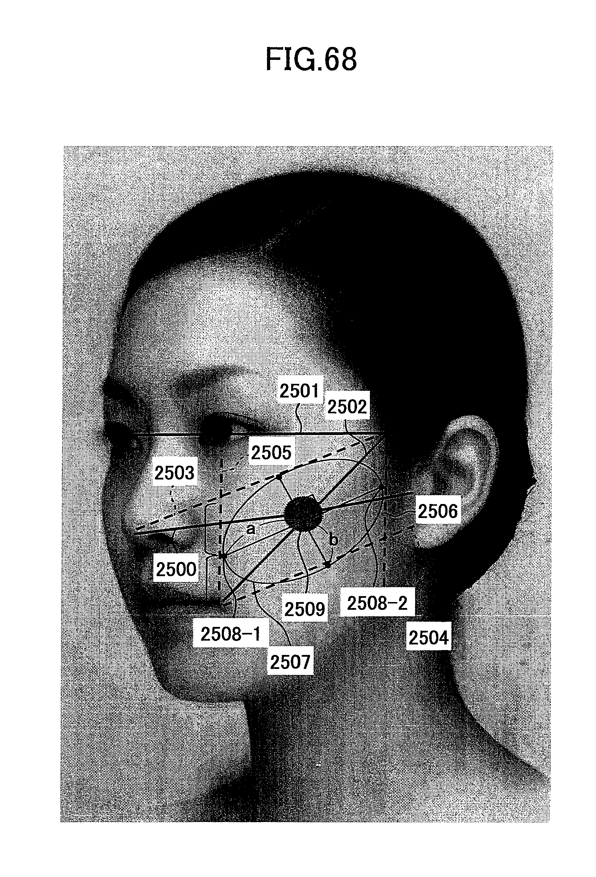

FIG. 68 is an image view for explaining an example of a cheek makeup according to a morphological feature of an object person to be applied with a makeup. In FIG. 68, lines to derive the center of a cheek makeup for one model (model A) are illustrated.

First, the position of the center of the cheek makeup expressing complexion is near the center of the area, which connects an eye, a nose, a mouth, and an ear. Further, as a result of consideration of extracting the location from elements, which can easily specify a face, as a reference, as illustrated in FIG. 68, it was found that by drawing a line 2500 to connect a top of the nose and an auricular (a position in front of an ear, which dents when opening a mouth) and drawing a line 2502 from a point at which a horizontal line 2501 drawing from a center of an eye intersects with a contour of a face, an intersection of both lines coincides with the answers of the cosmetics engineers.

Next, a description will be given of a range where a gradation is applied to a cheek makeup. A range where a gradation is applied to a cheek makeup is gradated is within an area connecting an eye, a nose, a mouth and an ear. Further, this range is within a parallelogram, which is drawn using the above-mentioned lines for deriving the center of application of a cheek makeup.

Specifically, first, a line 2504 is provided, which is a line (second line) obtained by parallel-moving a line (first line) 2503, which is drawn from a point at which a horizontal line 2501 passing through the center of the eye when deriving a center of a cheek makeup intersects with a contour of the face, downward to a corner of the mouth. Further, a vertical line (third line) 2505 is drawn upward from the corner of the mouth, and a line (fourth line) 2506 is provided, which is a line parallel-moving the vertical line 2505 to a point at which the horizontal line 2501 passing through the center of the eye intersects with the contour of the face. In FIG. 68, the parallelogram is formed by these lines 2503-2506. Additionally, it is appreciated that the rage where the cheek makeup, which a cosmetics engineer applied, is gradated is accommodated in the parallelogram.

According to the above-mentioned, it became possible to derive the position of start point to apply a cheek makeup and a target of a gradation range according to an eye, a mouth and a nose, which are tree major elements to determine a space of a face, by using a method common to all faces. It should be noted that, in the following description, the position of a start point to apply a cheek makeup is referred to as "best point".

That is, the start point of the cheek makeup for representation of complexion is the intersection of the line connecting a top of the nose to the aricular and the line drawn to the corner of the mouth from an intersection at which the horizontal line drawn from the center of the eye intersects with the contour of the face. Additionally, the range of gradation is the parallelogram drawn by using the best point as a guide line. Specifically, a line is drawn from the intersection of the horizontal line passing the center of the eye and the contour of the face, and the line is moved downward, in parallel, to the corner of the mouth. Further, a vertical line is drawn upward from the corner of the mouth, and the parallelogram is formed by parallel-moving the vertical line to a point at which the vertical line intersects with the line passing through the center of the eye.

As mentioned above, it was found that the best point, which is a start point to apply a cheek makeup and the range of gradation can be derived by a method common to every type.

From a cosmetics engineer's law learned by experience, there was prediction that operating a form of a cheek makeup in consideration of a feature of a cheek makes a fit to that person and gives a beautiful finish. Actually, there may be a case, which gives an ill-fitting finish, even if the derived start point to apply a cheek makeup and the derived range of gradation are satisfied.

Thus, in consideration of a direction of adjustment according to a morphological feature of a cheek, an assumption was made to change the cheek makeup according to the directivity thereof. That is, for a person having long cheeks, an adjustment is made to show the cheeks longer, and for a person having short cheeks, an adjustment is made to show the cheeks longer. Additionally, for a person having a remarkable skeleton feeling, an adjustment is made to be seen as plump, and for a person having a remarkable well-fleshed feeling, an adjustment is made to be seen as slimmed-down.

Here, a questionnaire survey was conducted in order to verify the above-mentioned assumption. In the questionnaire, two kinds of cheek makeups were given to four models having different morphological features of cheek. One of the cheek makeups is an "OK cheek", which uses the law of the best point and the target of gradation range and further the form of gradation is changed according to the feature of the cheek. The other of the cheek makeups is an "NG cheek", which applies the cheek makeup without consideration of the form of gradation. Evaluation of the two kinds was asked to general women (40 persons of 20's) while not giving information of "OK" and "NG".

Specifically, showing the pictures one by one, and ask an evaluation of the finish of each cheek makeup using a five-point bipolar scale evaluation. Additionally, the evaluation items were "natural-unnatural", "fit-unfit", etc. An average value of the evaluations by the 40 persons for the four models was computed and considered.

A statistical verification was made about the evaluations, and it was found that the "OK cheek" gives a natural finish and a stereoscopic appearance of the cheek and slightly plump appearance of the cheek flesh more than "NG cheek". This result is consistent with the above-mentioned element of beautiful cheek, that is, "suppleness and moderately plump". Additionally, it was found that also the entire balance of the face can be seen as refined by applying the cheek makeup. That is, according to the above-mentioned "OK cheek", the cheek is seen as stereoscopic, and it is able to feel suppleness of plump skin, and a natural and healthy complexion beauty, which the person originally possesses, can be restored. Additionally, the representation of complexion can adjust a balance while naturally deriving individual beauty. The form of cheek makeup that was applied to each model in the above-mentioned questionnaire is based on the thought of adjusting the appearance of a length and skeleton and flesh of a cheek.

FIG. 68 illustrates a form and a range of a cheek makeup according to a morphological feature of the cheek. In FIG. 68, the cheek form corresponding to a standard face is an inscribed ellipse 2507, which is inscribed with a target parallelogram.

Here, the inscribed ellipse 2507 of FIG. 68 has a longer axis A set as a line connecting middle points 2508-1 and 2508-2 of the vertical sides of the parallelogram, which is a target of gradation, and a shorter axis B set as a line perpendicular to and intersect with at a middle point 2509 of the longer axis A and contacting the upper and lower sides of the parallelogram. Further, if half lengths of the axes A and B are represented as a and b, respectively, the inscribed ellipse is expressed by (x2/a2)+(y2/b2)=1. Moreover, in a case of an average face, a relationship is given as a:b=1:0.55±0.02.

It should be noted that according to the gradation method of a cheek makeup, basically and actually, an application is performed so that the density at the start point is highest, and is decreased toward the border of the form of gradation, and the gradation in the border portion naturally fits to the skin.

### (Eyebrow Process)

The eyebrow processing part 37 included in the simulator main application 28 can deform an eyebrow to a form, which fits to a face of every user, by performing the deforming process of an eyebrow form of step S380 in the embodiment 1 based on the following beauty theory.

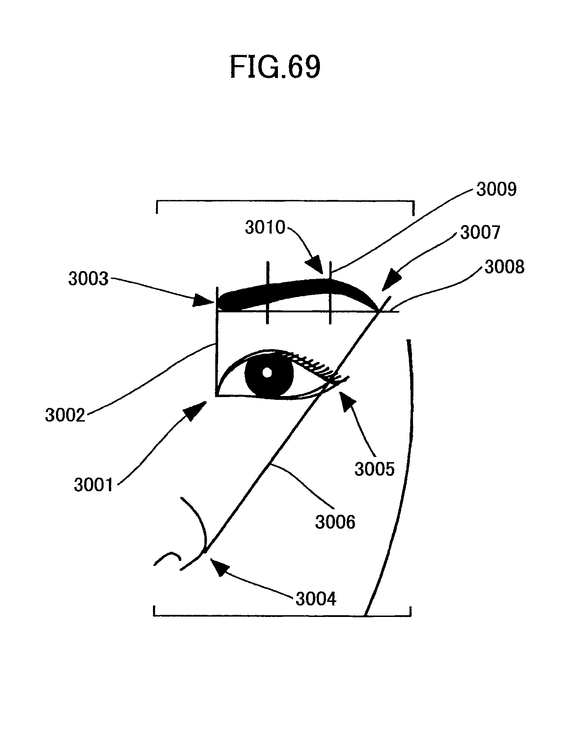

Generally, it is known that a well-shaped eyebrow consists of the following elements. 1) an inner end of eyebrow starts from directly above an inner corner of eye. 2) an outer end of eyebrow is on an extension line connecting a nostril and an inner corner of eye. 3) a peak of eyebrow is at a position 2/3 apart from an inner end of eyebrow. It is said that such an eyebrow is a well-shaped eyebrow. Further, a description will be given in detail, with reference to FIG. 69, of these elements.

FIG. 69 is an explanatory illustration for explaining a form of an ideal eyebrow. In FIG. 69, an inner end of eyebrow 303 exists on an inner corner line of eye 3002, which rises vertically from an inner corner of eye 3001, and an outer end of eyebrow exists on a nostril eyebrow outer end line 3006, which inclines from a nostril 3004 toward an outer corner of eye 3005, and a peak of eyebrow 301 exists on a vertical eyebrow peak line 3009 at a position apart from the inner end of eyebrow 3003 by about 2/3 to the outer end of eyebrow 3007 along an eyebrow base line 3008, which connects the inner end of eyebrow 3002 and the outer end of eyebrow 3007.

Although such an eyebrow is a well-shaped eyebrow, it was found that from our recent research that there are many cases in which even if the well-shaped eyebrow is drawn to various users, it does not fits entirely, and other elements are related further. Then, by adding the new elements, it became possible to deform to a beautiful eyebrow, which fits to a feature of each person.

The elements are 4) a position of the peak of eyebrow 3010 in the entire face and 5) an angle forming the peak of eyebrow 3010 from the inner end of eyebrow 3003, and by adding the new elements, an eyebrow can be deformed into a beautiful eyebrow.

Here, although the designations of parts such as the inner end of eyebrow 3003, the peak of eyebrow 3010, etc., are used, the eyebrow processing part 37 uses the feature point (BR1) corresponding to the inner end of eyebrow 3003 and the feature point (BR2) corresponding to the inner end of eyebrow 3010.

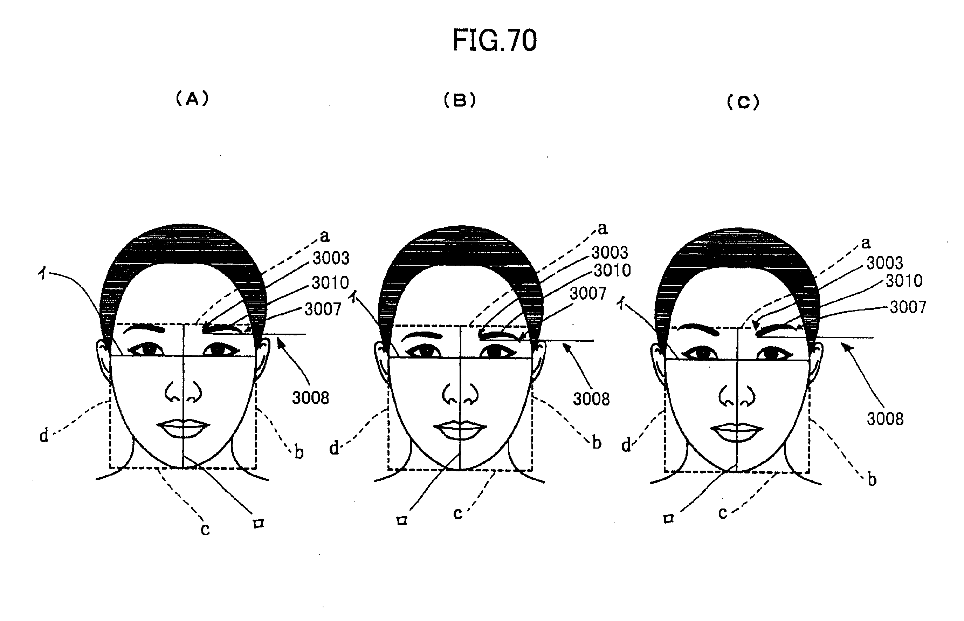

Next, a description will be given of a position of a beautiful eyebrow balanced with a face. For an eyebrow balanced with a face, 4) a position of the peak of eyebrow 3010 in the entire face and 5) an angle forming the peak of eyebrow 3010 from the inner end of eyebrow 303 are important. A description will be given, with reference to FIG. 70, of these points. FIG. 70 is an explanatory illustration for explaining a state of a position of an eyebrow.

(A),(B) and(C) of FIG. 70 illustrate positions occupied by eyebrows in the entire face. Virtual horizontal lines 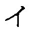 indicated by solid lines in (A),(B) and (C) of FIG. 70 are lines indicating a maximum width of the face when viewing the face from a front, and usually they are lines contacting the lower eyelids. Vertical lines 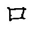 are virtual lines, which indicate a maximum width of the face, when the above-mentioned horizontal lines 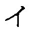 are vertically extended from a lower portion of the jaw. The horizontal line 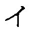 and the vertical line 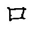 orthogonally cross at the center of the face, and a virtual square is formed by surrounding ends of these horizontal line 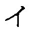 and the vertical line 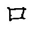 by sides represented by four dotted lines a, b, c and d.

Here, paying attention to a position of an eyebrow of (A) of FIG. 70, it is appreciated that the peak of eyebrow 3010 is in contact with the side a of the above-mentioned virtual square, and the eyebrow is at a beautiful point when viewing the entire face and well-balanced. On the other hand, in (B) of FIG. 70, the peak of eyebrow 3010 exists separate from the side a of the virtual square downward, and the eyes, the nose and the eyebrows are packed into the center portion when viewing the entire face, and the face appears shorter and not balanced. In (C) of FIG. 70, the peak of eyebrow 3010 goes beyond the side a of the virtual square, and the face appears longer when viewing the entire face, and an entire balance is not good.

Generally, for a person having a round face as a whole, the peak of eyebrow 3010 tends to be positioned under the side a as illustrated in (B) of FIG. 70, and for a person having a long face as a whole, the peak of eyebrow 3010 tends to be positioned above the side a as illustrated in (C) of FIG. 70, and a case is often seen where the tendencies of face are increased due to a way of drawing of eyebrows.

Here, observing the state of (A) of FIG. 70 in detail, the angle forming the peak of eyebrow 3010 from the inner end of eyebrow 303 is about 10 degrees to the eyebrow base line 3008 connecting the inner end of eyebrow 3003 and the outer end of eyebrow 3007, and the peak of eyebrow 3010 is in contact with the side a. Additionally, in (B) of FIG. 70, the angle forming the peak of eyebrow 3010 is about 5 degrees to the eyebrow base line 3008 connecting the inner end of eyebrow 3003 and the outer end of eyebrow 3007, and the peak of eyebrow 3010 exists separate from the side a downward.

Moreover, in (C) of FIG. 70, the angle forming the peak of eyebrow 3010 is about 20 degrees to the eyebrow base line 3008 connecting the inner end of eyebrow 3003 and the outer end of eyebrow 3007, and the peak of eyebrow 3010 goes beyond the side a. It is appreciated that the eyebrows in the state of (A) or (B) of FIG. 70 are changed to well-balanced beautiful eyebrows by drawing the eyebrows to be close to the state of (A) of FIG. 70 as much as possible.

A description will be given, with reference to FIG. 69 and FIG. 70, of a procedure of drawing the eyebrow. First, a maximum horizontal width of a front face of a person to be applied is measured, and the virtual horizontal line 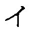 having the horizontal width is created along the lower eyelids of the face. Subsequently, a line having the same length as the horizontal line 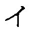 is extended vertically from a lowermost point of the jaw to create the vertical line 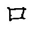 , and the virtual square is formed by orthogonally crossing the horizontal line 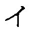 and the vertical line 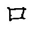 on the front surface of the face to create the virtual sides a, b, c and d passing the ends of each of the horizontal line 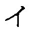 and the vertical line 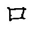 . By comparing the thus-created side a with a position of the peak of eyebrow 3010 of the person to be applied, it is determined whether the peak of eyebrow 3010 coincides with the side a or at a position higher than the side a or at a position lower than the side a.

If the peak of eyebrow 3010 coincides with the side a as illustrated in (A) of FIG. 70, because the angle of the eyebrow is at an angle of 10 degrees in many cases, a target line is set from the inner end of eyebrow 3003 to the peak of eyebrow 3010. The target line may be indicated by two points of the inner end of eyebrow 3003 and the peak of eyebrow 3010 by an eyebrow pencil or may be indicated by thin lines. Additionally, the target line may be set under the eyebrow or may be set at the center of the eyebrow or may be set above the eyebrow. In any case, the eyebrow is drawn so that the peak of eyebrow 3010 is on the eyebrow peak line 3009 and the upper edge of the peak of eyebrow 3010 contacts the side a. Although the eyebrow is drawn along the target line with a uniform width up to the peak of eyebrow 3010, a free curve is created from the peak of eyebrow 3010 to the outer end of eyebrow 3007 in accordance with preference of the person to be applied to complete the eyebrow.

Next, as illustrated in (B) of FIG. 70, if the peak of eyebrow 3010 is at a position lower than the side a, the eyebrow is drawn so that the peak of eyebrow 3010 is positioned as close as possible to the side a. In this case, because the angle of the line from the inner end of eyebrow 3003 to the peak of eyebrow 3010 in (B) of FIG. 70 is as small as 5 degrees, in order to shift the peak of eyebrow 3010 to the side a, a target line is set from the inner end of eyebrow 3003 to the peak of eyebrow 3010 by using an eyebrow scale having a drawing part of an angle of 15 degrees. However, if the angle of the target line is excessively large and it shifts greatly from the position of the original peak of eyebrow 3010 of the person to be applied, the person to be applied may feel strangeness in many cases, and, therefore, it is preferable to set a new peak of eyebrow 3010 above the eyebrow peak line 3009 within a range of 2 mm at maximum from the position of the original peak of eyebrow 3010. If a completely new eyebrow is drawn in a state where an original eyebrow is shaved, there is no need to provide such a limitation. The target line is drawn by an eyebrow pencil, and thereafter, a portion from the inner end of eyebrow 3003 to the peak of eyebrow 3010 is drawn along the target line, and the outer end of eyebrow is drawn to complete an ideal eyebrow. If the original eyebrow is not shaved, the eyebrow is drawn over the original eyebrow as mentioned above, and the eyebrow is trimmed by shaving the stray portion.

Moreover, as illustrated in (C) of FIG. 70, if the peak of eyebrow 3010 is at a position higher than the side a, the eyebrow is drawn so that the peak of eyebrow 3010 returns to the position on the side a as much as possible. In the case of (C) of FIG. 70, because the angle of the line from the inner end of eyebrow 3003 to the peak of eyebrow 3010 is as large as 10 degrees, a target line is set from the inner end of eyebrow 3003 to the peak of eyebrow 3010 with an angle of 8 degrees. Also in such a case, if it shifts greatly from the position of the original peak of eyebrow 3010 of the person to be applied, the person to be applied may feel strangeness in many cases, and, therefore, it is preferable to set a new peak of eyebrow 3010 under the eyebrow peak line 3009 within a range of 2 mm at maximum from the position of the original peak of eyebrow 3010. If an eyebrow is drawn in the same manner as mentioned above, a beautiful eyebrow well-balanced with the entire face can be created.

An image of the face can be adjusted by the drawing method of a portion of eyebrow connecting the inner end of eyebrow 3003 and the peak of eyebrow 3010. For example, a selection can be done if necessary in response to the demand of the person to be applied, the selection including "look matured" when a thick eyebrow is drawn, "look pretty" if a thin eyebrow is drawn, "look simple" when a straight eyebrow is drawn, and "look gentle" when a curved eyebrow is drawn.

As mentioned above, the eyebrow processing part 37 included in the simulator main application 28 can deform an eyebrow into a beautiful eyebrow, which fits to every user, by performing the deforming process of an eyebrow shape of step S80 in the embodiment 1 based on the above-mentioned beauty theory.

### (Foundation Process)

The foundation processing part 36 included in the simulator main application 28 can perform the following process as a pre-process.

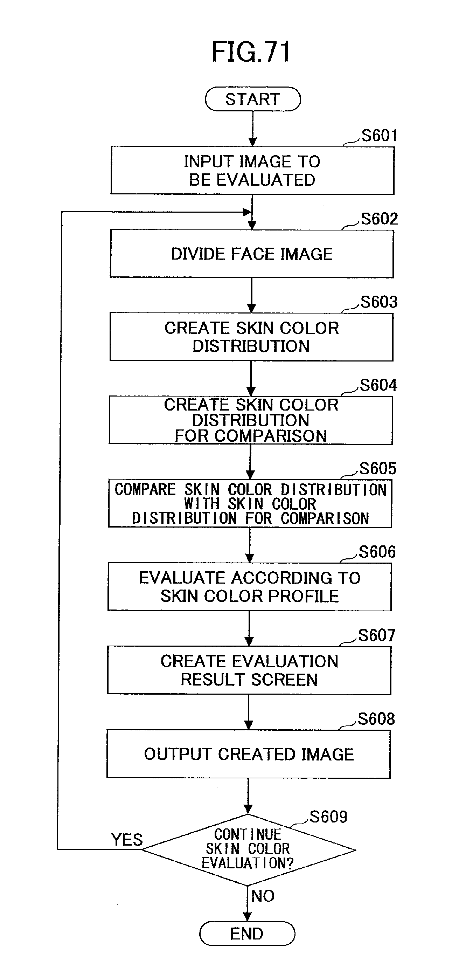

A description will be given of a skin color evaluating process procedure as a pre-process of the foundation process. FIG. 71 is a flowchart illustrating an example of the skin color evaluating process procedure as a pre-process of the foundation process.

The skin color evaluating process illustrated in FIG. 71 inputs an evaluation object image containing a face of which image is taken by an image-taking means such as a camera (S601), and divides the input face image into a predetermined number of portions according to a previously set dividing method (S602). It should be noted that the image obtained by S601 may be, for example, an image obtained by taking an image of a face, which is entirely illuminated uniformly, by an image-taking apparatus such as a digital camera.

Specifically, a lighting box for taking a face image at the same condition is used, and a plurality of halogen lamps are arranged on a front face of the lighting box in order to uniformly illuminate the face within the lighting box, and an image of the face is taken by a TV camera to acquire the taken face image. It should be noted that the image used in the present invention is not limited to a special one, and, for example, an image taken under a normal environment such as under a fluorescent light may be used.

Next, a skin color distribution is created from the divided image for each predetermined area (S603), and, for example, a comparison skin color distribution is created using various kinds of data previously accumulated (S604). Additionally, the skin color or the like is compared using the skin color distribution obtained by the process of S603 and the comparison skin color distribution obtained by the process of S604 (S605), and an evaluation is performed according to a skin color distribution profile (S606). Additionally, a screen or the like to display to a user is created from the evaluation result obtained by the process of S606 (S607), and the created screen (contents of evaluation result) is output (S608).

Here, it is determined whether to continue the skin color evaluation (S609), and if continue the skin color evaluation (YES in S609), returns to S602, and, for example, a division is performed according to a dividing method different from the previous time to perform a process mentioned later. If, in the process of S609, the skin color evaluation is not continued (NO in S609), the process is ended. Next, a description will be given of details of the above-mentioned skin color evaluating process.

### (Face Dividing Process)

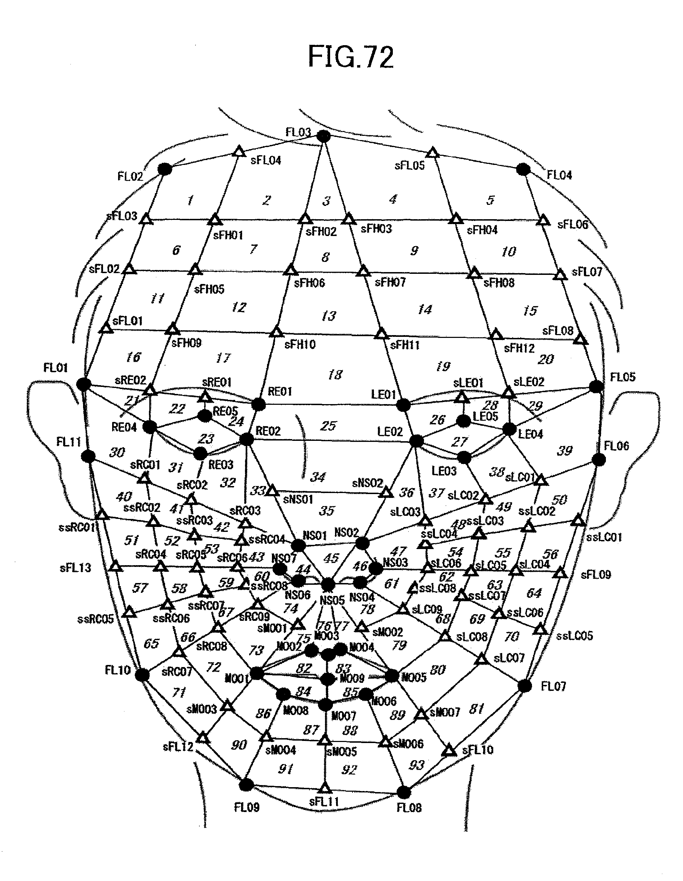

Next, a description will be given of the above-mentioned face dividing process. The face dividing process performs a predetermined division to the digital image containing the input face. FIG. 72 is an illustration of an example of the feature points and divided areas. In FIG. 72, as an example, the entire face is divided into 90 areas, an average skin color of each area is acquired, a face skin color distribution is represented by the 93 pieces of skin data, and a skin color evaluation is performed according to the distribution, etc.

By acquiring many pieces of data for a fixed portion, which is an advantage of a conventional method, for example, a distribution range and an average value of that portion of Japanese women (may be foreign persons (other races), and may be men) can be computed, and, as a result, the skin color data of an individual can be evaluated by comparing with these indexes. Additionally, for example, it becomes possible to perform a skin color comparison before and after a use of cosmetics by the same person and a two-person comparison of skin color with other persons.

Here, as an example, the dividing method illustrated in FIG. 72 has 109 feature points. Additionally, the divided areas illustrated in FIG. 72 are 93 areas having a triangle shape or a quadrangle shape defined by three or four feature points (for example, indicated by numbers 1-93 in FIG. 72).

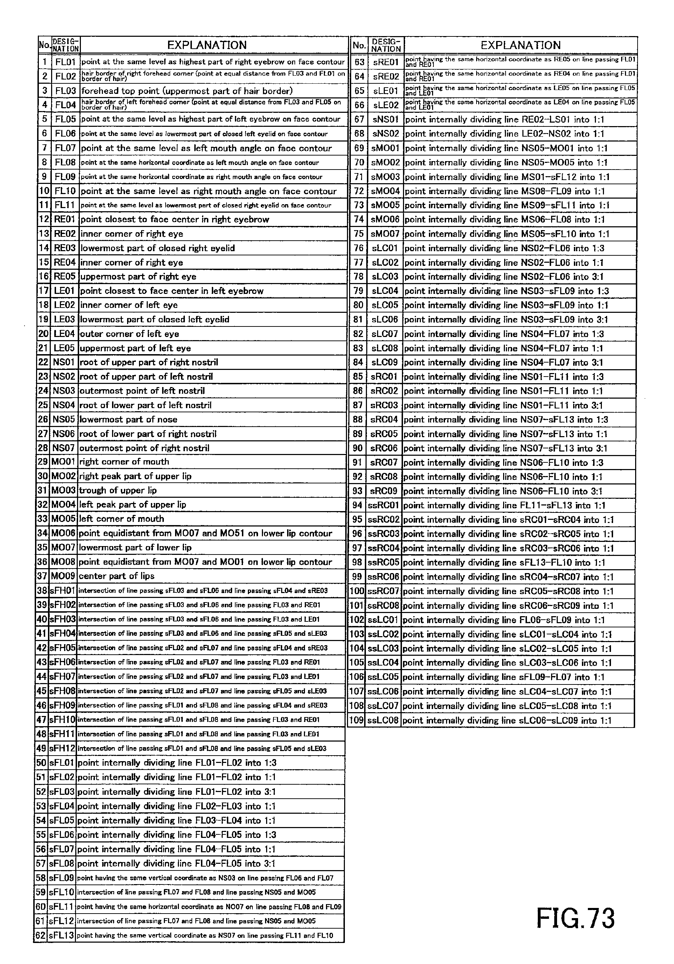

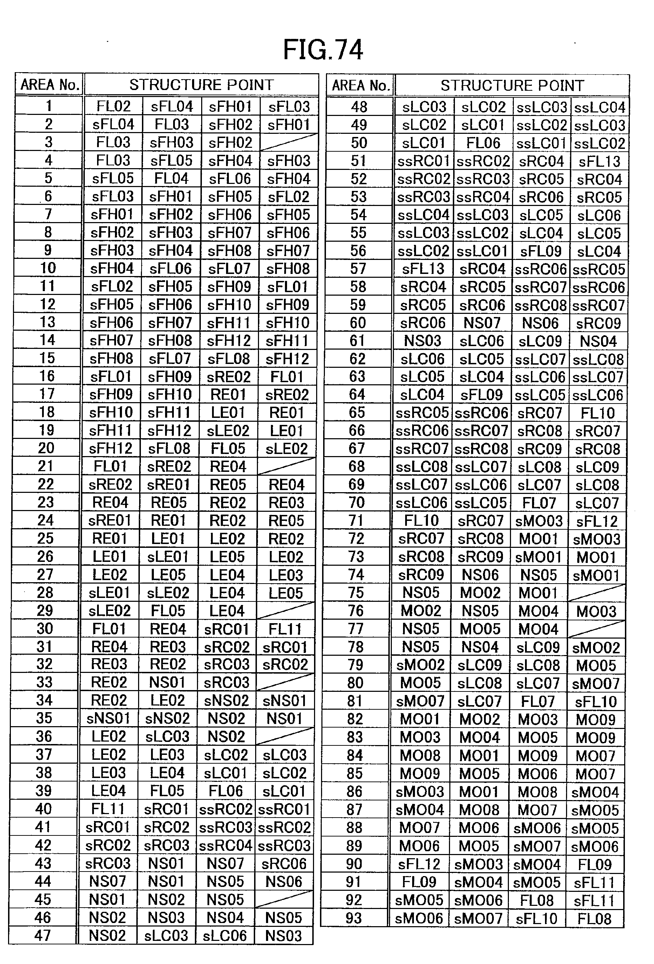

Moreover, FIG. 73 is an illustration indicating an example of positional relationship of the 109 feature points in the face corresponding to the above-mentioned FIG. 72. Additionally, FIG. 74 is an illustration of an example of a combination of the feature points constituting each area corresponding to the above-mentioned FIG. 72. It should be noted that "No." and "Name" of each feature point illustrated in FIG. 73 and "No." and "structure point" of each area illustrated in FIG. 74 correspond to the contents illustrated in the above-mentioned FIG. 72.

Here, when setting the contents of the division, first, the face dividing process sets the feature points of No. 1-37 (for example, indicated by "●" in FIG. 72) as first feature points from among the feature points illustrated in FIG. 73. It is preferable to arrange the 37 feature points so that 5 points are arranged in the forehead portion, 10 points in the vicinity of left and right eyes, 7 points in the nose, 9 points in the mouth, and 6 points in the face line under the eyes.

Next, the face dividing process sets the feature points of No. 38-109 illustrated in FIG. 73 (for example, points indicated by "Δ" in FIG. 72) as second feature points by using the above-mentioned 37 feature points (first feature points) as a reference.

For example, as illustrated in FIG. 73, there are a total of 109 points including the feature points 1-37 of No. 1-37 previously defined, the points 38-49 acquired by intersections of a plurality of lines passing between at least tow feature points from among the feature points, the points 50-57 and 67-109 internally dividing the lines between two points, and the points 58-66 on the lines passing two feature points and having the same vertical coordinate or horizontal coordinate as a certain specific point.

Moreover, it is divided into areas each encircled by at least three points as structure points as illustrated in FIG. 74 from among the first and second feature points (109 points). It should be noted that the number of points defining each area may be three points or four points as illustrated in FIG. 74 or may be five points.

Here, each area (area No. 1-93) illustrated in FIG. 72 is set so that a division having a physiological sense can be done based on the experience of observing many skin colors. That is, by setting as illustrated in FIG. 72, a division is done so that the area is narrow in a portion where color heterogeneity tends to occur, and the area is wide in other portions.

Specifically, in the example division illustrated in FIGS. 72-74, for example, the divided area is set to be wide in the portion of the forehead, and the area is set to be narrow in the vicinity of the eyes and mouth and the cheeks. The thus-set divided areas permit an evaluation in more detail and with a higher accuracy by setting the area, which is an important portion (area) in evaluating skin color, to be narrow.

### (Division of Face and Creation of Face Skin Color Distribution)

Next, a description will be given specifically of creation of a face skin color distribution with respect to the divided face. It should be noted that although an image-taking apparatus using a lighting apparatus, which uniformly illuminates an entire face, and a digital camera is explained with an example of creating a skin color distribution with respect to a face image acquired by using, for example, "Masuda et al., Development of Quantization System of Spots and Freckles Using Image Analysis, Shougishi, V28, N2, 1994", etc., the image-taking method of an image-taken digital image used in the present invention is not specially limited to this.

A total of 109 feature points can be computed by taking a picture of a person to be examined set at a predetermine position and designating, for example, 37 first feature points according to the face dividing process as mentioned above. Additionally, the face dividing process divides it into 93 areas from the 109 feature points by the above-mentioned setting as illustrated in FIG. 74. It should be noted that the skin color distribution is created by an average value for each area by using at least one of L*, a*, b*, Cab*, and hab in a L*a*b* display system, each value of three stimulation values X, Y, and Z, each value of RGB, color phase H, brightness V, color saturation C, amount of melanin, and amount of hemoglobin.

Because a portion which is not in a skin color is excluded from the object to be evaluated in outside the entire area and even in the area, such a portion is colored by a specific color such as, for example, a cyan color or the like, which separates away greatly from a skin color. Further, information of details of skin is deleted so that the face skin color distribution is easily grasped, and, for example, it can be appreciated that the model A has a feature that "the skin color around the eye is dark". It should be noted that because a peripheral portion of the image-taken face may have low uniformity of illumination, data of the peripheral portion may be excluded in the skin color evaluating process.

Additionally, if an "average face" is divided into areas by the same method, and each area is colored by obtained 93 skin colors of the model A, pure color information excluding face form information of the model can be grasped.

Because the evaluation can be done according to the divided areas as a reference by performing the above-mentioned process, face form information of a person can be excluded, and a comparison in a skin color distribution between persons having different face forms can be performed easily. Thus, using this feature, for example, an evaluation can be done by comparing the face skin color distribution of the model A with an average value of the same generation.

### (Creation of Face Skin Color Distribution for Comparison)

Next, a description will be given of an example of creating a face skin color distribution for comparison in the skin color distribution evaluating process. As an average skin color distribution for each generation, a face image of a person of a corresponding generation are subject to an area fragmentation, and, thereafter, a skin color distribution is acquired according to average values by using at least one of L*, a*, b*, Cab*, and hab in a L*a*b* display system, each value of three stimulation values X, Y, and Z, each value of RGB, color phase H, brightness V, color saturation C, amount of melanin, and amount of hemoglobin, and an average skin color distribution is acquired by computing an average value for each generation.

It should be noted that each area of the average face is colored by using acquired data of the average skin color distribution of each generation of Japanese women from 20's to 60's. By displaying it with coloring, an average skin color distribution for each generation can be created, which permits a highly accurate skin color evaluation of the evaluation object image by comparing with the data.

### (Comparison of Skin Color Distribution)

Next, a description will be given specifically of a comparison example of a skin color distribution. The skin color distribution evaluating process performs a comparison of a skin color distribution by taking differences. A face skin color distribution can be grasped by dividing the face image into predetermined areas, and an easily recognizable display, which includes only color information by excluding a form of a face by replacing the color with a standard face such as an average face. Because it becomes possible to acquire a difference value between two persons, such as average value data of persons belonging to a certain category (classified by age, occupation, or gender), data of an ideal person such as a talent, data of other persons, it can be used for counseling at a time of sales of cosmetics.

### (Aggregation (Grouping) of Skin Color Distribution and Example of Creating Skin Color Distribution Profile)

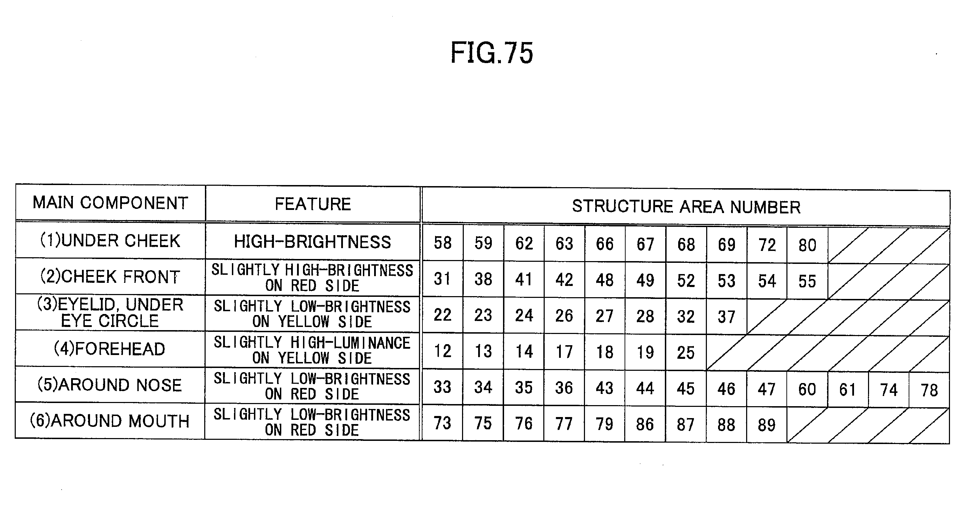

Here, in the present embodiment, the skin color distribution evaluating process can aggregate (group) areas having similar color tendencies in the skin color areas by acquiring a main component by applying a main component analysis to previous data or the like. Thereby, an evaluation can be done easily for each group. FIG. 75 is an illustration illustrating an example of area numbers constituting each group. It should be noted that the feature points constituting the areas illustrated in FIG. 75 correspond to the above-mentioned FIGS. 72-74.

In the example illustrated in FIG. 75, the grouping is applied to a portion (1) under cheek, (2) cheek front, (3) eyelid and dark ring portion under eye, (4) forehead, (5) round about nose, and (6) round about mouth. Additionally, as a feature of color, "(1) under cheek" has high-brightness, "(2) cheek front" is on the side of red and has slightly high-brightness, "(3) eyelid and dark ring portion under eye" is on the side of yellow and has a slightly low-brightness, "(4) forehead" is on a side of yellow and has slightly high-brightness, "(5) round about nose" is on the side of red and has slightly-low brightness, and "(6) round about mouth" is on the side of red and has low-brightness.

Here, as a result of main component analysis of color phase H performed on the effective 57, in which 4 areas of lips are excluded, for 59 persons of age 20-67 as an example, it was found that 90.1% of 57 pieces of data are explainable with 6 main components.

Thus, the 57 areas are classified according to the above-mentioned main components into the above-mentioned (1) under cheek, (2) cheek front, (3) eyelid and dark ring portion under eye, (4) forehead, (5) round about nose, and (6) round about mouth. Additionally, an evaluation of a skin color distribution can be done according to a balance of the main component score (skin color profile).

Next, a description will be given of a face classification process procedure as a pre-process of the foundation process. Here, a consideration was given on what stereoscopic feel is evaluated as beautiful in order to extract a method of representing a beauty by adjusting stereoscopic feeling. When the consideration is given, faces of (a) natural face, (b) natural base make naturally trimming skin color heterogeneity, and (c) egg type base make adjusting stereoscopic feeling so show an entire face with an average face balance were used.

Here, the three types of base make of the above-mentioned (a)-(c) were applied to 6 models having different features of face, and a questionnaire survey was conducted for 20 women of 20's using face pictures taken from the faces.

An evaluation was performed according to 8 items concerning appearance of face such as (appearance of forehead, stereoscopic feeling of forehead, degree of level of bridge of nose, flesh of cheek, length of cheek, face line, degree of protrusion of jaw, balance of eyes and nose) and 3 items concerning a collective impression such as (stereoscopic feeling, beautifulness, and favorability of an entire face). Additionally, an answer was asked as to whether appearance of face is appropriate.

### (Consideration According to Standard balanced Face)

As a condition of general beauty face, there are an egg-type face line and a golden balance. In the golden balance, for example, a position of eyes is at about 1/2 of a height of an entire head, and an inner end of eyebrow is positioned at 1/3 from a hairline within a range from the hairline to a tip of a jaw, and a nostril is positioned at 2/3 from the hairline.

Here, it is known that the balance of the "average face", which is created by averaging size information and color information of face pictures of a plurality of persons according to a conventional image synthesizing technique becomes close to the value of the golden balance. Additionally, it is disclosed that if data corresponding to 10 persons is used to create an average face, there is less change in impression from one created from face pictures of different 10 persons (For example, Nishiya Kazumi et al., "Research Features of Average Face", Japanese psychology Society No. 63 conference papers, issued August, 1999.) The "average face" created using face pictures of 40 women satisfies the above-mentioned golden balance. In the following, the golden balance is set as a standard balance.

Moreover, referring to a face picture in which information regarding depth and skeleton flesh feeling (and also skin color information) is deleted from the "average face", it is appreciated that the depth and skeleton flesh feeling gives a great influence to an impression of a face. Additionally, it was found that an egg form similar to the face line can be extracted from inside the face line when the above-mentioned image analysis (monochrome posterization process) was applied to the average face.

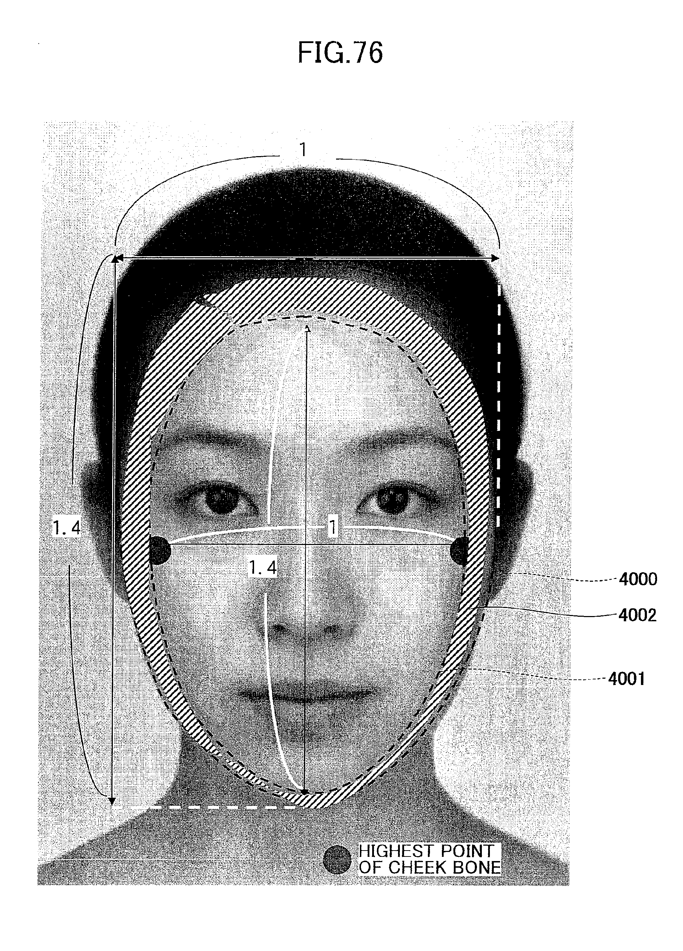

Here, FIG. 76 is a view illustrating an example of a result of an image (or stereoscopic feeling) analysis of the average face. As illustrated in FIG. 76, it was found that a face line (inner face line) 4001, which is obtained by analogously reducing an outer face line 4000, exists inside the outer face line 4000 corresponding to the face line of the face. Accordingly, it is indicated that showing the stereoscopic feeling of an inner side of a face to be an egg form is one of representing methods of new beauty.

### (Adjustment of Stereoscopic Feeling - Best Oval Adjusting Method)

Next, in order to create a cosmetology to create stereoscopic feeling inside the face line, that is, trimming the inner face line to be an egg form, an adjustment hypothesis was set up. Here, the forms of the outer face line and the inner face line extracted from an average face are defined as "best oval". The outer face line is an egg-type form (standard outer face line) having a ratio of horizontal width to vertical width of about 1:1.4. The inner face line of the "average face" is similar to the standard outer face line, and is a form reduced by a predetermined ratio, and a ratio of horizontal width to vertical width is about 1:1.4.

The outer face line 4000 is a form indicated by a relationship of "ratio of horizontal width of face : vertical width of face = 1:1.4" as mentioned above. It should be noted that the outer line face balance is a point for determining a directivity of space adjustment of an entire face. Additionally, in a case of applying the inner face line 4001 to an individual face, as illustrated in FIG. 76, first, a horizontal width between the left and right cheek bones of an individual face is set to 1. Then, the standard inner face line 4001 having a vertical width of about 1.4, that is, the best oval, is drawn using the horizontal width as a reference, and positions to be in contact with outer ends of eyebrow of each face (an extension line passing from a side of a nostril to en outer end of eyebrow as a target). It should be noted that the inner face line balance is an adjustment zone for stereoscopic feeling and a space due to skeleton and flesh.

Additionally, a space between the outer face line 4000 and the inner face line 4001 is set as a zone (hutched part in FIG. 76) 4002 for providing a natural depth. Additionally, the zone 4002 is an adjustment zone for adjusting a depth to provide a depth and simultaneously show the forms of the outer face line 4000 and the inner face line 4001 well-shaped.

The above-mentioned pre-process of the foundation process may be used for a base makeup.

As mentioned above, according to the present invention, a makeup can be applied correctly to a face of a user contained in a dynamic image at a small processing load. It should be noted that the picture-taking means recited in the claims corresponds to the camera 2, the control means corresponds to the control part 8, the display means corresponds to the monitor 7, the face recognition processing means corresponds to the face recognition processing part 33, the makeup processing means corresponds to the makeup processing part 35, the operation means corresponds to the operation panel 4, the half mirror means corresponds to the half mirror 3, and the print means corresponds to the printer 5.

Moreover, the present invention is not limited to the specifically disclosed embodiments, and variations and modifications may be made without departing from the scope of the claims.

Because the makeup simulation apparatus 1 according to the present invention performs a realtime simulation, the makeup simulation apparatus 1 can recognize instantly the tracking points of the face and a simulation is performed based on the tracking points, which is different from the one using a static image or a conventional makeup simulation apparatus, and, therefore, the makeup simulation apparatus 1 permits the followings.

The makeup simulation apparatus 1 according to the present invention permits a realtime simulation. The makeup simulation apparatus 1 according to the present invention is capable of performing a simulation of not only a front face as in a conventional one but also a side face, and, thus, it is easy to check a simulation effect and a technique of rouge or the like.

Because the makeup simulation apparatus 1 according to the present invention can perform a realtime simulation, it becomes possible to perform an analysis to recognize a face as a solid, unlike a conventional planar expression, and representation of stereoscopic feeling and texture.

Moreover, because the makeup simulation apparatus 1 according to the present invention can perform face recognition for many persons at the same time, a relatime simulation for many persons can be performed at the same time. Because the makeup simulation apparatus 1 according to the present invention is excellent in the face recognizing function, a makeup can be applied according to features and classification by conforming to a feature of an individual or by automatically classifying men and women. For example, the makeup simulation apparatus 1 according to the present invention can perform a makeup simulation for each of a couple at the same time.

The present international application claims priority based on Japanese patent application No. 2007-208809 filed August 10, 2007 and Japanese patent application No. 2008-202449 filed August 5, 2008, the entire contents of No. 2007-208809 and No. 2008-202449 are incorporated in the present international application by reference.

## Claims

1. A makeup simulation system for applying a makeup to a dynamic image of a face of a user, comprising:
picture-taking means for taking a picture of the face of the user and outputting the dynamic image;
control means for receiving the dynamic image output from said picture-taking means, and image-processing and outputting said dynamic image; and
display means for displaying the dynamic image output from said control means,
wherein said control means includes:
face recognition processing means for recognizing the face of the user from said dynamic image in accordance with predetermined tracking points; and
makeup processing means for applying a predetermined makeup to the face of the user contained in said dynamic image in accordance with said tracking points, and outputting to said display means,
wherein lipstick processing means included in said makeup processing means applies a lipstick process to the face of the user contained in said dynamic image in accordance with positions of a peak and a trough of an upper lip, left and light ends of a mouth, a lower end of a lower lip, and a position at 1/3 of a width of the mouth from the left end in the lower lip and a position at 1/3 of the width of the mouth from the right end in the lower lip.

2. The makeup simulation system as claimed in claim 1, wherein the shadow processing means included in said makeup processing means applies a shadow process to the face of the user contained in said dynamic image in accordance with a position of an inner corner of an eye included in said tracking points, a position of an outer corner of the eye, and a contour of the eye detected from a portion near the eye of the face of the user contained in said dynamic image.

3. The makeup simulation system as claimed in claim 2, wherein said shadow processing means includes:
contour detecting means for detecting a contour of the eye from the portion near the eye of the face of the user contained in said dynamic image; and
eyeline drawing means for performing drawing at said contour of the eye detected and a vicinity thereof.

4. The makeup simulation system as claimed in claim 3, wherein said eyeline drawing means causes a concentration of eye shadow to be decreased as being more separated from a start point of an application within an area to be applied with said eyeline or eye shadow.

5. The makeup simulation system as claimed in claim 1, wherein cheek processing means included in said makeup processing means applies a cheek process to the face of the user contained in said dynamic image in accordance with a position of an inner corner of an eye included in said tracking points, a position of an outer corner of the eye, left and right ends of a nose, left and right ends of a mouth, and a position of a pupil.

6. The makeup simulation system as claimed in claim 5, wherein said cheek processing means causes a concentration of rouge to be decreased as being more separated from a start point of an application within an area to be applied with the rouge as said cheek process.

7. The makeup simulation system as claimed in claim 1, wherein eyebrow processing means included in said makeup processing means applies an eyebrow process to the face of the user contained in said dynamic image in accordance with a position of an inner corner of an eye included in said tracking points, a position of an outer corner of the eye, a position of a nostril, a position of an inner end of an eyebrow, an outer end of the eyebrow, a peak of the eyebrow, a lower portion of a jaw, and a lower end of a lower eyelid.

8. The makeup simulation system as claimed in claim 7, wherein said eyebrow processing means assumes a hypothetical square including sides in contact with a transverse line indicating a maximum transverse width of the face of the user contained in said dynamic image and a vertical line vertically extended from a lowermost point of the jaw and having a length equal to a length of said transverse line, determining the peak of the eye relative to an upper side of said square, setting a target line from the inner corner of the eye to the outer corner of the eye in accordance with a result of the determination, and applying the eyebrow process in accordance with said target line.

9. The makeup simulation system as claimed in claim 8, wherein said eyebrow processing means sets the target line at an angle of 10 degrees to an eyebrow base line connecting a lower portion of the inner corner of the eye and the outer corner of the eye in accordance with a determination that the peak of the eyebrow is higher than the upper side of said square.

10. A makeup simulation apparatus configured to apply a makeup to a dynamic image of a face of a user, comprising:
picture-taking means for taking a picture of the face of the user and outputting the dynamic image;
control means for receiving the dynamic image output from said picture-taking means, and image-processing and outputting said dynamic image; and
display means for displaying the dynamic image output from said control means,
wherein said control means includes:
face recognition processing means for recognizing the face of the user from said dynamic image in accordance with predetermined tracking points; and
makeup processing means for applying a predetermined makeup to the face of the user contained in said dynamic image in accordance with said tracking points, and outputting to said display means,
wherein lipstick processing means included in said makeup processing means applies a lipstick process to the face of the user contained in said dynamic image in accordance with positions of a peak and a trough of an upper lip, left and light ends of a mouth, a lower end of a lower lip, and a position at 1/3 of a width of the mouth from the left end in the lower lip and a position at 1/3 of the width of the mouth from the right end in the lower lip.

11. A makeup simulation method in a makeup simulation system for applying a makeup to a dynamic image of a face of a user, comprising:
a step in which control means recognizes the face of the user from the dynamic image taken by picture-taking means, and starts a makeup simulation;
a step in which said control means recognizes the face of the user contained in said dynamic image in accordance with predetermined tracking points; and
a step in which said control means applies a predetermined makeup to the face of the user contained in said dynamic image in accordance with said tracking points, and outputs to display means,
wherein said control means applies a lipstick process to the face of the user contained in said dynamic image in accordance with positions of a peak and a trough of an upper lip, left and light ends of a mouth, a lower end of a lower lip, and a position at 1/3 of a width of the mouth from the left end in the lower lip and a position at 1/3 of the width of the mouth from the right end in the lower lip.

12. A makeup simulation program executed by a computer having at least an operation processing device, a memory device and an output device to apply a makeup to a dynamic image of a face of a user, the makeup simulation program causing said operation processing device to perform:
a step of recognizing the face of the user from the dynamic image taken by picture-taking means, and starting a makeup simulation;
a step of recognizing the face of the user contained in said dynamic image in accordance with predetermined tracking points; and
a step of applying a predetermined makeup to the face of the user contained in said dynamic image in accordance with said tracking points, and outputting to said output device,
wherein said operation processing device is caused to apply a lipstick process to the face of the user contained in said dynamic image in accordance with positions of a peak and a trough of an upper lip, left and light ends of a mouth, a lower end of a lower lip, and a position at 1/3 of a width of the mouth from the left end in the lower lip and a position at 1/3 of the width of the mouth from the right end in the lower lip.
